(19) Europäisches Patentamt
European Patent Office
Office européen des brevets

(11) Veröffentlichungsnummer: **0 272 532 B1**

(12) # EUROPÄISCHE PATENTSCHRIFT

(45) Veröffentlichungstag der Patentschrift: **29.05.91**

(51) Int. Cl.[5]: **C09B 69/00**, C09B 62/002, C07C 309/29, D06P 1/00

(21) Anmeldenummer: **87118109.5**

(22) Anmeldetag: **08.12.87**

Die Akte enthält technische Angaben, die nach dem Eingang der Anmeldung eingereicht wurden und die nicht in dieser Patentschrift enthalten sind.

(54) **Farbstoffe.**

(30) Priorität: **20.12.86 DE 3643683**

(43) Veröffentlichungstag der Anmeldung: **29.06.88 Patentblatt 88/26**

(45) Bekanntmachung des Hinweises auf die Patenterteilung: **29.05.91 Patentblatt 91/22**

(84) Benannte Vertragsstaaten: **CH DE FR GB LI**

(56) Entgegenhaltungen:
**CH-A- 523 304**
**FR-E- 89 023**
**US-A- 3 440 240**

(73) Patentinhaber: **BAYER AG**
**W-5090 Leverkusen 1 Bayerwerk(DE)**

(72) Erfinder: **Herd, Karl-Josef, Dr.**
**Am Gartenfeld 66**
**W-5068 Odenthal(DE)**
Erfinder: **Stöhr, Frank-Michael, Dr.**
**Weidenweg 15**
**W-5093 Burscheid(DE)**
Erfinder: **Henk, Hermann, Dr.**
**Roggendorfstrasse 55**
**W-5000 Köln 80(DE)**

**EP 0 272 532 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Farbstoffe der Formel

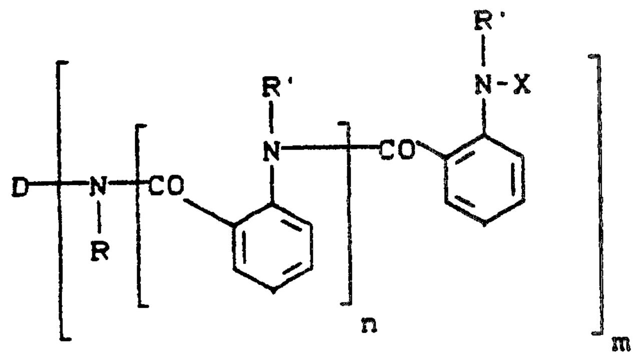

(1)

worin

- D = Rest eines organischen Farbstoffes, insbesondere eines Farbstoffes der Mono- oder Polyazo-, Metallkomplexazo-, Anthrachinon-, Phthalocyanin-, Formazan-, Azomethin-, Dioxazin-, Phenazin-, Xanthen-, Thioxanthon-, Naphthochinon-, Stilben- oder Triphenylmethan-Reihe,
- R = H oder $C_1$-$C_4$-Alkyl,
- R' = H oder $C_1$-$C_4$-Alkyl, insbesondere H oder Methyl,
- m = 1 oder 2 und
- n = 0 oder 1
- x = nicht-faserreaktiver Acylrest oder faserreaktiver Rest.

Aus US-A-3 440 240 sind Farbstoffe mit Amid- und Amin-Gruppen in p- und m-Stellung bekannt, die aber schwer zugänglich sind.

D enthält vorzugsweise wasserlöslich machende Gruppen insbesondere Sulfogruppen.

Die nicht-faserreaktiven Acylreste sind beispielsweise $C_1$-$C_4$-Alkylcarbonyl-, $C_1$-$C_4$--Alkylsulfonyl-, Phenylcarbonyl-oder Phenylsulfonylreste, wobei die Alkyl- und Phenylreste übliche Substituenten aufweisen können.

D kann in der Farbstoffchemie übliche Substituenten aufweisen, beispielsweise Sulfo; $C_1$-$C_4$-Alkyl; $C_1$-$C_4$-Alkoxy; Acylamino wie $C_1$-$C_4$-Alkylcarbonyl-, $C_1$-$C_4$-Alkylsulfonyl-, gegebenenfalls substituiertes Phenylcarbonyl-oder -sulfonyl-, $C_1$-$C_4$-Alkoxycarbonylamino; Amino, mono- und di-$C_1$-$C_4$-Alkylamino; gegebenenfalls substituiertes Phenylalkyl; Cyano, F; Cl; Br; Sulfamoyl, insbesondere $SO_2NH_2$, Sulfonsäure-, mono- und di-$C_1$-$C_4$-alkylamid; Carbamoyl, insbesondere $CONH_2$ und Carbonsäure-mono-und di-$C_1$-$C_4$-alkylamid; Ureido; OH; COOH; Sulfo-$C_1$-$C_4$-Alkyl.

D kann auch einen faserreaktiven Rest X oder einen faserreaktiven Rest $SO_2CH=CH_2$, $SO_2CH_2CH_2OSO_3H$ bzw. $SO_2CH_2CH_2SSO_3H$ enthalten.

Die Alkyl-, Alkoxy- und Phenylreste im Rahmen der vorliegenden Anmeldung können soweit nicht anders angegeben übliche Substituenten aufweisen, beispielsweise Cl, Br, $SO_3H$, OH, COOH, $C_1$-$C_4$-Alkoxy, $C_1$-$C_4$-Alkyl, Phenyl.

Geeignete Alkylreste R sind beispielsweise Methyl, Ethyl, Propyl, Isopropyl, Butyl, Isobutyl, sec.-Butyl, tert.-Butyl, $\beta$-Chlorethyl, $\beta$-Hydroxyethyl, $\beta$-Hydroxybutyl, Sulfomethyl.

Geeignete Alkylreste R' sind beispielsweise Methyl, Ethyl, $\beta$-Hydroxyethyl.

Geeignete nicht-faserreaktive Acyl-Reste X sind beispeilsweise die folgenden: Acetyl, Propionyl, Benzoyl, Methylsulfonyl, Ethylsulfonyl, Benzoylsulfonyl.

Geeignete faserreaktive Reste, d.h. solche, die mit den H-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin-oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen Halogen (Cl, Br oder F), Ammonium einschließlich Hydrazinium, Sulfonium, Sulfonyl, Azido(-$N_3$), Rhodanido, Thio, Thiole-

ther, Oxiether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl, Hydroxy, Cyan, $C_1$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen oder Acylamino.

Im einzelnen seien folgende Reste genannt:

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6,2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6, 2-(o-, m- oder p-Methyl- oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4'-Methylphenyl)-mercapto-4-fluortriazinyl, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, - oder -Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem Vinylsulfon- oder Sulfatoethylsulfonylrest verknüpft sein bzw. über ein Brückenglied

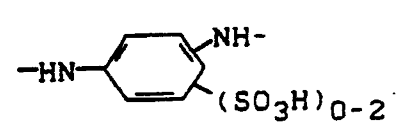 , $NH-C_2-C_4$-alkylene-NH-

oder im Falle der Sulfatoethylsulfonyl- bzw. Vinylsulfon-gruppe über ein Brückenglied

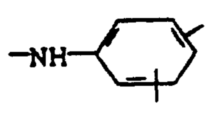

Mono-, Di- oder Trihalogenpyrimidinylreste, wie 2,4-Dichlorpyrimidinyl-6-, 2,3,5-Trichlorpyrimidinyl-6-, 2,4-Dichlor-5-nitro-oder -5-methyl- oder -5-carboxymethyl-oder -5-carboxy- oder -5-cyano- oder -5-vinyl- oder -5-sulfo-oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlor-chinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfon yl-oder -6-carbonyl-, 2,4-Dichlorchinazolin-7- oder -6-sulfonyl-oder -carbonyl-, 2- oder 3- oder 4-(4',5'-Dichlorpyridazon-6'-yl-1')-phenylsulfonyl- oder -carbonyl-, $\beta$-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlorpyrimidin-4-yl;2-Methyl-4-fluor-5-methylsulfonyl-pyrimidinyl-6; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Trismethylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-,2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4-und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl-oder -carbonyl-; 2-Chlorbenzthiazol-5-oder -6-carbonyl-oder -5- oder -6-sulfonyl-, 2-Arylsulfonyl- oder Alkylsulfonylbenzthiazol-5-oder -6-carbonyl- oder -5- oder -6-sulfonyl-, wie 2-Methylsulfonyl-oder 2-Ethylsulfonylbenzthiazol-5- oder -6-sulfonyl-oder -carbonyl-, 2-Phenylsulfonylbenzthiazol-5-oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5-oder -6-carbonyl- oder -sulfonyl-, 2-Chlorbenzimidazol-5-oder -6-carbonyl- oder -sulfonyl-, 2-Chlor-1-methylbenzimidazol-5- oder -6-carbonyl-oder -sulfonyl-, 2-Chlor-4-methylthiazol-(1,3)-5-carbonyl-oder -4- oder -5-sulfonyl-, N-Oxid des 4-Chlor- oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, $\beta$-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, $\beta$-(2,2,3,3-Tetrafluorcyclobutyl-2)-aryloxy-, $\alpha$- oder $\beta$-Bromacryloyl-, $\alpha$- oder $\beta$-Alkyl- oder Arylsulfoacryloyl-Gruppe,

wie α- oder β-Methylsulfonylacryloyl, Chloracetyl, Vinylsulfonyl, $-SO_2CH_2CH_2Z$ worin Z = alkalisch abspaltbare Gruppe, insbesondere $-OSO_3H$, $-OCOCH_3$, $-SSO_3H$, $-OPO_3H_2$, $-OCOC_6H_5$, Di-$C_1$-$C_4$-Alkylamino, quartäres Ammonium, insbesondere $-N^{\oplus}(C_1\text{-}C_4\text{-Alkyl})_3X^{\ominus}$,

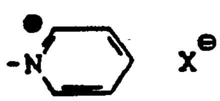 oder 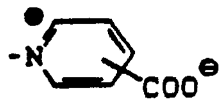 mit

X = Anion, bspw. $-OSO_3H$, $-OPO_3H_2$, -Cl, -Br, -F, -SCN, -OCN, $-OSO_2CH_3$, $-OSO_2C_6H_5$, $OCOCH_3$.
Bevorzugt sind Farbstoffe der Formel

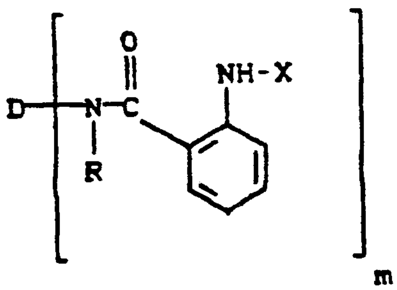 (2)

worin D, R, X und m die oben genannte Bedeutung besitzen, insbesondere solche mit X = fasereaktiver Rest, vorzugsweise Rest der Triazin-, Pyrimidin-, Pyridin-, Pyridazin- und Chinoxalin-Reihe.

Im Rahmen der Formel (2) sind die Farbstoffe (3) bis (35) bevorzugt. Dabei bedeutet der Ausdruck

A = 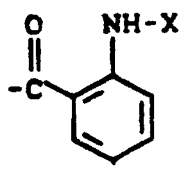 ,

wobei X die oben genannte Bedeutung zukommt.

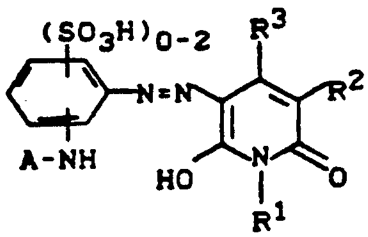
(3)

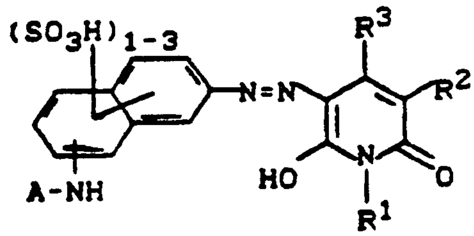
(4)

worin
$R^1$ = H, $C_1$-$C_4$-Alkyl, Aryl, β-Sulfoethyl,
$R^2$ = H, Cl, $SO_3H$, $CONH_2$, $CH_2SO_3H$, $CH_3$ und $SO_2CH_3$,
$R^3$ = H, $CH_3$, $CH_2$-$SO_3H$, $CO_2H$

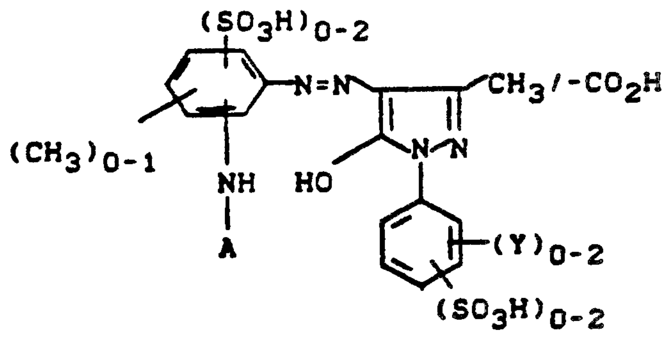

(5)

worin Y = Chlor oder Methyl

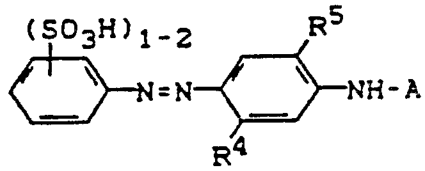

(6)

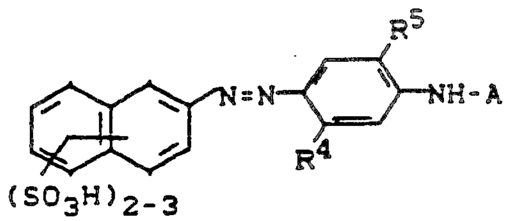

(7)

worin
$R^4$ = H, Methyl, Ethyl, Methoxy, Ethoxy, Acetylamino, Ureido, Phenylcarbonylamino, Mesylamino, Halogen,
$R^5$ = H, Methyl, Ethyl, Methoxy, Ethoxy, Sulfo

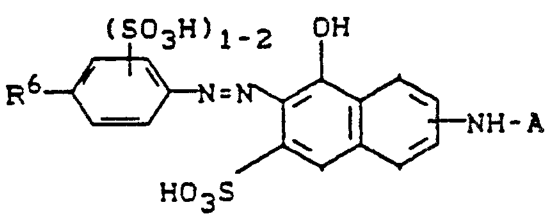

(8)

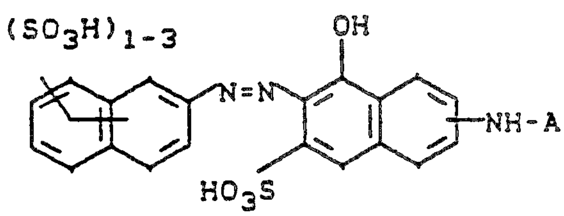

(9)

worin
$R^6$ = H, Methyl, Ethyl, Methoxy, Ethoxy, Chlor oder Acetylamino,

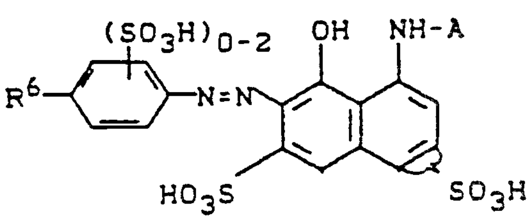

(10)

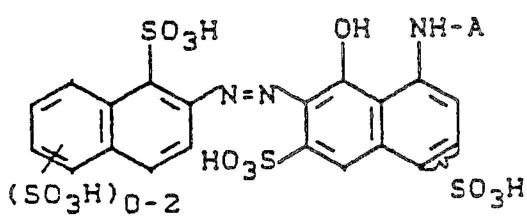

(11)

worin
$R^6$ = die oben angegebene Bedeutung hat,

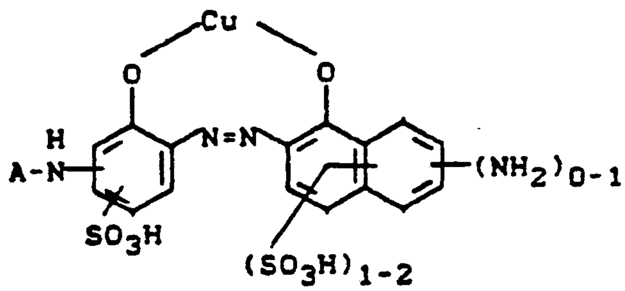

(12)

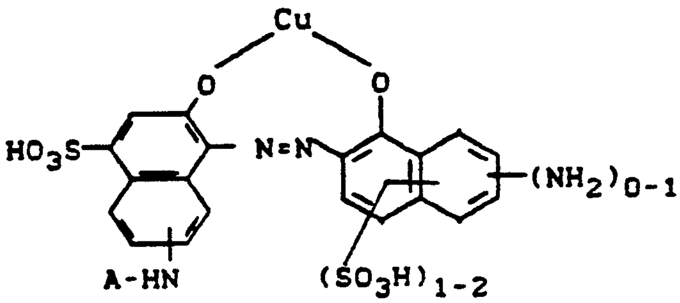

(13)

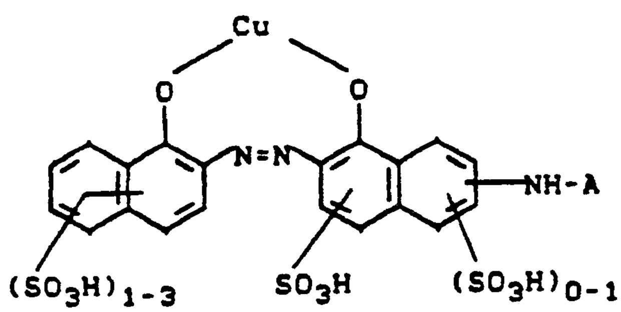

(14)

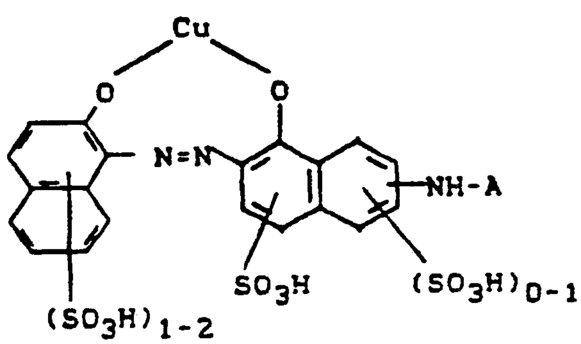

(15)

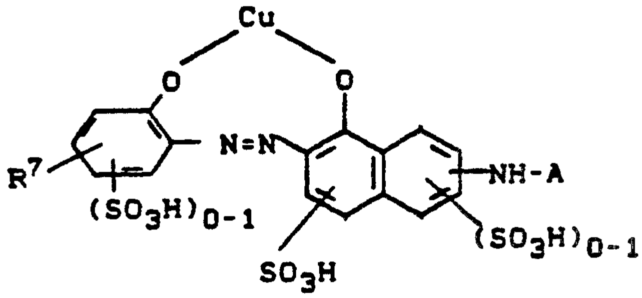

(16)

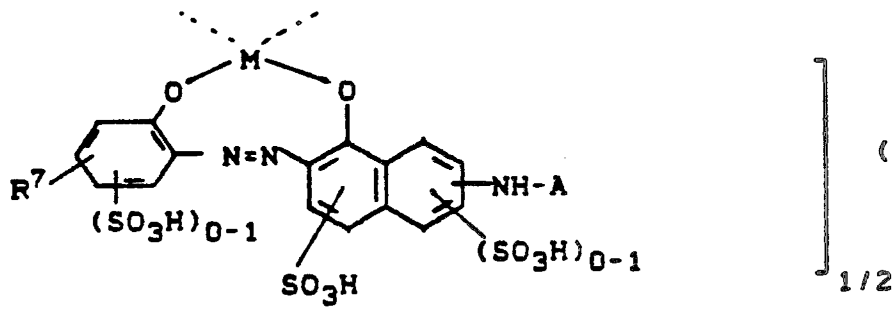

(17)

worin

$R^7$ = H, Halogen, Nitro oder $C_1$-$C_4$-Alkyl und

a) 1:2 Cr- oder Co-Komplexe von 17, die zwei gleiche Farbstoffe (17) oder zwei verschiedene Farbstoffe 17 enthalten, oder

b) 1:2 Cr- oder Co-Komplexe von 17 mit einem beliebigen anderen metallkomplexbildenden Farbstoff

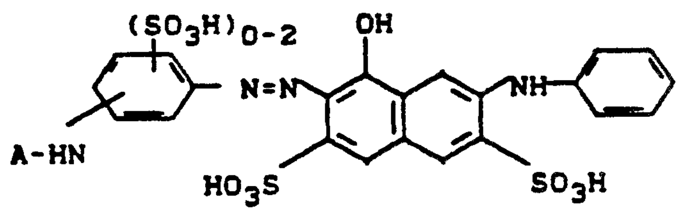

(18)

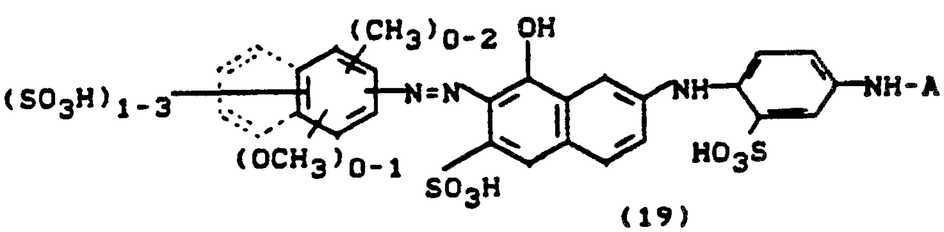

(19)

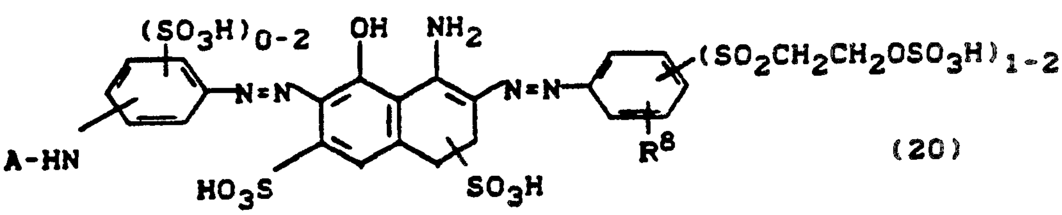

(20)

worin

$R^8$ = H, Cl, Br, Methyl, Methoxy, Carboxy, Sulfo

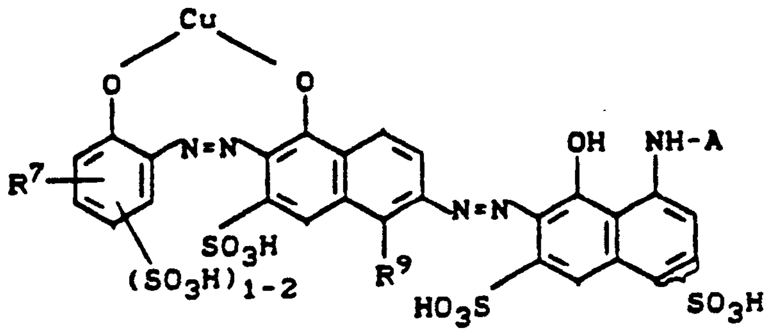

(21)

worin
$R^9$ = H oder $SO_3H$ und $R^7$ die oben angegebene Bedeutung hat

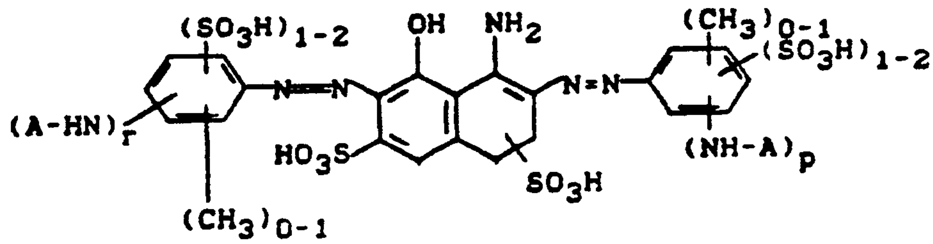

(22)

worin
r bzw. p = 0 oder 1, wobei die Summe
r + p = 1 oder 2

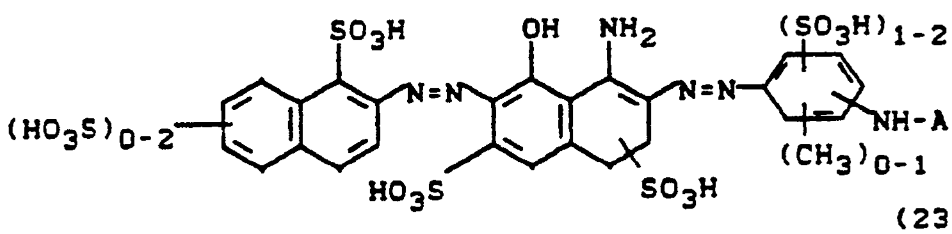

(23)

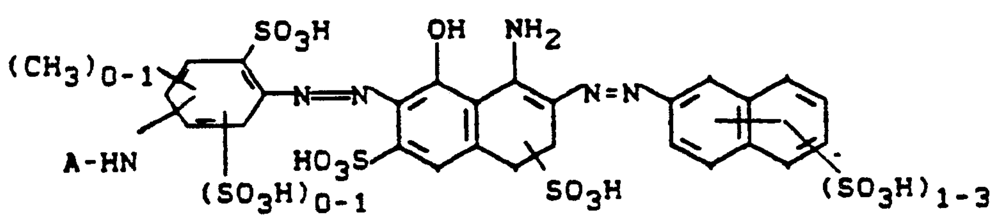

(24)

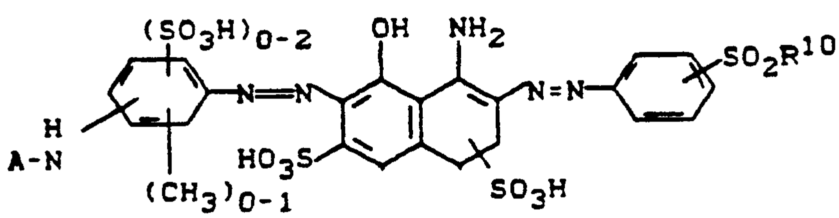

(25)

worin

$R^{10}$ = $NH_2$, $NHCH_3$, $CH_3$, $C_2H_5$, $-CH_2CH_2OH$,

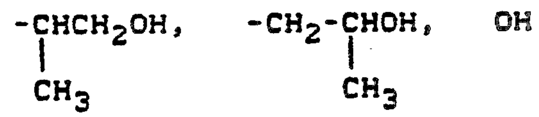

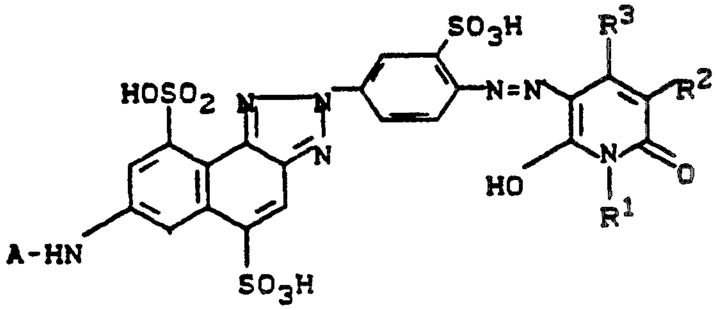

worin $R^1$, $R^2$, $R^3$ die unter Formel (3) und (4) angegebene Bedeutung haben,

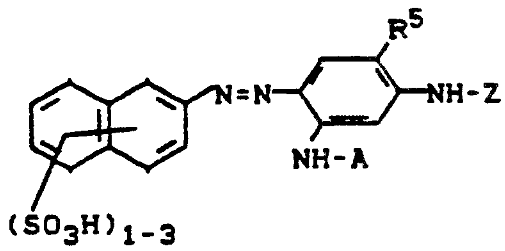

(27)

worin Z = H, $COCH_3$, $COC_6H_5$ oder X und $R^5$ die unter Formel (6) angegebene Bedeutung hat,

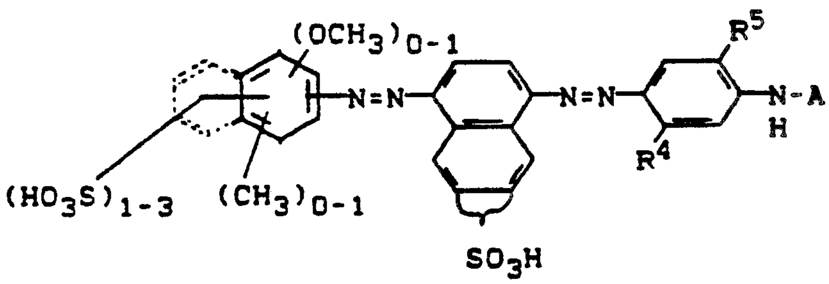

(28)

worin $R^4$ und $R^5$ die unter Formel (6) angegebene Bedeutung hat,

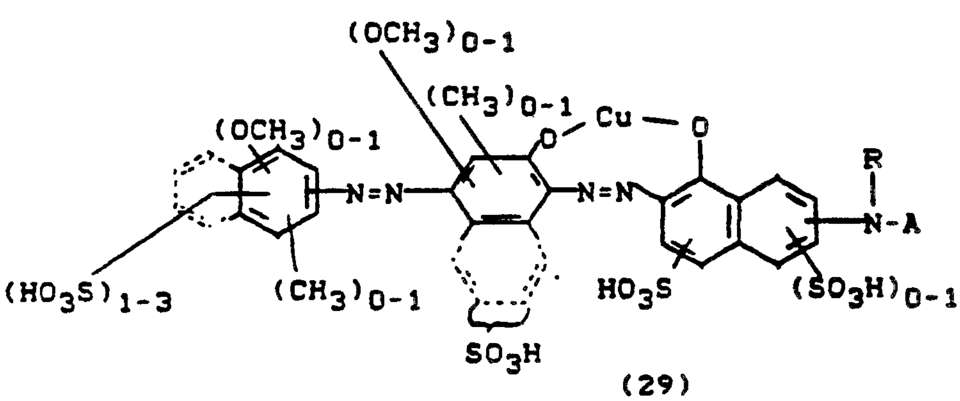

(29)

worin R die unter Formel (1) angegebene Bedeutung hat,

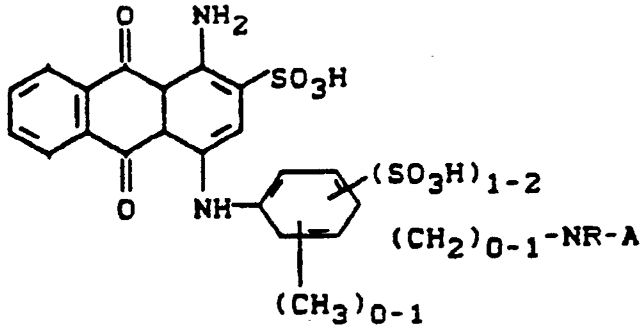

(30)

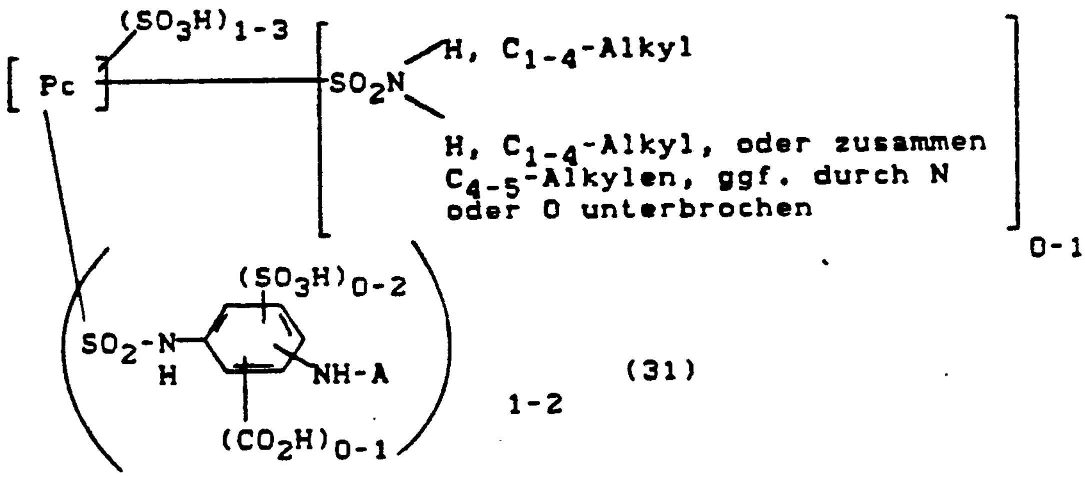

(31)

worin Pc für einen Cu- oder Ni-Phthalocyaninrest steht. Die Gesamtzahl der Substituenten am PC-Gerüst ist dabei 4.

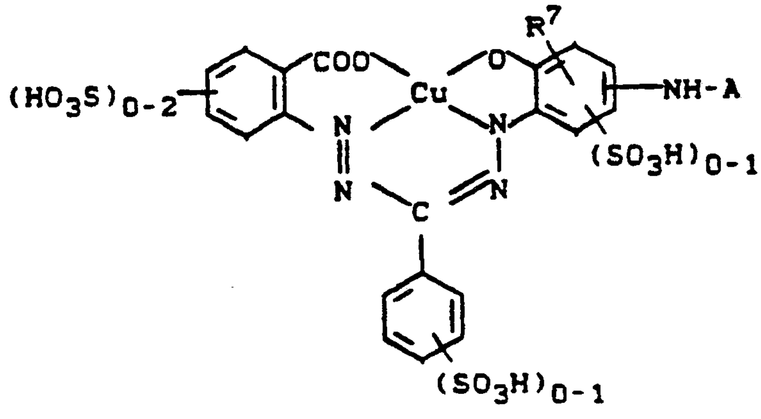

(32)

worin $R^7$ die unter Formel (16) angegebene Bedeutung hat,

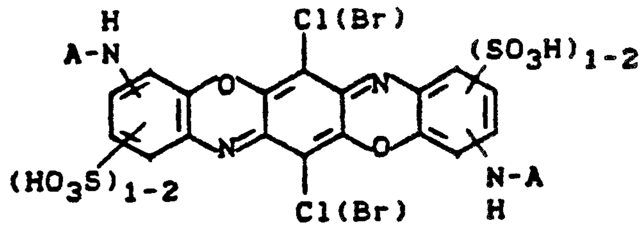

(33)

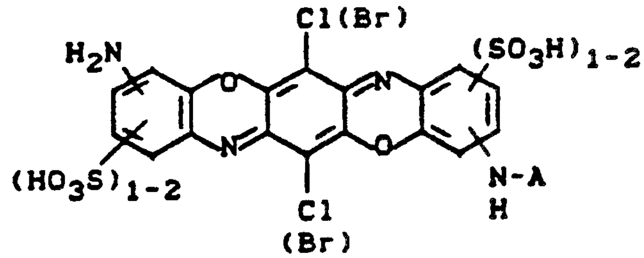

(34)

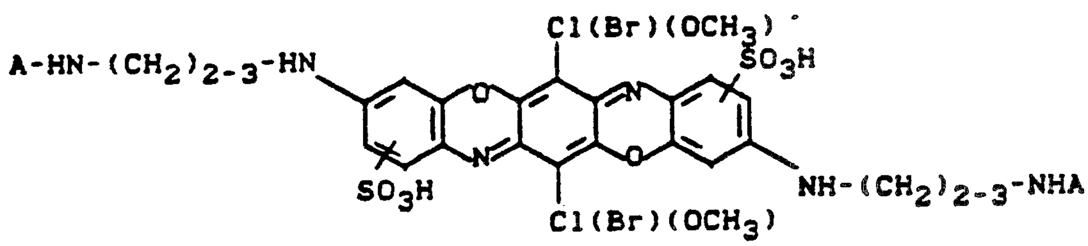

(35)

Besonders wichtige Azofarbstoffe sind die folgenden:

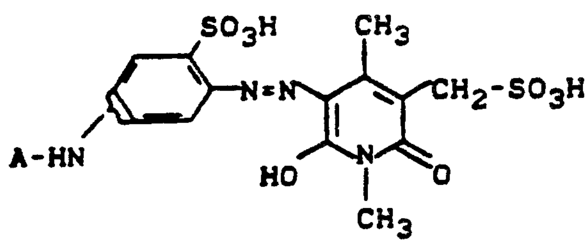

(36)

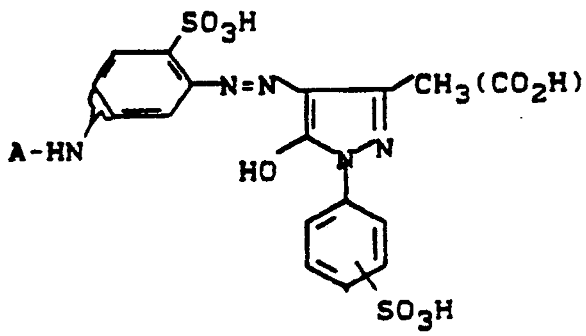

(37)

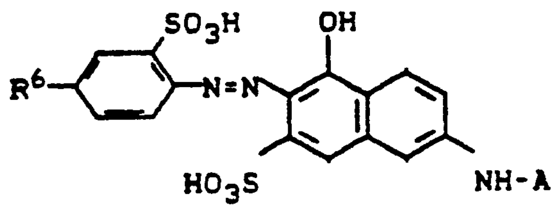

(38)

worin $R^6$ = H, $CH_3$, $OCH_3$, $OC_2H_5$ und $NHCOCH_3$

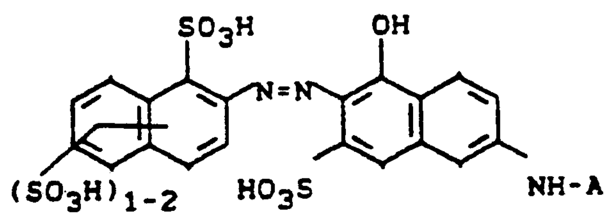

(39)

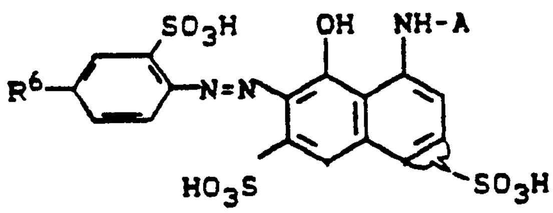

(40)

wobei $R^6$ die unter Formel (38) genannte Bedeutung hat,

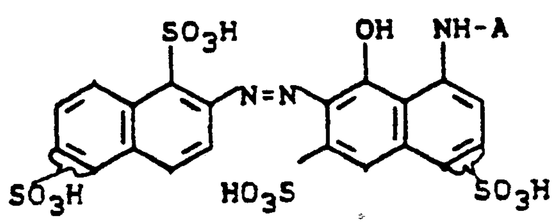

(41)

Aus der Reihe der Farbstoffe der Formeln (36) bis (41) sind besonders die hervorzuheben, bei denen der faserreaktive Rest X einen fluorhaltigen Pyrimidinrest, wie z.B. 5-Chlor-2,6-difluor-pyrimidin-4-yl, oder einen fluorhaltigen Triazinrest darstellt.

Die Farbstoffe der Formeln (1) bis (41) mit X = faserreaktiver Rest eignen sich in hervorragender Weise zum Färben und Bedruckten von textilen Gebilden aus nativer und regenerierter Cellulose sowie von natürlichen oder synthetischen Polypeptiden nach den für Reaktivfarbstoffe üblichen Verfahren.

Die mit diesen Farbstoffen in hohen Ausbeuten erhältlichen Färbungen zeichnen sich durch eine hohe Faser-Farbstoff-Bindungsstabilität aus. Die Farbstoffe selbst zeigen ein sehr gutes Aufbauvermögen. Die Auswaschbarkeit der beim Färben oder Druck entstehenden Hydrolyseprodukte ist ausgezeichnet.

Die sauren Farbstoffe der Formeln (1) bis (41) mit X = nicht-faserreaktiver Acylrest eignen sich auch

zum Färben und Bedrucken von Wolle und synthetischen Polyamidmaterialien sowie zum Färben von Leder und Papier.

Die neuen Farbstoffe der allgemeinen Formel (1) sind nach einem neuen Herstellungsverfahren zugänglich, das ebenfalls Gegenstand der Erfindung ist. Danach werden die entsprechenden Farbstoffe der Formel (42),

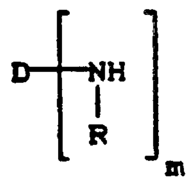

(42)

worin D, R und m die unter der Formel (1) genannte Bedeutung besitzen und die aus der Literatur in großer Zahl bekannt sind, in wäßrigem oder wäßrig-organischen Medium bei Temperaturen zwischen 20-100 °C und pH-Werten zwischen 3-10, vorzugsweise im Bereich zwischen pH 6-8, pro Gruppe -NHR mit m oder 2m Äquivalenten Isatosäureanhydrid-Derivaten der Formel (43),

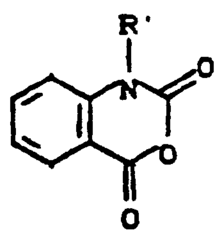

(43)

worin R′ die unter der Formel (1) genannte Bedeutung hat, unter Freisetzung von Kohlendioxid zu Farbstoffen der Formel (44) bzw. (44a) umgesetzt.

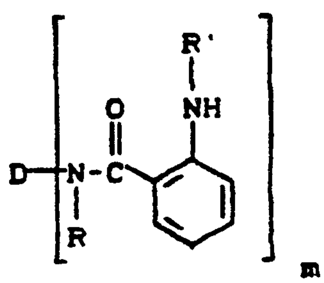

(44)

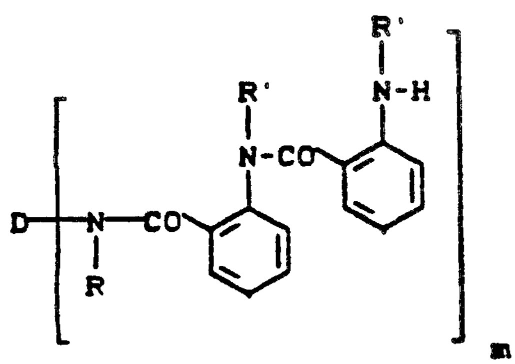

(44a)

Die Kondensation dieser neuen Farbstoffbasen der Formel (44 bzw. 44a) mit den bekannten Reaktivkomponenten, wie z.B. Verbindungen der Struktur (45), X-Hal, worin Hal = Cl, F, Br und X = faserreaktiver Rest, zu Reaktivfarbstoffen der Formel (1) kann nach den bei der Synthese von Reaktivfarbstoffen üblichen Herstellungsmethoden erfolgen, ebenso die Umsetzung mit nicht-faserreaktiven Acylierungsmitteln, insbesondere mit den entsprechenden Säurechloriden oder Säureanhydriden.

Oftmals ist es günstiger - in einer Abwandlung des Herstellungsverfahrens - die Umsetzung mit Isatosäureanhydrid oder dessen Derivate sowie die nachfolgende Kondensation mit den Acylierungsmitteln, beispielsweise Reaktivkomponenten, zunächst mit einem Farbstoff Vor- oder Zwischenprodukt durchzuführen und dann erst den Aufbau des Chromophors folgen zu lassen. So kann bei Azofarbstoffen die Anthraniloyl-Gruppierung zuerst in die Diazo- und/oder Kupplungskomponente eingeführt werden und dann erst erfolgt der Aufbau durch Azokupplung. Bei Phthalocyaninfarbstoffen kann die Anthraniloyl- und nachfolgende Reaktivgruppierung zunächst halbseitig an einem aromatischen Diamin eingeführt werden, und anschließend wird der Farbstoff durch Kondensation mit einem Cu- oder Ni-Phthalocyaninsulfochlorid

hergestellt.

Gegenstand der vorliegenden Erfindung sind deshalb auch Zwischenprodukte der Formel (46) und (47)

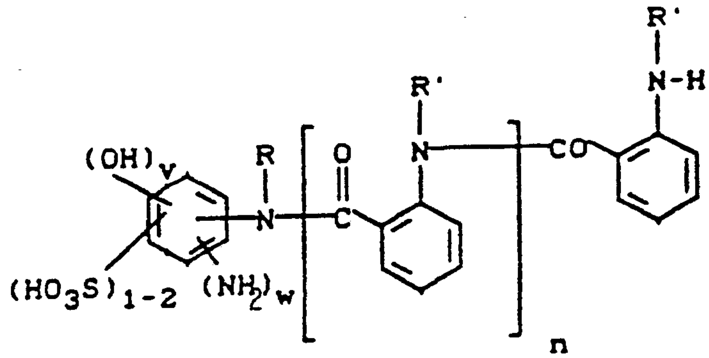

(46)

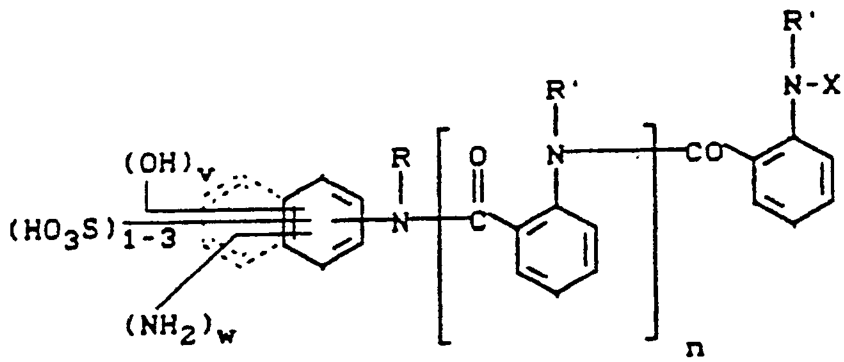

(47)

worin

v = w = 0 oder 1, wobei w + v = 1 oder 2 und R, R', X und n die oben genannte Bedeutung haben, sowie das Verfahren zu deren Herstellung.

Bevorzugt sind dabei Zwischenprodukte der Formel (48) bis (51)

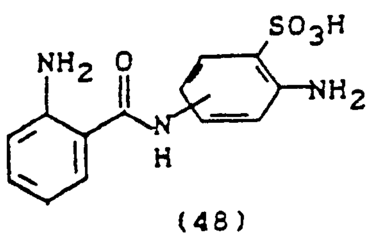

(48)

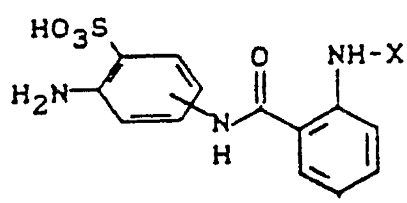

(49)

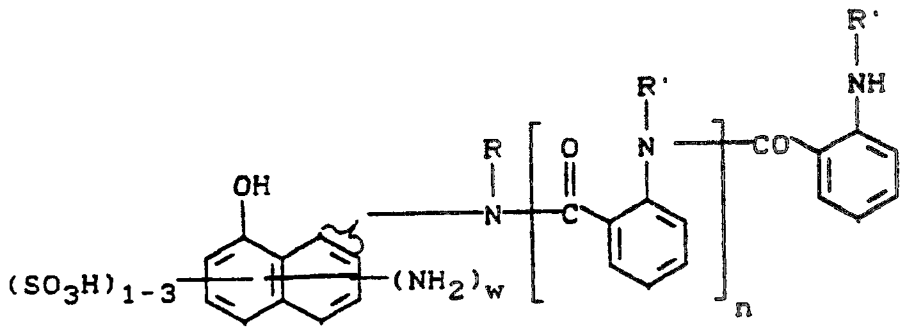

(50)

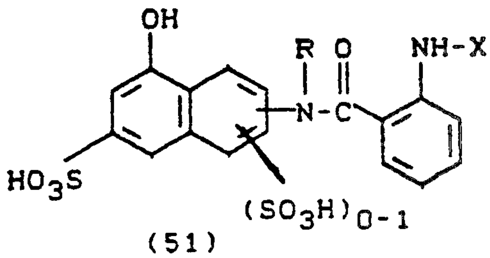

(51)

insbesondere Zwischenprodukte der Formel (49) und (51), bei denen der faserreaktive Rest X die Bedeutung eines fluorhaltigen Pyrimidinrestes, wie z.B. 5-Chlor-2,6-difluor-pyrimidin-4-yl, oder eines fluorhaltigen Triazinrestes hat.

Zwischenprodukte dieses Typs waren bislang nach konventionellen Synthesemethoden, wie sie für die meta- und para-substituierten Aminobenzoylamino-Derivate bekannt sind (siehe Beilstein Bd. 14, II 499, 501 ff; J. Chem. Soc. 1927, 3608-97) nicht zugänglich. Die Herstellung dieser neuen Zwischenprodukte (46) und (47), die z.B. als Diazo- und/oder Kupplungskomponente eingesetzt werden können, gelingt nun durch Umsetzung von sulfogruppenhaltigen Diaminobenzolen, Diaminonaphthalinen, Aminophenolen oder Aminonaphtholen mit Isatosäureanhydrid oder dessen Derivaten in wäßrigen Reaktionsmedium bei Temperaturen von etwa 20-100° C und pH-Werten von 3-10, vorzugsweise im Bereich von pH 6-8. Weitere Einzelheiten zu den Herstellungsbedingungen können den Beispielen entnommen werden.

Die dabei resultierenden Zwischenprodukte (46) werden nachfolgend mit Acylierungsmitteln der Formel X-Hal (45), in Gegenwart von säurebindenden Mitteln oder Puffersystemen zu den entsprechenden acylierten Diazo-und/oder Kupplungskomponenten (47) kondensiert. Neue Reaktivfarbstoffe der Formeln (36) und (37) sind so z.B. durch Diazotieren der Zwischenprodukte (48), Kuppeln auf Pyridon- oder Pyrazolonkupplungskomponenten und Kondensation mit Reaktivkomponenten X-Hal oder aber durch Diazotieren der Zwischenprodukte (49) und Kuppeln auf Pyridon-oder Pyrazolonkupplungskomponenten darstellbar. Reaktivfarbstoffe der Formel (38) bis (41) sind zugänglich, wenn man die Kupplungskomponenten der Formel (50) mit beliebigen Diazokomponenten umsetzt und die Kupplungsprodukte mit Reaktivkomponenten kondensiert bzw. beliebige Diazokomponenten auf reaktivgruppenhaltige Kupplungskomponenten der Formel (51) kuppelt.

Zwischenprodukte der Formel (48) sind auch darstellbar, indem man Diaminobenzole unter den geschilderten Bedingungen, gegebenenfalls auch in organischen Solventien, halbseitig mit äquimolaren Mengen Isatosäureanhydrid kondensiert und das resultierende N-Anthraniloyldiaminobenzol der Formel (52) in Oleum bei 0°-40° C sulfiert.

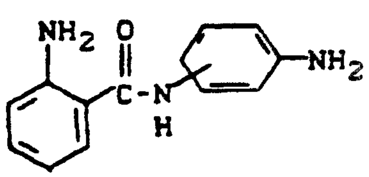

(52)

Auch für den Aufbau von reaktiven Triphendioxazinfarbstoffen erweisen sich Verbindungen der Formel (52) als geeignete Zwischenprodukte. Durch Kondensation mit z.B. Chloranil im Molverhältnis 2:1 sind

Farbstoffvorprodukte der Formel (53) erhältlich,

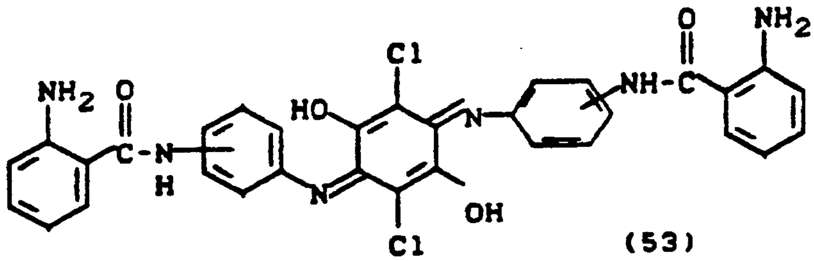

(53)

die nach bekannten Herstellungsverfahren in Oleum in Gegenwart von Oxidationsmitteln zu Triphendiazin-Farbstoffen cyclisiert und gleichzeitig zu wasserlöslichen Farbstoffen der Formel (54) sulfiert werden können.

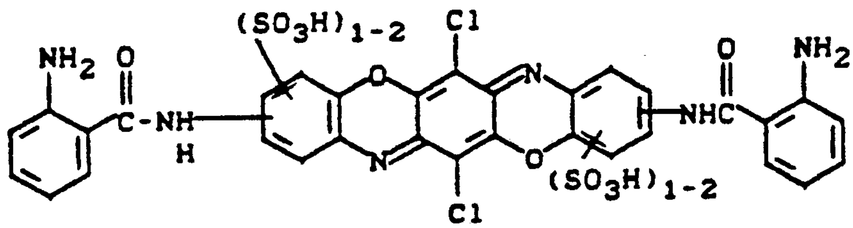

(54)

Umsetzung mit den entsprechenden Acylierungsmitteln führt schließlich zu Triphendioxazin-Reaktivfarbstoffen der Formel (33).

Andere Umwandlungsreaktionen der Farbstoffe oder deren Vorprodukte, wie Metallisierungsreaktionen, Sulfierungen, Triazolierungen, oder Einführung von Acylaminogruppierungen, können im allgemeinen in beliebigen Stufen der Farbstoffsynthese vorgenommen werden.

Die Farbstoffe der Formel (1) können außer dem faserreaktiven Rest an der Anthraniloylgruppierung noch weitere faserreaktive Reste am Farbstoffrest D enthalten.

Die angegebenen Formeln sind die der freien Säuren. Bei der Herstellung werden im allgemeinen die Salze erhalten, insbesondere die Alkalisalze wie Natrium-, Kalium- oder Lithiumsalze.

Die in den Beispielen genannten $\lambda_{max}$-Werte wurden alle in Wasser als Lösungsmittel ermittelt.

Herstellung von Farbstoff-Zwischenprodukten:

A 2-Amino-5-anthraniloylamino-benzolsulfonsäure

68 g 2,5-Diaminobenzolsulfonsäure werden in 500 ml Wasser angerührt, durch Zugabe von 25 g Kaliumhydroxid und 20 g Kaliumhydrogencarbonat gelöst und auf 40 °C erwärmt. Zur Lösung dosiert man innerhalb von 30 Minuten 72 g Isatosäureanhydrid und rührt solange bei 40 °C, bis eine klare Lösung resultiert. Nach dem Abkühlen verdünnt man das Reaktionsvolumen auf 1,5 l, stellt mit Salzsäure auf pH 0,8-1,0 und fügt zwecks vollständiger Ausfällung 150 g Kochsalz zu. Nach Absaugen und Trocknen erhält man 154 g salzhaltiges Rohprodukt. Zur Reinigung löst man das Rohprodukt bei pH 7 in 1000 ml Wasser, trennt unlösliche Anteile ab, säuert die Lösung wieder an und salzt mit 50 g Kochsalz aus. Es werden ca. 125 g schwach salzhaltige 2-Amino-5-anthraniloylamino-benzolsulfonsäure isoliert.

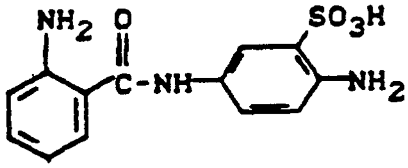

Setzt man anstelle der 2,5-Diaminobenzolßulfonsäure die 2,4-Diaminobenzolsulfonsäure ein, erhält man die Verbindung der Formel

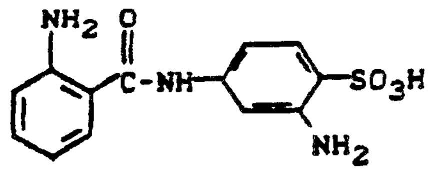

B 7-Anthraniloylamino-4-hydroxy-2-naphthalin-sulfonsäure

87 g 7-Amino-4-hydroxy-2-naphthalinsulfonsäure werden in 2 l Wasser mit 35 ml konz. Natronlauge und 20 g Natriumhydrogencarbonat gelöst und auf 35° C erwärmt. Über eine Zeitraum von 2 Stunden trägt man bei 35° C 72 g Isatosäureanhydrid ein und rührt weitere 20 Stunden bei 30-35° C. Der kristalline Niederschlag wird abgesaugt und zweimal mit 100 ml Wasser nachgewaschen. Die 219 g isolierte Paste können in dieser Form direkt weiterverarbeitet werden. Zur Reinigung reicht es, das Produckt in ca. 600 ml Wasser nochmals anzurühren und zu isolieren:

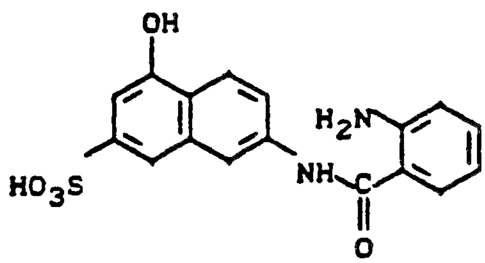

Setzt man anstelle der 7-Amino-4-hydroxy-2-naphthalinsulfonsäure die 6-Amino- oder die 8-Amino-4-hydroxy-2-naphthalinsulfonsäure ein, erhält man die entsprechenden Verbindungen der Formel

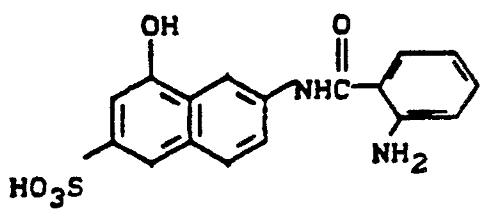

bzw.

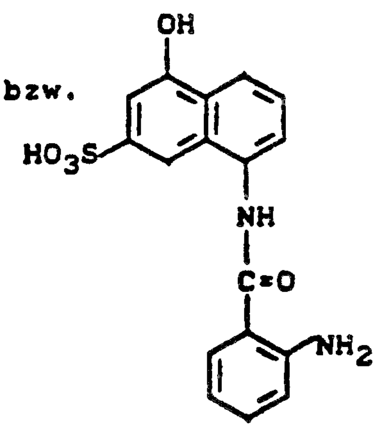

C 4-Anthraniloylamino-5-hydroxy-2,7-naphthalin-disulfonsäure

116 g 4-Amino-5-hydroxy-2,7-naphthalindisulfonsäure werden in 1000 ml Wasser mit 20 g Natriumhydroxid und 15 g Natriumhydrogencarbonat gelöst und die Lösung auf 40° C erwärmt. Über einen Zeitraum von 1 Stunde werden 65 g Isatosäureanhydrid zudosiert und weitere 3 Stunden bei 40° C gerührt. Danach erwärmt man die dunkel gefärbte Reaktionslösung auf 50° C und stellt mit ca. 20 ml Salzsäure auf pH 6,0. Nach Zugabe von 250 g Kochsalz läßt man unter Rühren bis auf 20° C abkühlen. Dabei kristallisiert

die 4-Anthraniloylamino-5-hydroxy-2,7-naphthalindisulfonsäure aus. Das abgesaugte feuchte Produkt kann direkt weiterverarbeitet werden. Es resultieren ca. 850 g Paste.

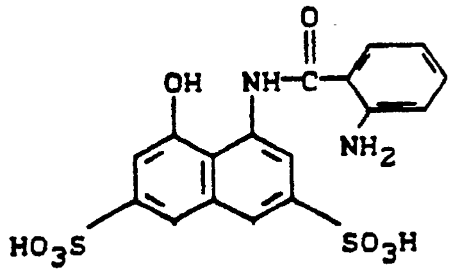

Die Verwendung von 4-Amino-5-hydroxy-1,7-naphthalindisulfonsäure anstelle der oben beschriebenen 4-Amino-5-hydroxy-2,7-naphthalindisulfonsäure führt zu der Verbindung der Formel

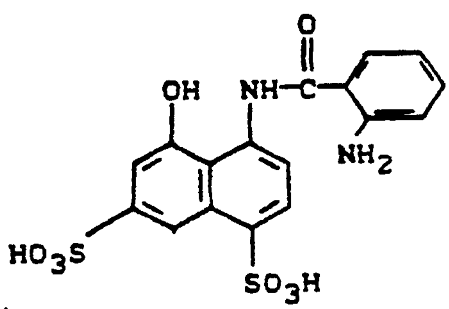

Beispiel 1

30,8 g 2-Amino-4-anthraniloylamino-benzolsulfonsäure werden in 400 ml Wasser unter Zugabe von Natriumcarbonatlösung neutral gelöst. Man tropft bei 0°C 17 g 2,4,6-Trifluor-5-chlor-pyrimidin ein, wobei man den pH durch gleichzeitige Zugabe von verdünnter Natronlauge zwischen 6 und 7 hält. Nach beendeter Kondensation gibt man 7 g Natriumnitrit hinzu und läßt die Lösung in eine Vorlage aus 28 ml konz. Salzsäure und 200 ml Eiswasser einlaufen. Nach Entfernung des im Überschuß vorhandenen Nitrits mit Amidosulfonsäure wird die Suspension mit 24,7 g 1-Ethyl-3-sulfomethyl-4-methyl-6-hydroxy-pyridon-(2) versetzt. Durch Abstumpfen mit Sodalösung auf pH 5-6 wird die Kupplung herbeigeführt. Der Farbstoff wird ausgesalzen, abgesaugt, getrocknet und gemahlen, Es resultiert ein in Wasser leicht lösliches gelbes Farbstoffpulver. Nach einem der für Reaktivfarbstoffe üblichen Applikationsverfahren erhält man damit auf Baumwolle stark grünstichig gelbe Färbungen.

Der Farbstoff entspricht der Formel

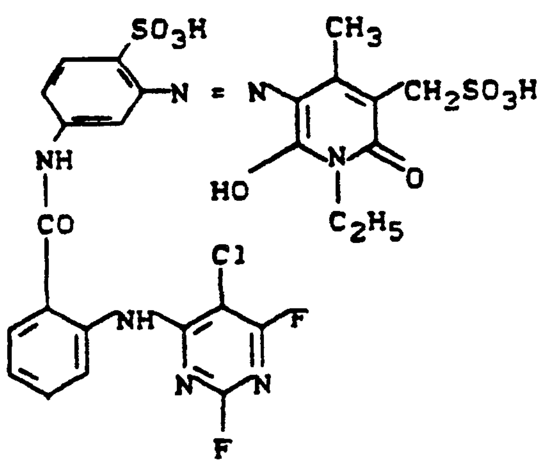

Gleich wertvolle Farbstoffe erhält man nach der Arbeitsweise dieses Beispiels unter Verwendung der nachfolgend aufgeführten Pyridone:

| Bsp. | Pyridon | Farbton |
|---|---|---|
| 2 | 1-Ethyl-3-sulfo-4-merthyl-6-hydroxy-pyridon-(2) | Stark grünstichig Gelb |
| 3 | 1-Ethyl-3-carbamoyl-4-methyl-6-hydroxy-pyridon-(2) | Stark grünstichig Gelb |
| 4 | 4-Carboxy-6-hydroxy-pyridon-(2) | Stark grünstichig Gelb |

Beispiel 5

Die nach den Angaben von Beispiel 1 bereitete Diazoverbindung wird zu einer Mischung aus 29 g 1-(2'-Chlor-5'-sulfo-phenyl)-3-methyl-pyrazolon-5, 28 g Natriumhydrogencarbonat und 200 ml Wasser gegeben. Nach beendigter Kupplung wird der Farbstoff ausgesalzen, abgesaugt, getrocknet und gemahlen. Es resultiert ein leicht wasserlösliches Pulver. Nach einem der für Reaktivfarbstoffe bekannten Applikationsverfahren erhält man damit auf Baumwolle grünstichig gelbe Färbungen. Der Farbstoff entspricht der Formel

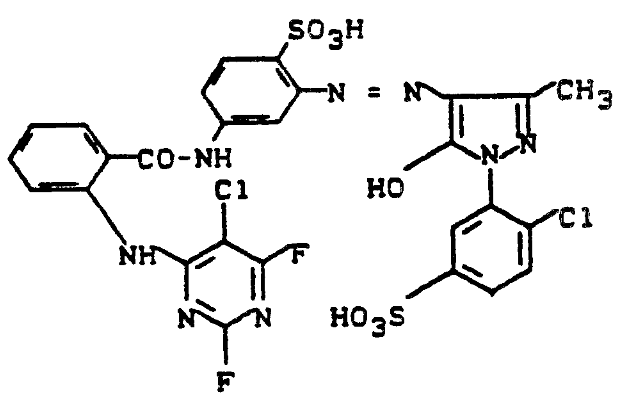

Nach der Arbeitsweise dieses Beispiels erhält man gleichfalls wertvolle Reaktivfarbstoffe, wenn man die nachfolgend aufgeführten Pyrazolone verwendet:

| Bsp. | Pyrazolon | Farbton |
|---|---|---|
| 6 | 1-(2'-Chlor-4'-sulfophenyl)-3-methyl-pyrazolon-5 | grünstichig Gelb |
| 7 | 1-(2'-Methyl-4'-sulfophenyl)-3-methyl-pyrazolon-5 | " |
| 8 | 1-(3'-Sulfophenyl)-3-methyl-pyrazolon-5 | " |
| 9 | 1-(4'-Sulfophenyl)-3-methyl-pyrazolon-5 | " |
| 10 | 1-(2',5'-Dichlor-4'-sulfophenyl)-3-methyl-pyrazolon-5 | " |
| 11 | 1-(2'-Methyl-4'-sulfophenyl)-3-carboxy-pyrazolon-5 | " |

| Bsp. | Pyrazolon | Farbton |
|---|---|---|
| 12 | 1-(4'-Sulfophenyl)-3-carboxy-pyrazolon-5 | Gelb |
| 13 | 1-(4',8'-Disulfonaphthyl-2')-3-methyl-pyrazolon-5 | grünstichig Gelb |
| 14 | 1-(2'-Methyl-6'-chlor-4'-sulfophenyl)-3-methyl-pyrazolon-5 | grünstichig Gelb |

Beispiel 15

Die nach den Angaben von Beispiel 1 bereitete Suspension der Diazoverbindung wird zu einer Mischung aus 60,8 g 1-Hydroxy-8-amino-3,6-disulfo-naphthalin[7 azo 1]4-sulfatoethylsulfonylbenzol, 28 g Natriumhydrogencarbonat und 500 ml Wasser gegeben. Nach beendeter Kupplung wird der Farbstoff mit 10 Vol.-Prozent Natriumchlorid ausgesalzen. Nach dem Absaugen, Trocknen bei 40° C in Vakuumtrockenschrank und Mahlen erhält man ein dunkelblaues Farbstoffpulver, das Baumwolle in marineblauen Tönen färbt.

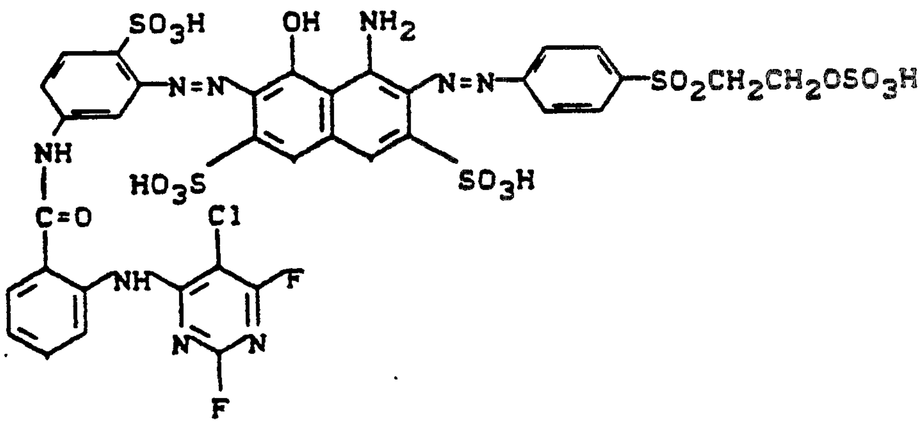

Beispiel 16

Zur Lösung der nach üblichen Methoden aus 0,1 Mol 2-Aminonaphthalin-3,6,8-trisulfonsäure zu erhaltenden Diazoniumverbindung werden 0,1 Mol des Umsetzungsproduktes aus 10,8 Teilen 1,3-Diaminobenzol und 16,3 Teilen Isatosäureanhydrid gegeben und die Kupplung durch Neutralisation mit verdünnter Sodalösung zu Ende geführt, Anschließend tropft man bei 0° C 34 g 2,4,6-Trifluor-5-chlor-pyrimidin ein, wobei die freiwerdende Flußsäure durch 20 %ige Sodalösung in dem Maße abgestumpft wird, daß der pH-Wert zwischen 5 und 6 liegt. Der Farbstoff wird ausgesalzen, abfiltriert, getrocknet und gemahlen. Man erhält ein oranges Farbstoffpulver, das sich leicht in Wasser mit rotstichig gelber Farbe löst. Der Farbstoff entspricht der Formel:

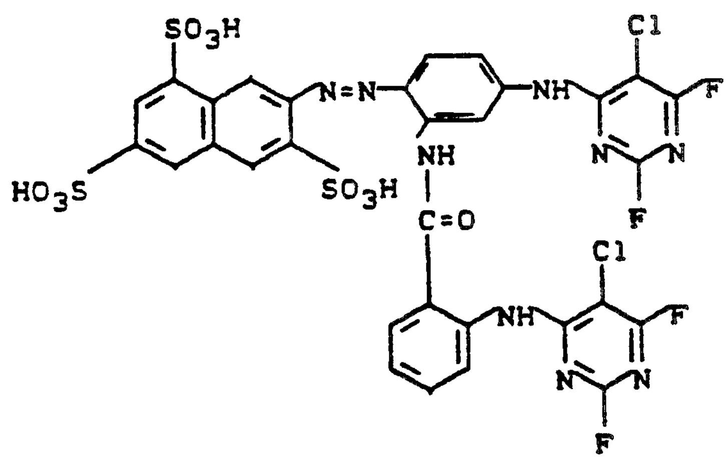

Durch Eindampfen oder Sprühtrocknung des ganzen Reaktionsgemisches kann der Farbstoff ebenfalls isoliert werden. Er färbt Baumwolle rotstichig gelb.

Nach der Arbeitsweise dieses Beispiels erhält man bei Verwendung der nachfolgend aufgeführten Diazo- und Reaktivkomponenten gleichfalls wertvolle Reaktivfarbstoffe, die Baumwolle in gelben bis rotstichig gelben Tönen färben.

| Bsp. | Diazokomponente | Reaktivkomponente | Farbton |
|---|---|---|---|
| 17 | 2-Aminonaphthalin-6,8-disulfonsäure | 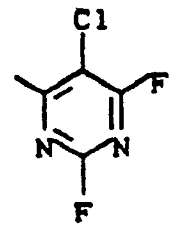 | rotstichiges Gelb |
| 18 | " | 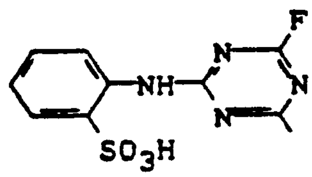 | " |
| 19 | " | 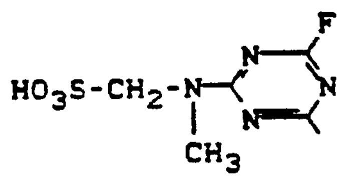 | " |
| 20 | 2-Aminonaphthalin-4,6,8-trisulfonsäure | " | " |
| 21 | " | 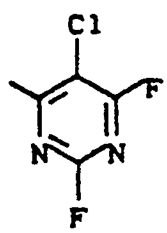 | rotstichiges Gelb |

| Bsp. | Diazokomponente | Reaktiv-komponente | Farbton |
|---|---|---|---|
| 22 | 2-Aminonaphthalin-4,6,8-trisulfonsäure | 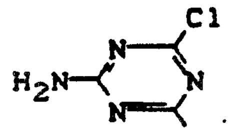 | rotstichiges Gelb |
| 23 | 1-Aminobenzol-2,5-disulfonsäure | 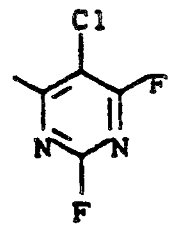 | " |
| 24 | " | 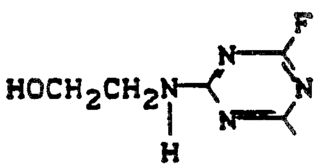 | " |
| 25 | 1-Aminobenzol-2,4-disulfonsäure | 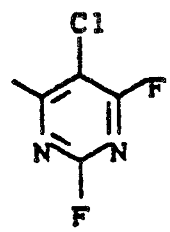 | Gelb |

Beispiel 26

0,1 Mol 7-Anthraniloylamino-4-hydroxy-2-naphthalinsulfonsäure werden in 400 ml Wasser angeschlagen und mit 17 g 2,4,6-Trifluor-5-chlorpyrimidin versetzt, wobei die freiwerdende Säure mit verdünnter Natronlauge neutralisiert wird. Nach beendeter Kondensation setzt man bei pH 6 die aus 20,3 g 1-Amino-2-sulfo-4-methoxybenzol bereitete Diazotierung zu. Nach dem Aussalzen, Absaugen, Trocknen und Mahlen erhält man ein rotes wasserlösliches Farbstoffpulver, das nach einem für Reaktivfarbstoffe üblichen Applikationsverfahren ein klares Scharlach auf Baumwolle färbt.

Der Farbstoff entspricht der Formel

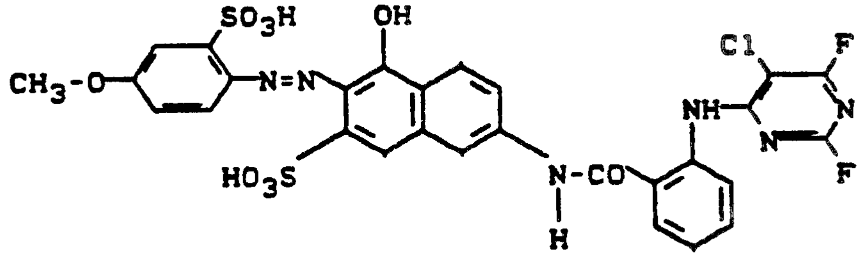

Nach der Arbeitsweise dieses Beispiels erhält man unter Verwendung der nachfolgend genannten

Diazokomponenten gleichfalls wertvolle Reaktivfarbstoffe.

| Beispiel | Diazokomponente | Farbton |
|---|---|---|
| 27 | 1-Amino-2-sulfo-4-ethoxybenzol | Scharlach |
| 28 | 1-Amino-2-sulfobenzol | Orange |
| 29 | 1-Amino-2-sulfo-4-methylbenzol | Orange |
| 30 | 1-Amino-2-sulfo-4-chlorbenzol | Orange |
| 31 | 1-Amino-2,5-disulfo-4-methoxybenzol | Scharlach |

| Beispiel | Diazokomponente | Farbton |
|---|---|---|
| 32 | 1-Amino-2,4-dimethyl-6-sulfobenzol | Orange |
| 33 | 1-Amino-2,5-disulfo-4-methylbenzol | Orange |
| 34 | 1-Amino-2,5-disulfobenzol | Orange |
| 35 | 1-Amino-2,4-disulfobenzol | Orange |
| 36 | 2-Amino-1-sulfonaphthalin | Orange |
| 37 | 2-Amino-1,5-disulfonaphthalin | Orange |
| 38 | 2-Amino-1,5,7-trisulfonaphthalin | Orange . |
| 39 | 2-Amino-3,6-disulfonaphthalin | Scharlach |
| 40 | 2-Amino-3,6,8-trisulfonaphthalin | Scharlach |

Beispiel 41

43,8 g 8-(2'-Aminobenzoylamino)-1-hydroxy-3,6-disulfonaphthalin werden in 400 ml Wasser gelöst. Bei pH 4 bis 5 und 0 °C tropft man 17 g 2,4,6-Trifluor-5-chlorpyrimidin ein. Nach beendigter Kondensation wird die aus 17,3 g 1-Amino-2-sulfobenzol bereitete Diazotierung zugesetzt und die Kupplung durch Einstellen eines pH-Wertesvon 6 bis 7 ausgeführt. Aus der klaren roten Lösung wird der Farbstoff durch Kochsalz abgeschieden, abgesaugt, getrocknet und gemahlen. Es resultiert ein rotes, wasserlösliches Farbstoffpulver, das nach einem der für Reaktivfarbstoffe üblichen Applikationsverfahren klare rote Färbungen gibt.

Der Farbstoff entspricht der Formel

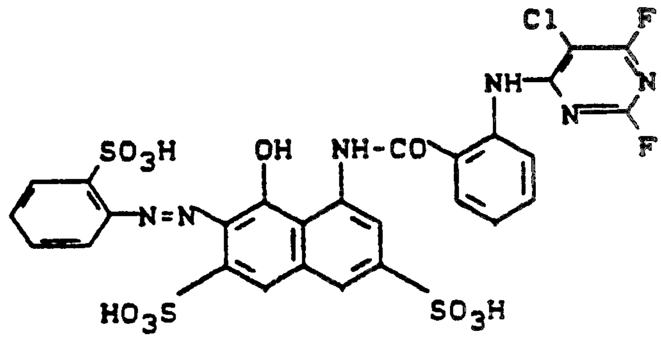

Nach der Arbeitsweise dieses Beispiels geben die nachfolgend aufgeführten Diazokomponenten gleichfalls wertvolle Reaktivfarbstoffe.

| Beispiel | Diazokomponente | Farbton |
|---|---|---|
| 42 | 1-Amino-2-sulfo-4-methylbenzol | blaust. Rot |
| 43 | 1-Amino-2,5-disulfobenzol | Rot |
| 44 | 1-Amino-benzol | Rot |

| Beispiel | Diazokomponente | Farbton |
|---|---|---|
| 45 | 1-Amino-2-sulfo-4-chlorbenzol | Rot |
| 46 | 1-Amino-4-sulfobenzol | Rot |
| 47 | 1-Amino-4-carboxybenzol | Rot |
| 48 | 1-Amino-2,5-disulfo-4-methoxybenzol | stark blaust. Rot |
| 49 | 1-Amino-2-sulfo-4-methoxybenzol | " |
| 50 | 2-Amino-1-sulfonaphthalin | blaust. Rot |
| 51 | 2-Amino-1,5-disulfonaphthalin | " |
| 52 | 2-Amino-1,5,7-trisulfonaphthalin | " |

Nach den Angaben von Beispiel 41 erhält man weitere wertvolle Farbstoffe, wenn man anstelle von 8-(2'-Aminobenzoylamino)-1-hydroxy-3,6-disulfonaphthalin 8-(2'-Aminobenzoylamino)-1-hydroxy-3,5-disulfonaphthalin verwendet und folgende Diazokomponenten einsetzt:

| Beispiel | Diazokomponente | Farbton |
|---|---|---|
| 53 | o-Sulfanilsäure | gelbst. Rot |
| 54 | 1-Amino-2-sulfo-4-methylbenzol | Rot |
| 55 | 1-Amino-2,5-disulfobenzol | gelbst. Rot |
| 56 | 1-Aminobenzol | Rot |
| 57 | 1-Amino-2-sulfo-4-chlorbenzol | Rot |
| 58 | 1-Amino-4-sulfobenzol | Rot |
| 59 | 1-Amino-4-carboxybenzol | Rot |
| 60 | 1-Amino-2,5-disulfo-4-methoxy-benzol | blaust. Rot |
| 61 | 1-Amino-2-sulfo-4-methoxybenzol | blaust. Rot |
| 62 | 2-Amino-1-sulfonaphthalin | " |
| 63 | 2-Amino-1,5-disulfonaphthalin | " |
| 64 | 2-Amino-1,5,7-trisulfonaphthalin | " |

Beispiel 65

25,2 g 2-Amino-1-sulfo-5-aminomethylnaphthalin werden in 500 ml Eiswasser mit 28 ml konz. Salzsäure verrührt. Man tropft eine Lösung, die 7 g Natriumnitrit enthält, ein. Nach Entfernen des Nitrit-Überschusses mit Amidosulfonsäure wird die Diazotierung zu einer Anschlämmung von 42,8 g 8-(2'-Aminobenzoylamino)-1-hydroxy-3,5-disulfonaphthalin in 500 ml Wasser gegeben.

Nach beendigter Kupplung wird der Farbstoff abgesaugt und die feuchte Paste in 1 l Wasser von 15 bis 20° C angerührt. Man tropft dann 34 g 2,4,6-Trifluor-5-chlorpyrimidin ein und hält den pH zwischen 8 und 9 mit verd. Natronlauge. Aus der Lösung, die während der Acylierung entstanden ist, wird der Farbstoff ausgesalzen, abgesaugt, getrocknet und gemahlen. Das rote Farbstoffpulver ist in Wasser leicht löslich.

Der Farbstoff entspricht der Formel

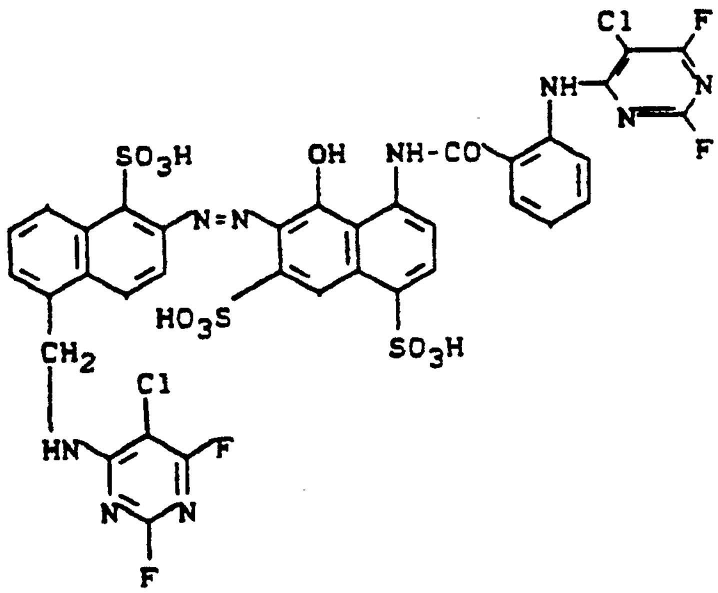

Nach einem der für Reaktivfarbstoffe üblichen Applikationsverfahren, erhält man damit auf Baumwolle klare blaustichig rote Färbungen.

Beispiel 66

Nach der Arbeitsweise wie in Beispiel 65 angegeben, erhält man unter Verwendung von 8-(2'-Aminobenzoylamino)-1-hydroxy-3,6-disulfonaphthalin als Kupplungskomponente gleichfalls einen wertvollen Reaktivfarbstoff, der Baumwolle in blaustichig rotem Farbton anfärbt.

Beispiel 67

In die nach dem in Beispiel 26 beschriebenen Verfahren hergestellte Lösung des Kondensationsproduktes aus 7-Anthraniloylamino-4-hydroxy-2-naphthalinsulfonsäure und 2-Trichlormethyl-4,6-difluor-5-chlorpyrimidin wird eine Suspension der Diazoniumverbindung aus 0,1 mol 2-Aminonaphthalin-4,6,8-trisulfonsäure in 250 Volumenteilen Wasser gegeben und die Kupplung durch Zugabe von 20 Teilen Natriumbicarbonat zu Ende geführt. Die so erhaltenen Kupplungslösung wird mit 250 Teilen einer 20 %igen Natriumacetatlösung und 250 Teilen einer 20 %igen Kupfersulfatlösung versetzt. Man tropft dann 3 %ige $H_2O_2$-Lösung dazu, bis die oxidative Kupferung beendet ist. Der Farbstoff wird ausgesalzen, abfiltriert, getrocknet und gemahlen. Man erhält ein dunkles Pulver, das sich in Wasser mit violetter Farbe löst und Baumwolle in klaren blauvioletten Farbtönen färbt.

Der Farbstoff entspricht der Formel

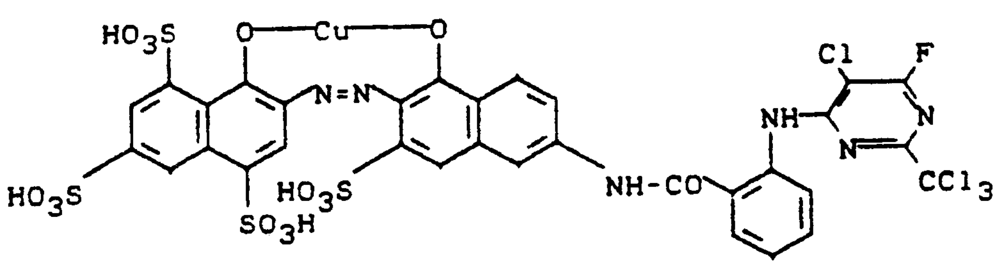

Beispiel 68

0,1 Mol des Farbstoffs

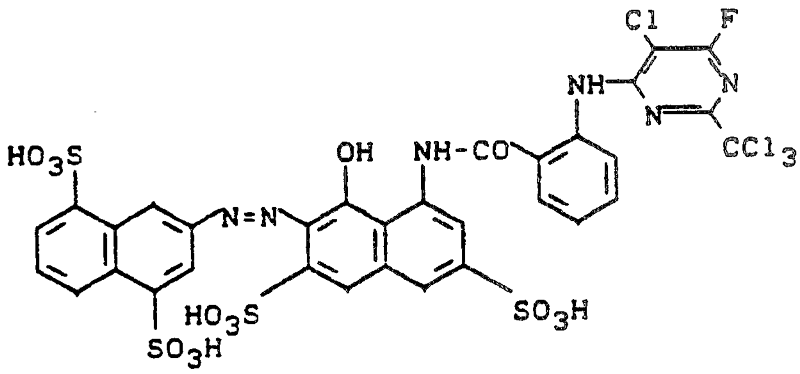

werden in 1 l Wasser gerührt und mit 28 g $CuSO_4$ . 5 $H_2O$ und 42 g NaAc . 3 $H_2O$ versetzt. Man tropft dann 3 %ige $H_2O_2$-Lösung zu, bis die oxidative Kupferung beendet ist. Der Farbstoff wird ausgesalzen, abfiltriert, getrocknet und gemahlen. Man erhält ein schwarzblaues Pulver, das sich leicht in Wasser mit blauer Farbe löst. Der Farbstoff entspricht der Formel

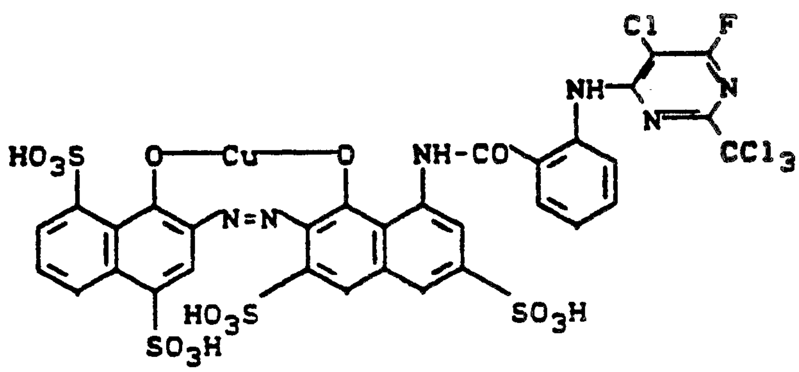

und färbt Baumwolle in blauen Tönen.

Der für dieses Beispiel verwendete metallfreie Azofarbstoff kann hergestellt werden durch Diazotierung von 2-Amino-4,8-disulfonaphthalin, Kupplung mit 1-Hydroxy-3,6-disulfo-8-(2'-aminobenzoylamino)-naphthalin und Acylierung mit 2-Trichlormethyl-4,6-difluor-5-chlorpyrimidin.

## Beispiel 69

0,1 Mol des Farbstoffs

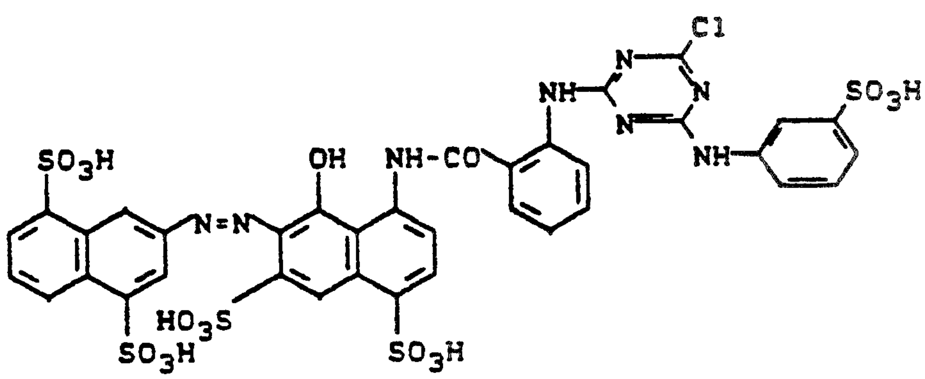

werden in 1 l Wasser angerührt und mit 28 g $CuSO_4$ . 5 $H_2O$ und 42 g NaAc . 3 $H_2O$ versetzt. Man tropft

dann 3 %ige $H_2O_2$-Lösung zu, bis die oxidative Kupferung beendet ist. Der Farbstoff wird ausgesalzen, abfiltriert, getrocknet und gemahlen. Man erhält ein schwarzblaues Pulver, das sich leicht in Wasser mit blauer Farbe löst.

Der Farbstoff entspricht der Formel

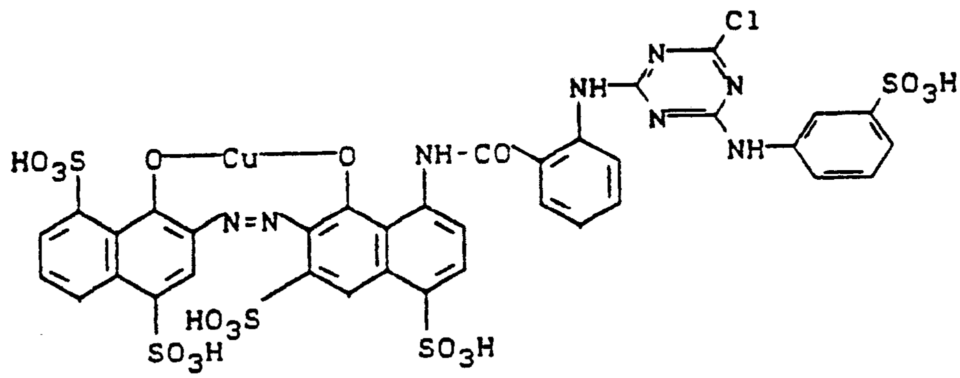

und färbt Baumwolle nach einem der für Reaktivfarbstoffe üblichen Applikationsverfahren blau.

Der für dieses Beispiel verwendete metallfreie Azofarbstoff kann hergestellt werden durch Diazotierung von 2-Amino-4,8-disulfonaphthalin, Kupplung mit dem Kondensationsprodukt aus 1-Hydroxy-3,5-disulfo-8-(2′-aminobenzoylamino)-naphthalin, 2,4,6-Trichlor-triazin und Metanilsäure.

Wenn man nach den Angaben dieses Beispiels verfährt, jedoch anstelle des dort verwendeten kupferfreien Farbstoffs Verbindungen einsetzt, die durch Diazotieren der in Spalte 1 aufgeführten Diazokomponenten, Kupplung mit den in Spalte 2 genannten Kupplungskomponenten erhältlich sind, so resultieren gleichfalls weitere wertvolle Farbstoffe, die Baumwolle in der angegebenen Nuance färben.

| Bsp. | Diazokomponente | Kupplungskomponente | Farbton auf BW |
|---|---|---|---|
| 70 | 2-Amino-5-sulfonaphthalin | 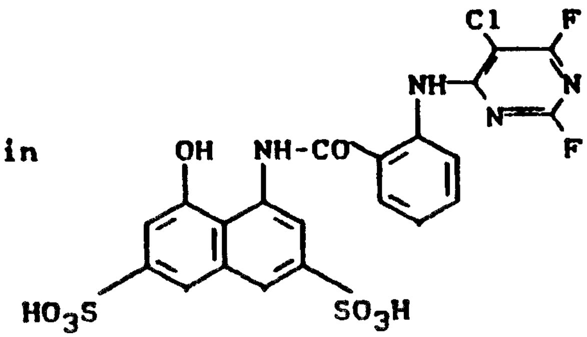 | Blau |
| 71 | 2-Amino-4,6,8-trisulfonaphthalin | " | " |
| 72 | 2-Amino-3,6-disulfonaphthalin | " | " |
| 73 | 2-Amino-6,8-disulfonaphthalin | " | " |
| 74 | 2-Amino-5,7-disulfonaphthalin | " | " |
| 76 | 1-Amino-4,7-disulfonaphthalin | " | " |
| 77 | 1-Amino,3,6-disulfonaphthalin | " | " |

| Bsp. | Diazokomponente | Kupplungskomponente | Farbton auf BW |
|---|---|---|---|
| 78 | 2-Amino-5-sulfonaphthalin | 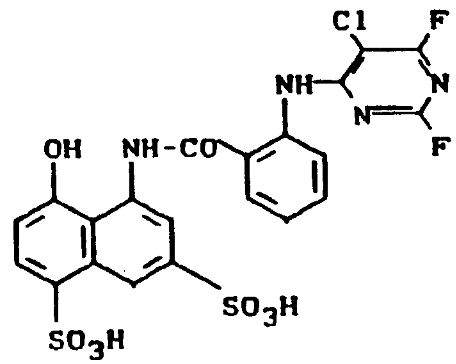 | Blau |
| 79 | 2-Amino-4,6,8-trisulfonaphthalin | " | " |
| 80 | 2-Amino-3,6-disulfonaphthalin | " | " |
| 81 | 2-Amino-6,8-disulfonaphthalin | " | " |
| 82 | 2-Amino-5,7-disulfonaphthalin | " | " |
| 83 | 1-Amino-4,6-disulfonaphthalin | " | " |
| 84 | 1-Amino-4,7-disulfonaphthalin | " | " |
| 85 | 1-Amino-3,6-disulfonaphthalin | " | " |

Beispiel 86

0,1 Mol des 1:2-Chromkomplexes der Formel

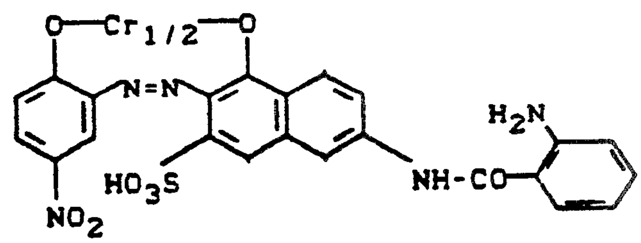

wird in 1 l Wasser von 20° C verrührt. Man tropft bei pH 5 bis 6 37 g des Gemisches $Fx_1/Fx_2$ ein. Nach beendeter Kondensation wird der Farbstoff ausgesalzen, abgesaugt, getrocknet und gemahlen. Es resultiert ein schwarzes wasserlösliches Pulver.

$Fx_1$: ca. 28 %

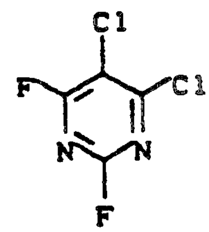

$Fx_2$: ca. 72 %

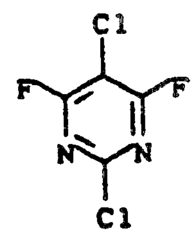

Der Farbstoff entspricht der Formel

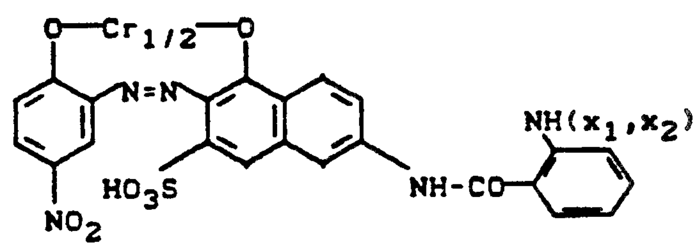

Er gibt graue bis schwarze Färbungen auf Baumwolle.

Beispiel 87

Entsprechend der Arbeitsweise des Beispiels 1 wird 0,1 Mol 2-Amino-5-anthraniloylamino-benzolsulfonsäure mit 2,4,6-Trifluor-5-chlorpyrimidin kondensiert.

Nach beendigter Kondensation wird soviel Wasser zugesetzt, daß eine klare Lösung entsteht. Man gibt dann 7 g Natriumnitrit zu und läßt die Lösung in eine Vorlage aus 28 ml konz. Salzsäure und 200 ml Eiswasser einlaufen. Nach Entfernen des im Überschuß vorhandenen Nitrits mit Amidosulfonsäure, wird die Suspension in eine neutrale Lösung von 39,5 g 1-Hydroxy-3,6-disulfo-7-phenylaminonaphthalin in 500 ml Wasser, die mit 28 g Natriumhydrogencarbonat versetzt wird, eingetragen.

Nach beendeter Kupplung wird der Farbstoff mit 10 Vol.-% Natriumchlorid ausgesalzen, abgesaugt, im Vakuumtrockenschrank getrocknet und gemahlen. Man erhält ein in Wasser leicht lösliches braunes Farbstoffpulver, das Baumwolle nach einem für Reaktivfarbstoffe üblichen Applikationsverfahren in tiefen

Brauntönen färbt.

Der Farbstoff entspricht der Formel

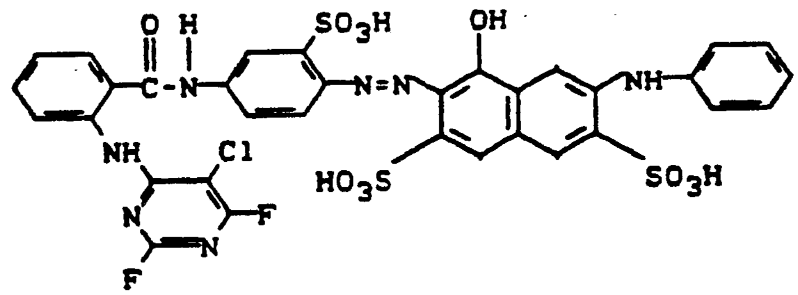

Beispiel 88

0,1 Mol 1-Amino-4-(3'-anthraniloylaminoanilino)-anthrachinon-2,4',6'-trisulfonsäure wird in Wasser mit Natriumhydroxid neutral gelöst. Dann kondensiert man in zweiter Stufe mit dem Kondensationsprodukt aus Trifluortriazin und Orthanilsäure, wobei die entstehende Säure mit Sodalösung neutralisiert wird. Nach beendeter Acylierung wird mit Natriumchlorid ausgesalzen, isoliert und getrocknet. Der Farbstoff der Formel

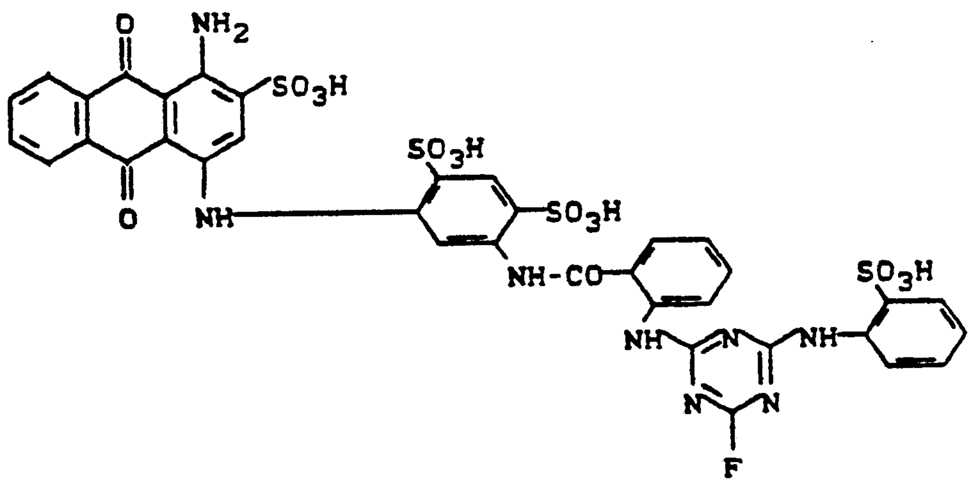

färbt Baumwolle in klaren blauen Tönen mit guten Naß- und Lichtechtheiten.

Beispiel 89

0,1 Mol des in üblicher Weise durch Einwirkung von Chlorsulfonsäure und Thionylchlorid auf Kupferphthalocyanin frisch hergestellten Kupferphthalocyanin-tetrasulfochlorids werden in Form des feuchten, gut gewaschenen Saugkuchens in 1000 ml Wasser und 500 g Eis suspendiert und mit 0,1 Mol 1-Amino-3-anthraniloylaminobenzol umgesetzt und anschließend mit 2,4,6-Trifluor-5-chlorpyrimidin acyliert.

Nach beendeter Kondensation wird der Reaktivfarbstoffder Formel

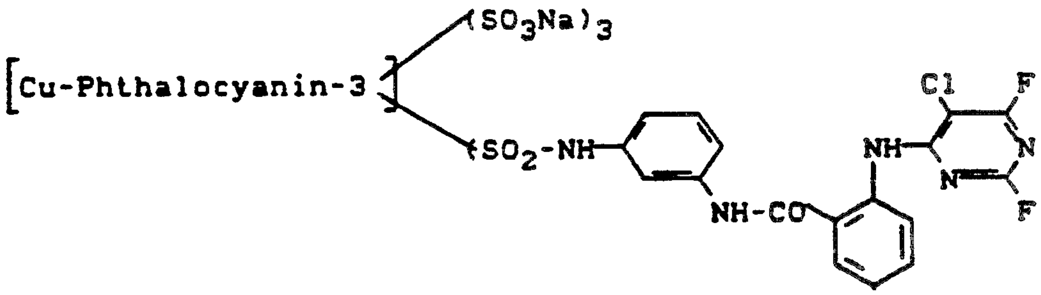

ausgesalzen, abgesaugt, gewaschen und im Vakuum getrocknet. Er stellt ein dunkelblaues, in Wasser mit blauer Farbe lösliches Pulver dar, das Baumwolle in klaren grünstichig blauen Farbtönen färbt.

Einen weiteren wertvollen Farbstoff erhält man, wenn man anstelle des Cu-Phthalocyanins das Ni-Phthalocyanin einsetzt:

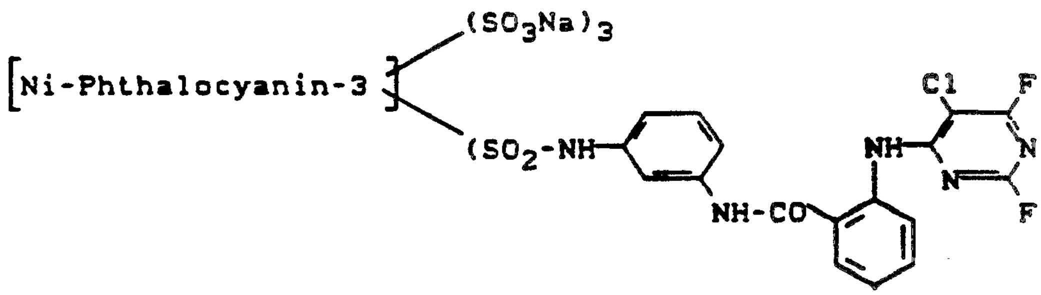

Dieser Farbstoff färbt Baumwolle grün.

Beispiel 90

0,2 Mol der Verbindung

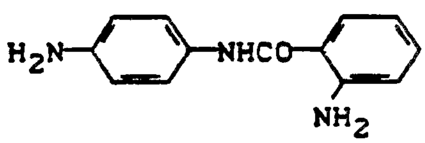

dargestellt durch Umsetzung von 1,4-Diaminobenzol mit Isatosäureanhydrid werden bei 80° C mit 0,1 Mol Chloranil in Isopropanol und Gegenwart von Natriumacetat kondensiert. Das dunkelbraune, ausgefallene Produkt der Formel

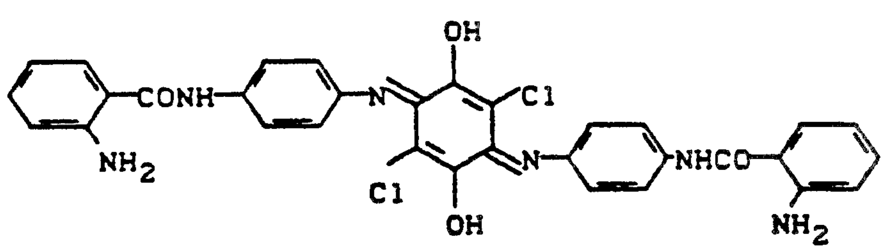

wird abgesaugt, getrocknet und in 250 ml 20 %iges Oleum eingetragen. Zu diesem Ansatz fügt man Kaliumperoxodisulfat hinzu und erwärmt stufenweise bis auf 40° C bis 50° C. Anschließend wird auf Eis ausgetragen und die blaue Farbbase der Struktur

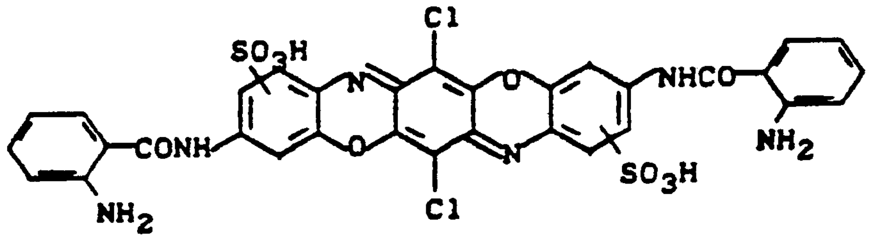

isoliert. Kondensation mit dem Umsetzungsprodukt aus 2,4,6-Trifluortriazin und Orthanilsäure führt zu dem Farbstoff der Formel

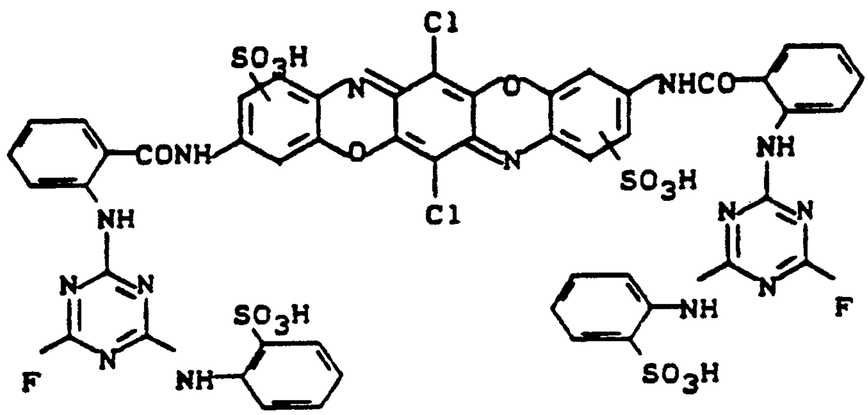

der Baumwolle in königsblauen Tönen färbt.

Beispiel 91

0,1 Mol der nach den üblichen Methoden zu erhaltenen Farbbase der Formel

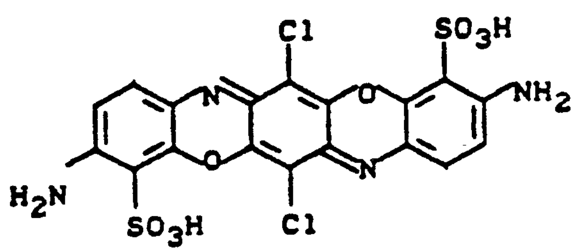

werden mit der äquivalenten Menge Isatosäureanhydrid in Wasser bei 40° C zur Verbindung der nachstehenden Formel umgesetzt

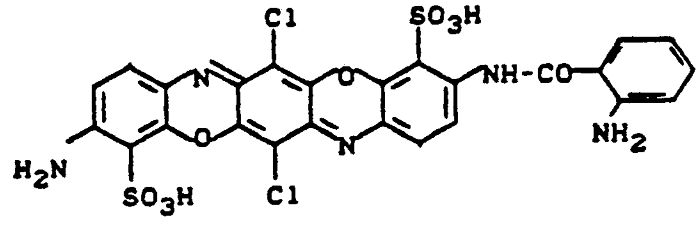

Kondensation mit 0,2 Mol 2,4,6-Trichlortriazin und nachfolgende Umsetzung mit 1-Amino-4-(Sulfatoethylsulfonyl)-benzol liefert einen Farbstoff der Formel

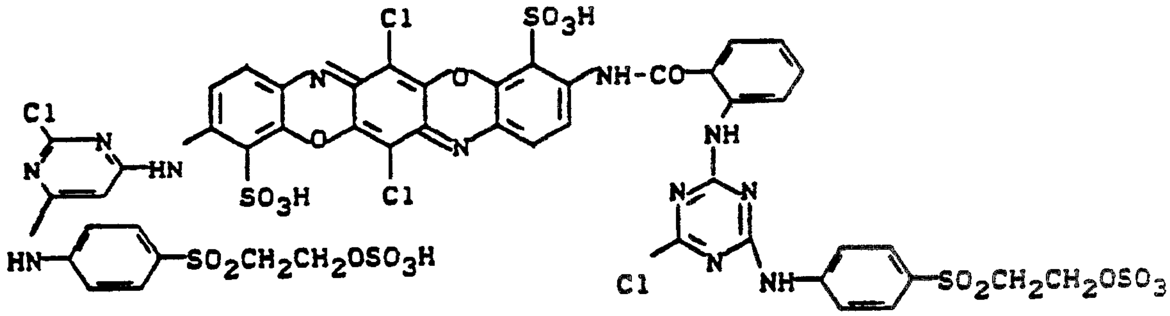

der Baumwolle und Wolle in einem klaren Blau anfärbt.

Beispiel 92

0,1 Mol der Verbindung der Formel

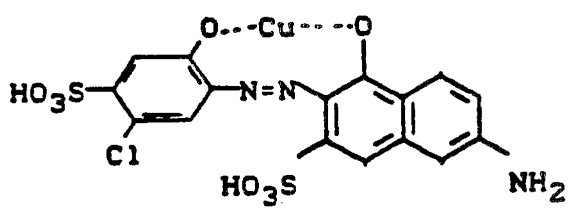

werden pH-kontrolliert bei pH 2,8 diazotiert und mit der bereits in Beispiel 41 beschriebenen Kupplungskomponente bei pH 6,5 gekuppelt. Nach der üblichen Aufarbeitung erhält man den Farbstoff der Formel

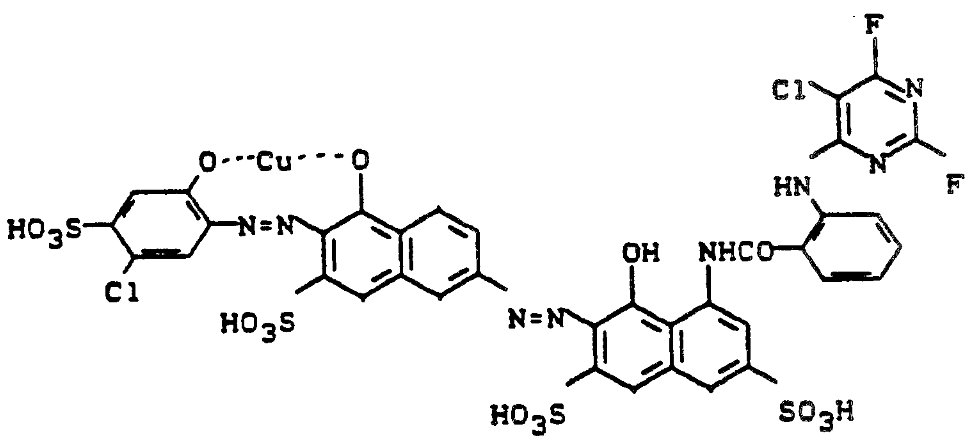

der Baumwolle in blauen Tönen färbt.

Beispiel 93

Ersetzt man im Beispiel 92 die Diazokomponente durch die Verbindung

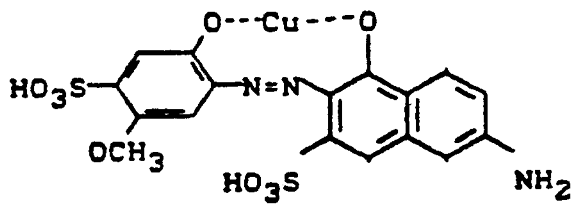

erhält man den Farbstoff der Formel

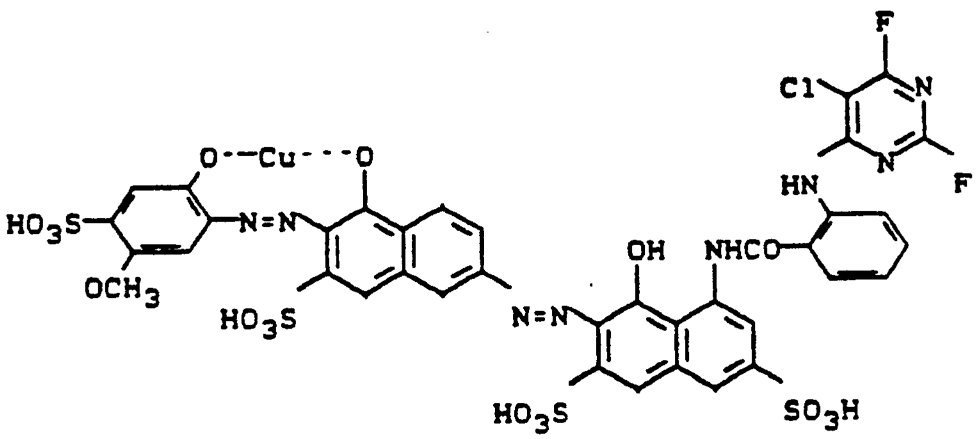

der Baumwolle ebenfalls in blauen Tönen färbt.

Beispiel 94

Arbeitet man analog Beispiel 1 und setzt anstelle von 2-Amino-4-anthraniloylamino-benzolsulfonsäure 2-Amino-5-anthraniloylamino-benzolsulfonsäure und anstelle von 1-Ethyl-3-sulfomethyl-4-methyl-6-hydroxy-pyridon-(2) 1-Methyl-3-sulfomethyl-4-methyl-6-hydroxy-pyridon-(2) ein, erhält man den Farbstoff der Formel

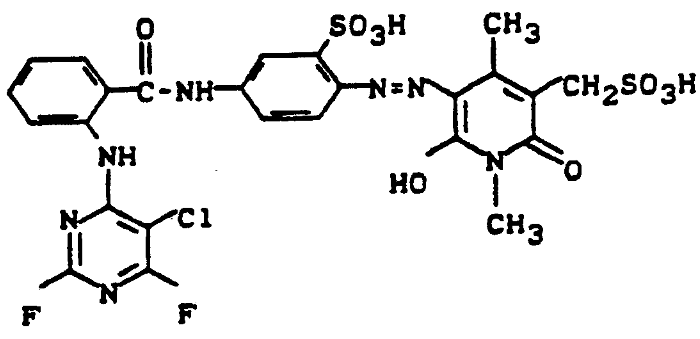

der Baumwolle und Wolle in gelben Tönen anfärbt.

Beispiel 95

Ersetzt man im Beispiel 12 die Diazokomponente durch die Diazokomponente des Beispiels 94, erhält man einen Farbstoff der Formel

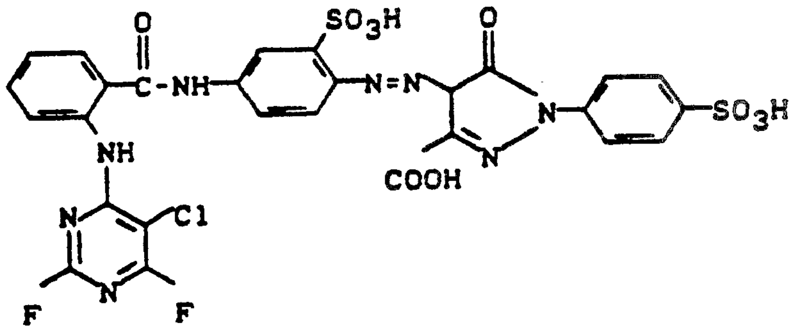

der Baumwolle in gelben Tönen färbt.

Beispiel 96

0,1 Mol 4-Anthraniloylamino-5-hydroxy-2,7-naphthalindisulfonsäure werden in 250 ml Wasser angeschlagen und mit Essigsäureanhydrid bei 20° C acyliert. Durch Kupplung mit diazotierten 1-Amino-4-(sulfatoethylsulfonyl)-benzol bei pH 6 erhält man den Farbstoff der Formel

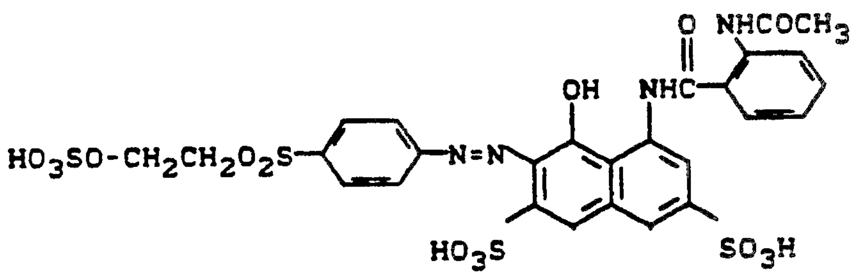

Der Farbstoff wird ausgesalzen, abgesaugt, getrocknet und gemahlen. Man erhält ein in Wasser leicht lösliches rotes Farbstoffpulver, das Baumwolle, Wolle und Polyamid in roten Tönen färbt.

Beispiel 97

0,2 Mol 4-Anthraniloylamino-5-hydroxy-2,7-naphthalindisulfonsäure werden in 500 ml Wasser angeschlagen und mit 0,1 Mol 2,4,6-Trichlortriazin zuerst bei 0 bis 5° C und pH 4 umgesetzt.

Nach der ersten Kondensation wird auf 40° C aufgeheizt und das zweite Chloratom ausgetauscht. 0,2 Mol 1-Amino-4-(sulfatoethylsulfonyl)-benzol werden mit Natriumnitrit diazotiert und nach Zerstörung des Nitritüberschusses

mit Amidosulfonsäure mit der oben beschriebenen Kupplungskomponente bei pH 6 gekuppelt. Nach beendeter Kupplung wird der Farbstoff ausgesalzen, isoliert, getrocknet und gemahlen. Das rote Farbstoffpulver, das man erhält, färbt Baumwolle und Wolle in roten Tönen. Der Farbstoff entspricht der Formel

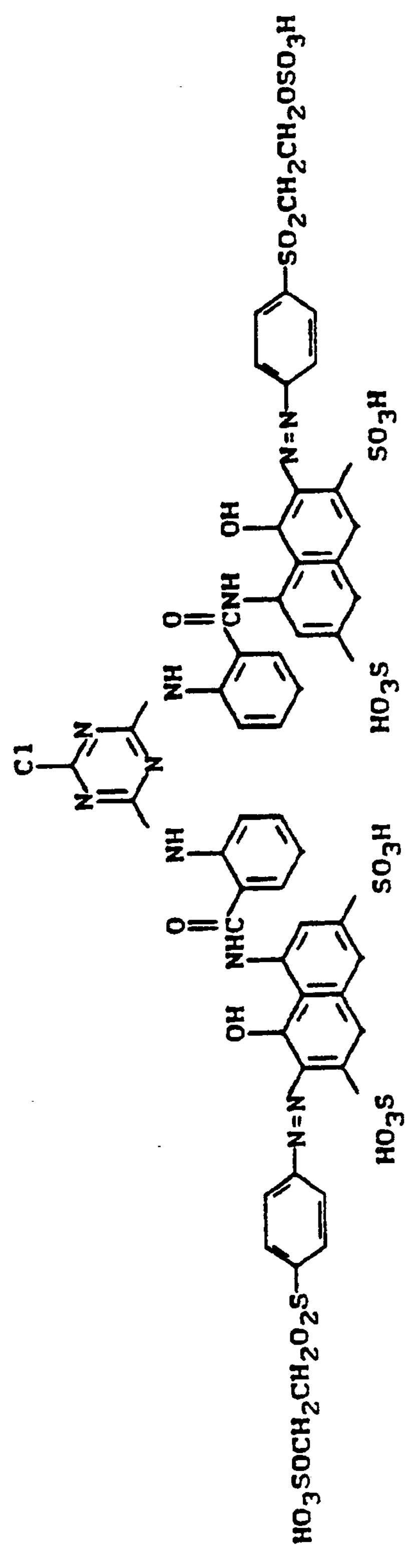

Beispiel 98

0,1 Mol 3-Aminobenzolsulfonsäure und 0,1 Mol 4-Aminobenzolsulfonsäure werden bei pH 4 bis 5 in 300

ml Wasser gelöst und bei -3 bis 0 °C und pH 4 mit 0,2 Mol 2,4,6-Trifluortriazin kondensiert. Der pH-Wert wird mit Natriumhydrogencarbonatlösung gehalten. Nach 15 Minuten gibt man diese Lösung zu einer Lösung von 0,2 Mol 4-Anthraniloylamino-5-hydroxy-2,7-naphthalindisulfonsäure in 600 ml Wasser und stellt bei 10 °C pH 6 ein. Nach beendeter Kondensation wird die Kupplungskomponente zwischenisoliert und erneut in Wasser angeschlagen. Man gibt diazotierte 2-Aminobenzolsulfonsäure hinzu und kuppelt bei pH 6 mit Sodalösung. Der Farbstoff der Formel

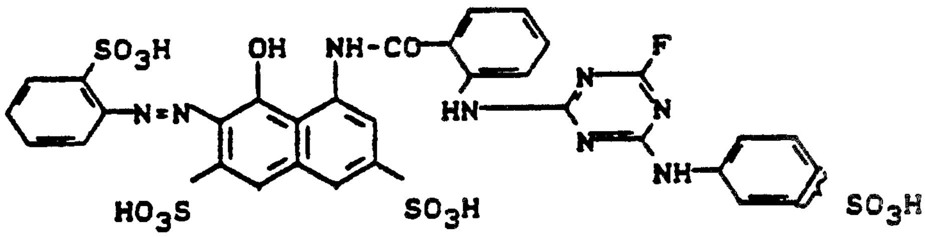

meta:para = 1:1

fällt nach beendeter Kupplung aus und wird isoliert und getrocknet. Das rote Pulver färbt Baumwolle in klaren roten Tönen.

Nach der Arbeitsweise dieses Beispiels erhält man bei Verwendung der nachfolgend aufgeführten Diazokomponenten gleichfalls wertvolle Reaktivfarbstoffe, die Baumwolle in roten bis blaustichig roten Tönen färben.

| Beispiel | Diazokomponente | Farbton |
|---|---|---|
| 99 | 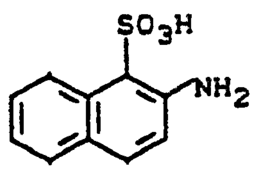 | blaustichig Rot |
| 100 | 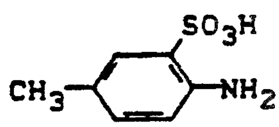 | " |
| 101 | 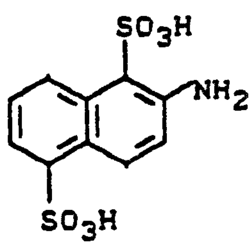 | " |

Beispiel 102

Ersetzt man im Beispiel 98 die 3- und die 4-Aminobenzolsulfonsäure durch 2-Aminobenzolsulfonsäure und führt ansonsten den Versuch wie im Beispiel angegeben durch, erhält man den Farbstoff der Formel

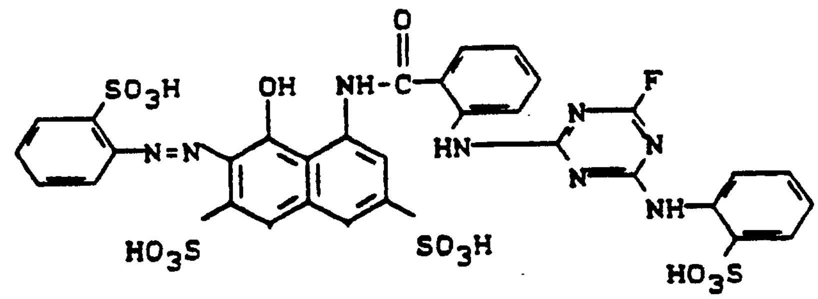

der Baumwolle in roten Tönen färbt.

Bei Verwendung der folgenden Diazokomponenten erhält man mit der Kupplungskomponente des Beispiels 102 ebenfalls wertvolle Reaktivfarbstoffe.

| Beispiel | Diazokomponente | Farbton |
|---|---|---|
| 103 | 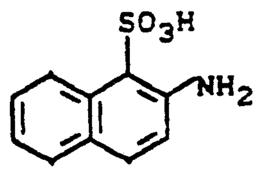 | blaustichig Rot |
| 104 | 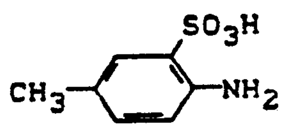 | " |
| 105 | 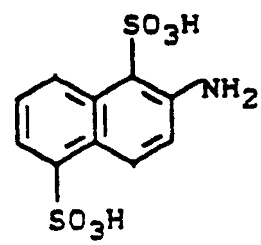 | " |

Beispiel 106

Führt man analog Beispiel 26 die Kondensation der 7-Anthraniloylamino-4-hydroxy-2-naphthalinsulfonsäure mit dem Kondensationsprodukt aus 2,4,6-Trifluortriazin mit 2-Amino-benzolsulfonsäure durch und arbeitet weiter wie dort beschrieben, erhält man den Farbstoff der Formel

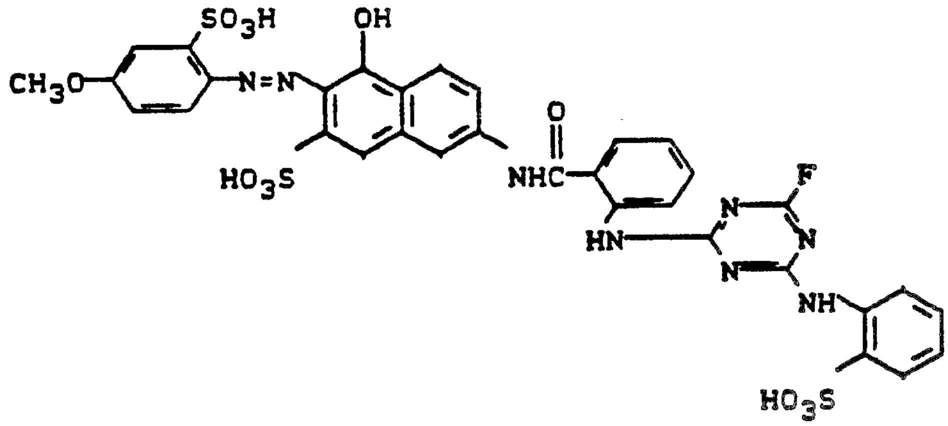

der Baumwolle nach den üblichen Applikationsverfahren in Scharlachtönen färbt.

Beispiel 107

Ersetzt man die Diazotierung im Beispiel 106 durch die Diazotierung der 2-Aminobenzolsulfonsäure, erhält man ebenfalls einen wertvollen Reaktivfarbstoff, der Baumwolle in orangen Tönen färbt. Der Farbstoff hat die Formel

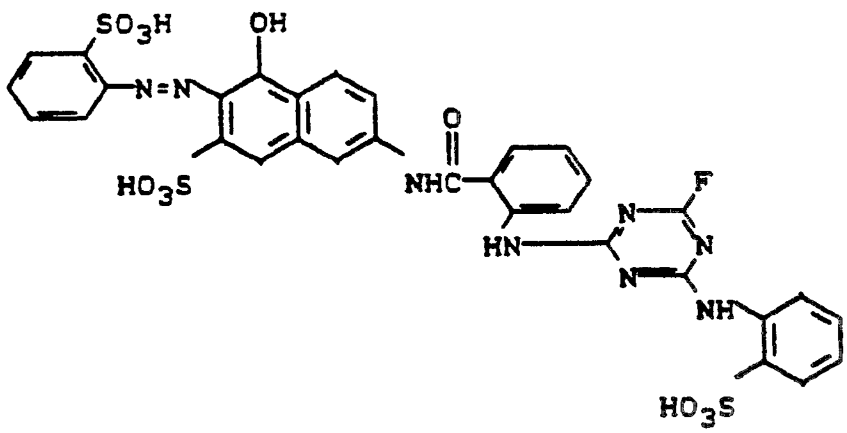

Beispiel 108

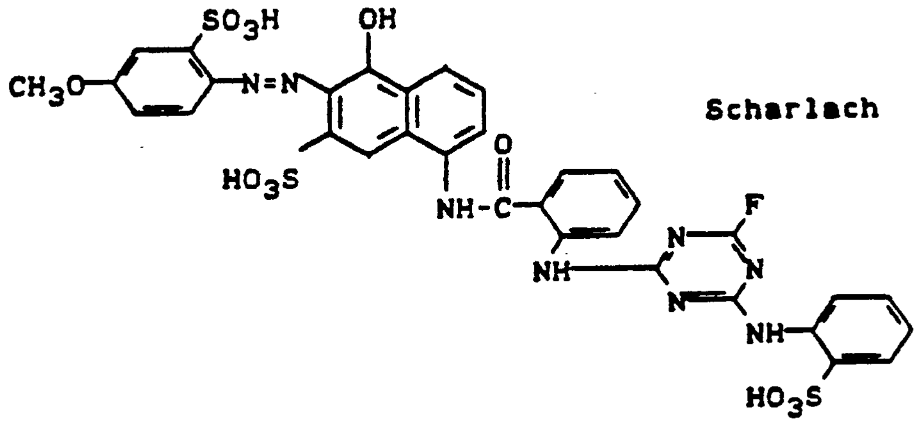

Scharlach

Nachfolgend werden noch einige Farbstoffe angegeben, die sich analog den bisher aufgeführten Beispielen herstellen lassen:

Beispiel 109

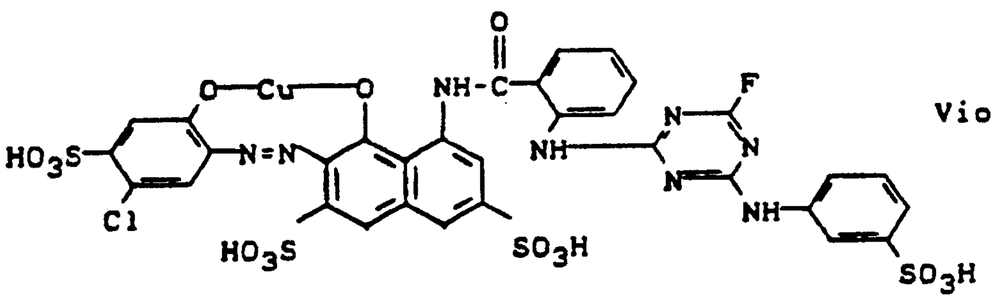

Violett

Beispiel 110

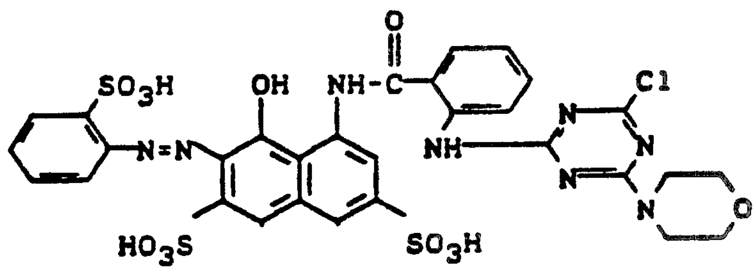

Rot

Beispiel 111

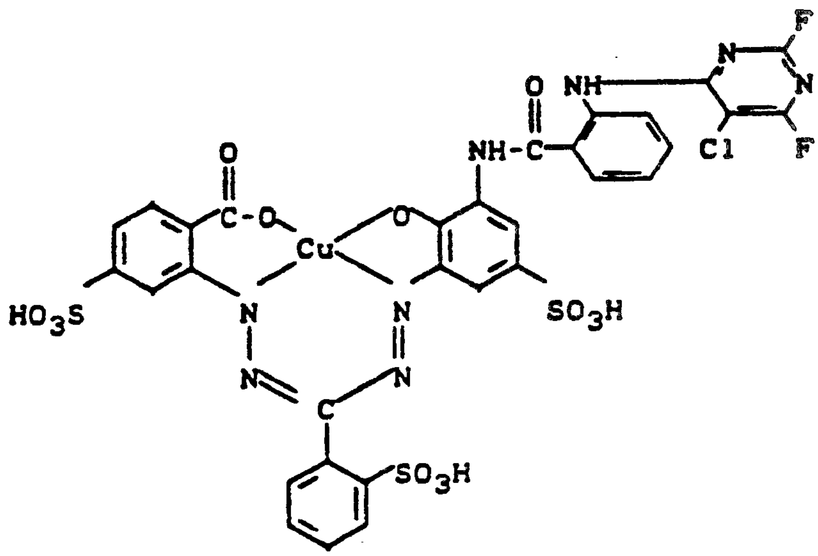

Blau

Beispiel 112

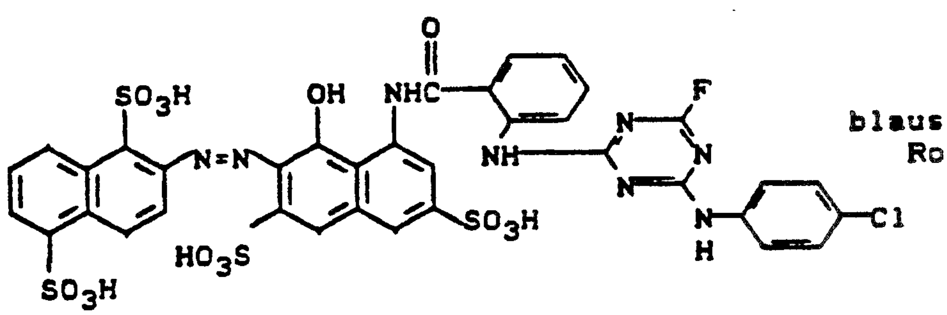

blaustichig Rot

Beispiel 113

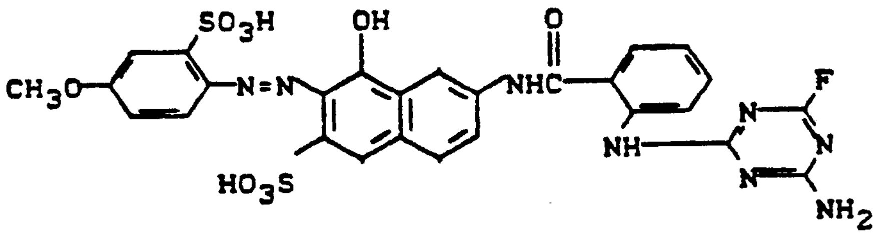

Scharlach

Beispiel 114

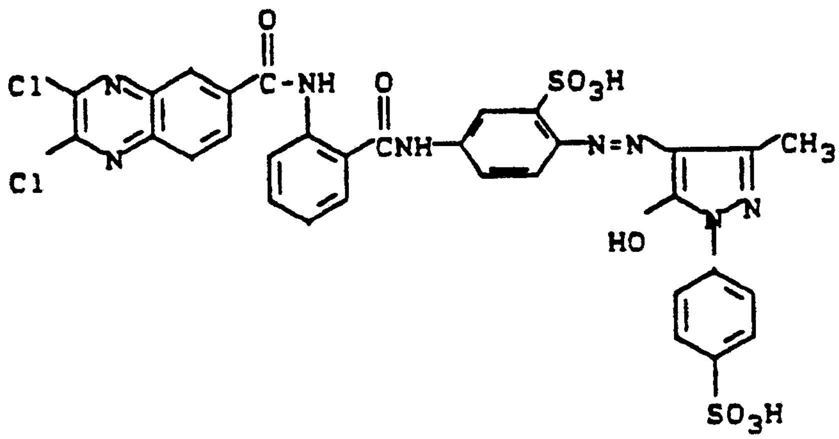

Gelb

Beispiel 115

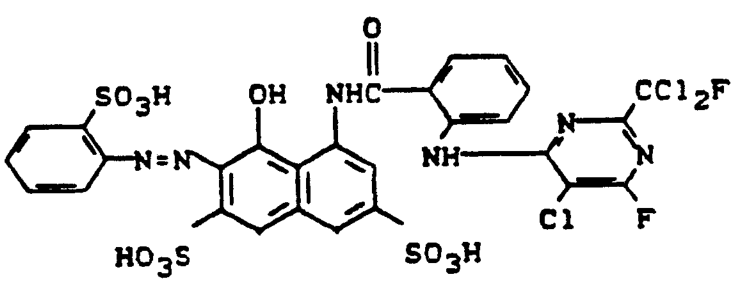

Rot

Beispiel 116

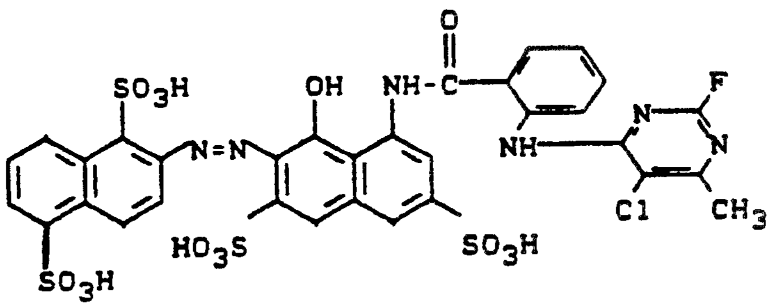

blaustichig Rot

Beispiel 117

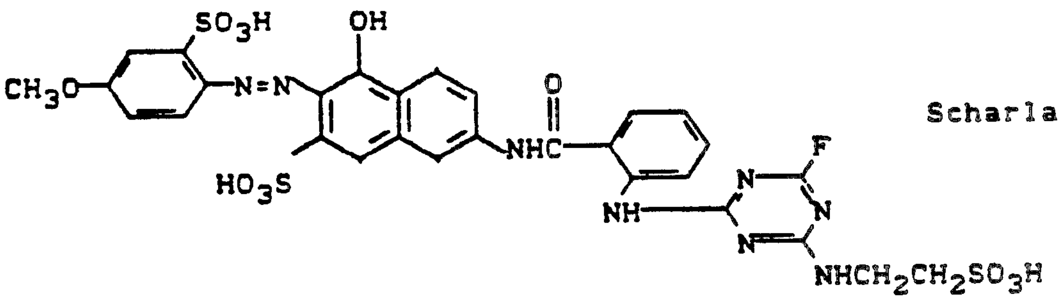

Scharlach

Beispiel 118

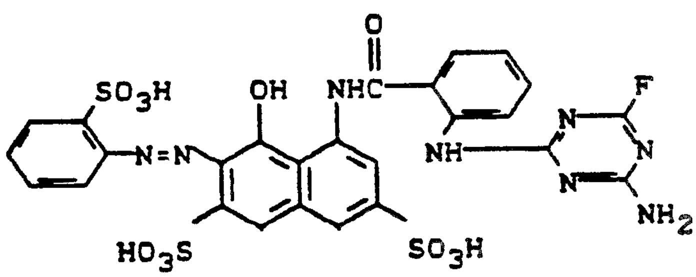

Rot

**Beispiel 119**

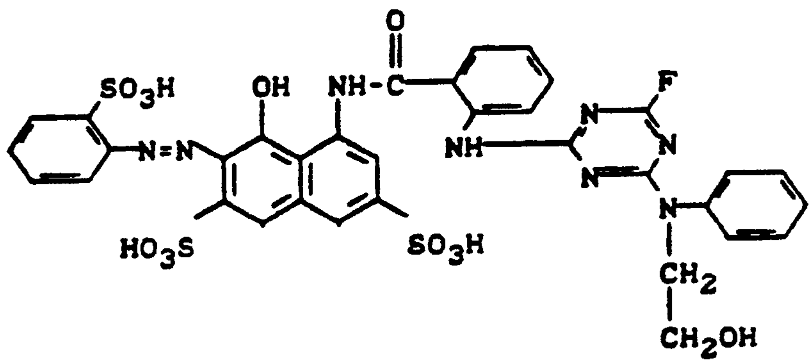

Rot

**Beispiel 120**

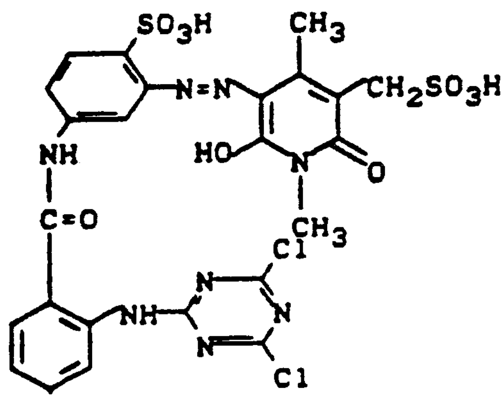

grünstichig Gelb

**Beispiel 121**

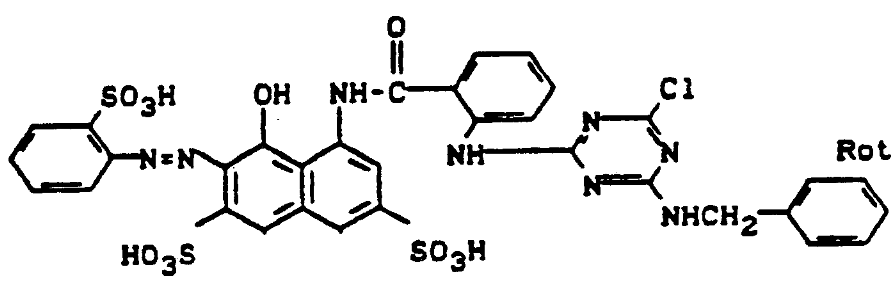

Rot

**Beispiel 122**

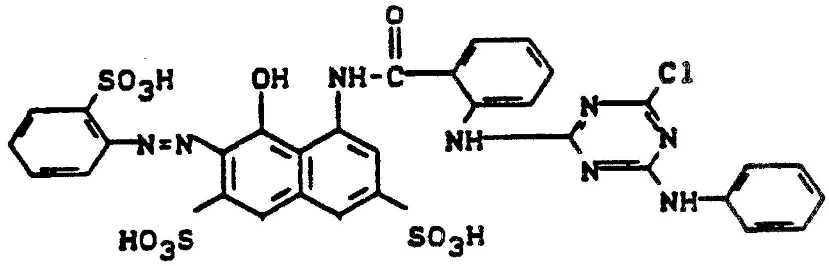

Rot

**Beispiel 123**

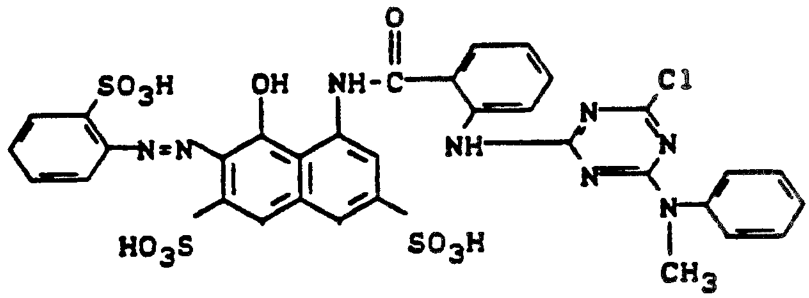

Rot

**Beispiel 124**

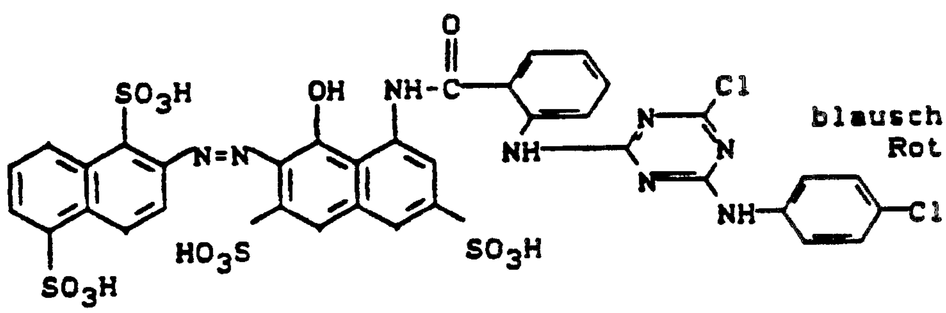

blauschichtig Rot

Beispiel 125

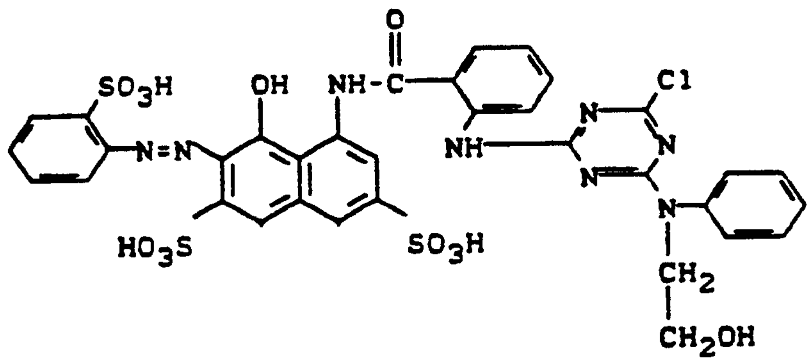

Rot

Beispiel 126

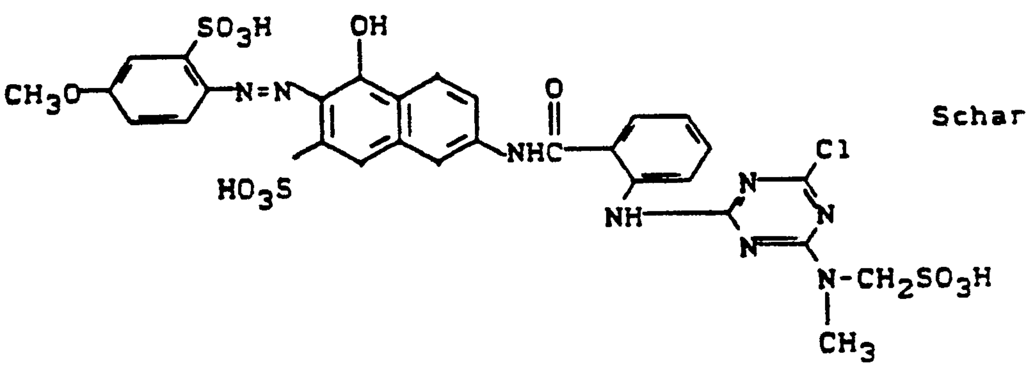

Scharlach

Beispiel 127

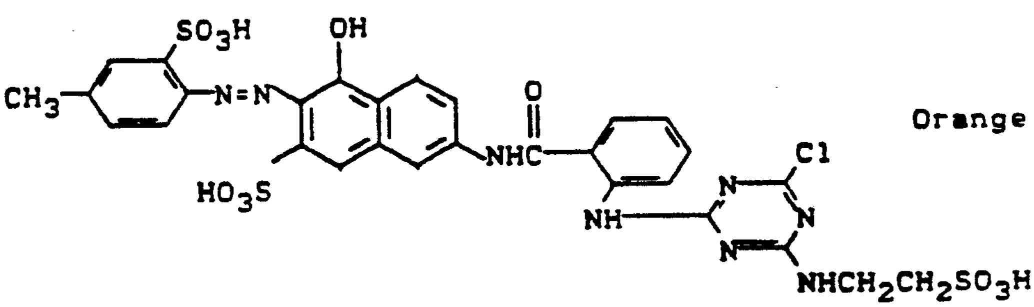

Orange

Beispiel 128

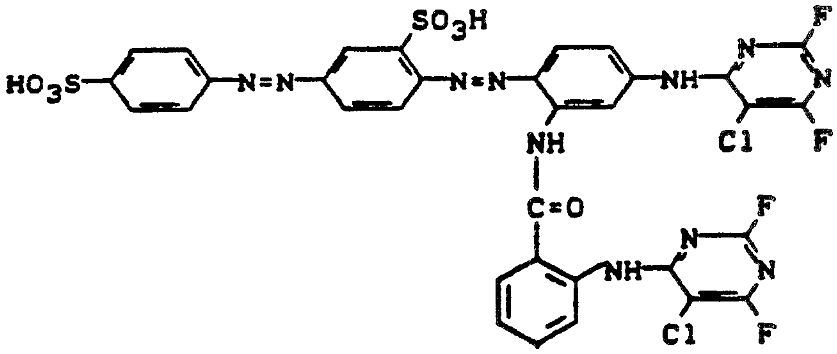

Orange

In der folgenden Tabelle sind λmax-Werte einiger ausgewählter Farbstoffe angegeben:

| Beispiel | λmax [nm] ($H_2O$) |
|---|---|
| 41 | 516 |
| 42 | 544 |
| 50 | 546 |
| 51 | 542 |
| 92 | 584 |
| 93 | 562 |
| 94 | 434 |
| 95 | 432 |
| 98 | 514 |
| 99 | 542 |
| 100 | 544 |
| 101 | 540 |
| 102 | 536 |
| 103 | 546 |
| 104 | 546 |
| 105 | 542 |
| 107 | 482 |
| 108 | 506 |
| 109 | 564 |

## Ansprüche

**1.** Farbstoffe der Formel

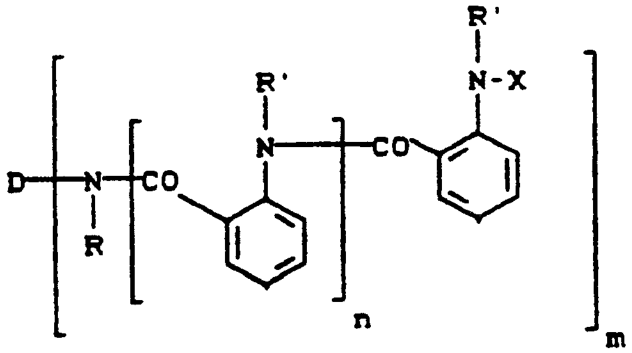

(1)

worin
D = Rest eines organischen Farbstoffes, insbesondere eines Farbstoffes der Mono- oder Polyazo-, Metallkomplexazo-, Antrhachinon-, Phthalocyanin-, Formazan-, Azomethin-, Dioxazin-, Phenazin-, Xanthen-, Thioxanthon-, Naphthochinon-, Stilben- oder Triphenylmethan-Reihe,
R = H oder $C_1$-$C_4$-Alkyl,
R′ = H oder $C_1$-$C_4$-Alkyl, insbesondere H oder Methyl,
m = 1 oder 2 und
n = 0 oder 1
X = nicht-faserreaktiver Acylrest oder faserreaktiver Rest.

2. Farbstoffe des Anspruchs 1 der Formeln

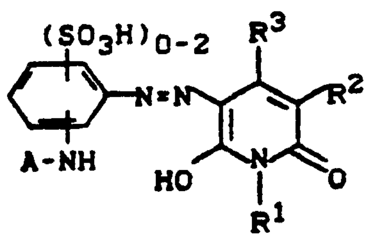

(3)

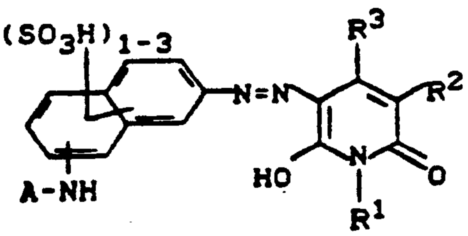

(4)

worin
$R^1$ = H, $C_1$-$C_4$-Alkyl, Aryl, β-Sulfoethyl,
$R^2$ = H, Cl, $SO_3H$, $CONH_2$, $CH_2SO_3H$, $CH_3$ und $SO_2CH_3$,
$R^3$ = H, $CH_3$, $CH_2$-$SO_3H$, $CO_2H$

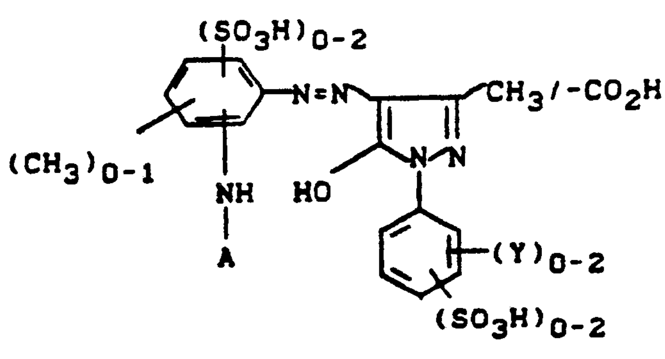

(5)

worin Y = Chlor oder Methyl

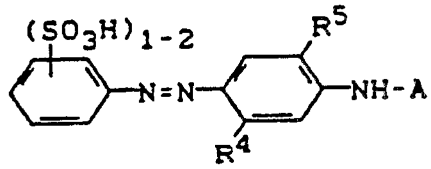

(6)

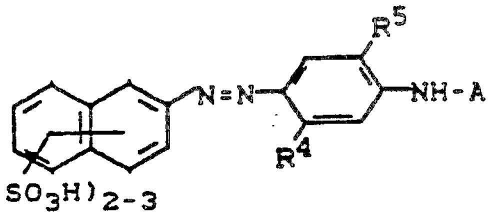

(7)

worin
$R^4$ = H, Methyl, Ethyl, Methoxy, Ethoxy, Acetylamino, Ureido, Phenylcarbonylamino, Mesylamino, Halogen,
$R^5$ = H, Methyl, Ethyl, Methoxy, Ethoxy, Sulfo

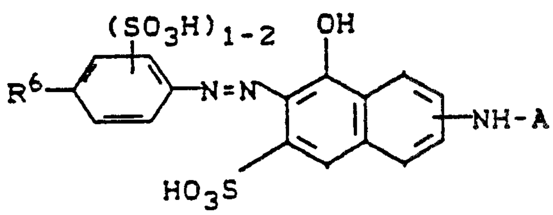

(8)

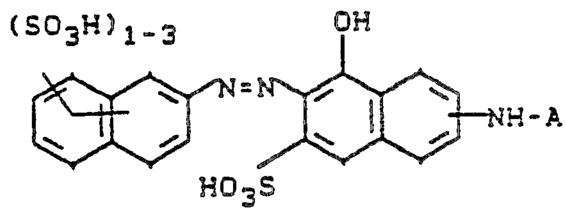

(9)

worin
$R^6$ = H, Methyl, Ethyl, Methoxy, Ethoxy, Chlor oder Acetylamino,

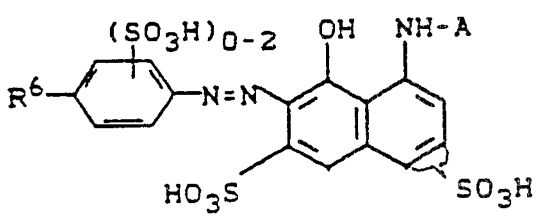

(10)

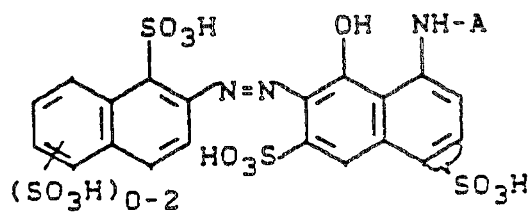

(11)

worin
$R^6$ = die oben angegebene Bedeutung hat,

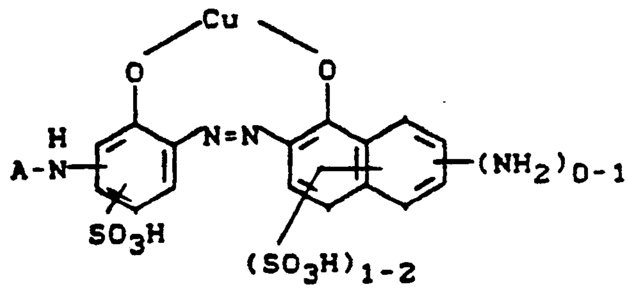

(12)

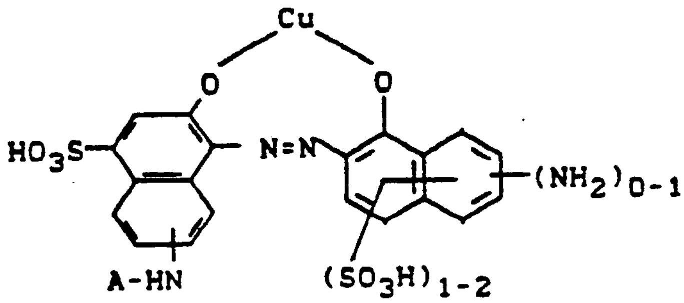

(13)

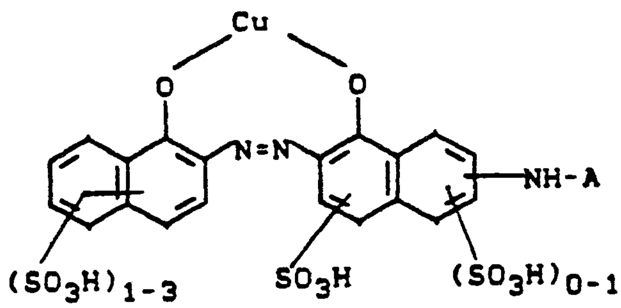

(14)

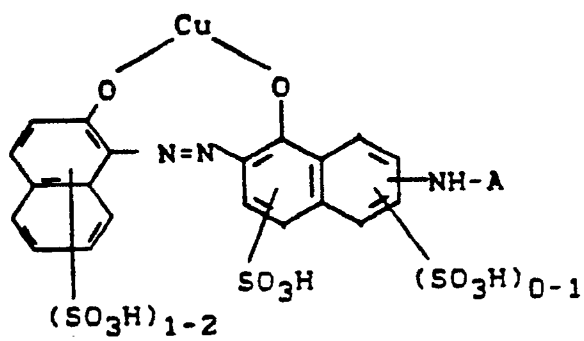

(15)

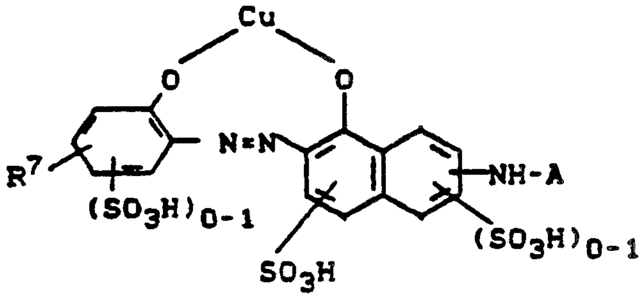

(16)

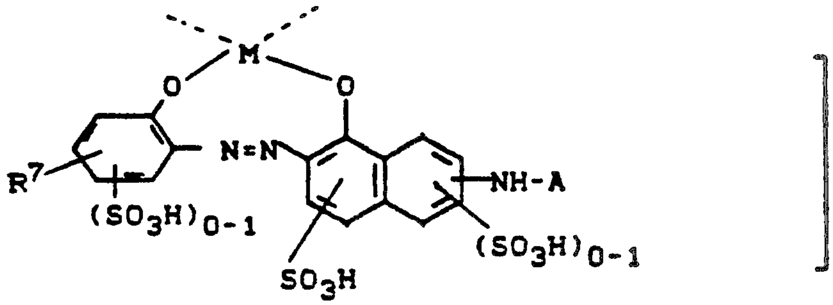

(17)

worin

$R^7$ = H, Halogen, Nitro oder $C_1$-$C_4$-Alkyl und

a) 1:2 Cr- oder Co-Komplexe von 17, die zwei gleiche Farbstoffe (17) oder zwei verschiedene Farbstoffe 17 enthalten, oder

b) 1:2 Cr- oder Co-Komplexe von 17 mit einem beliebigen anderen metallkomplexbildenden Farbstoff

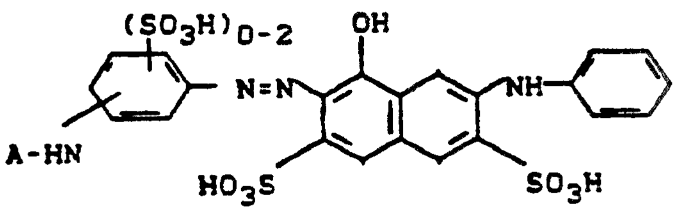

(18)

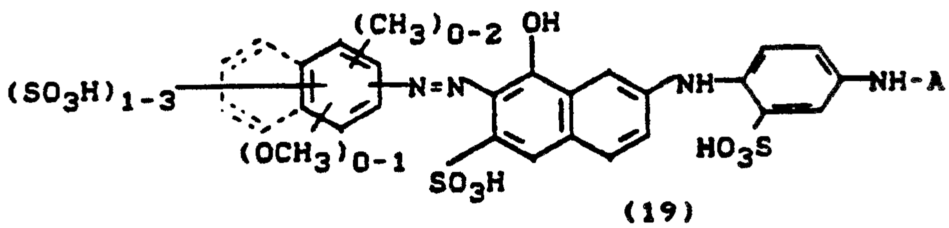

(19)

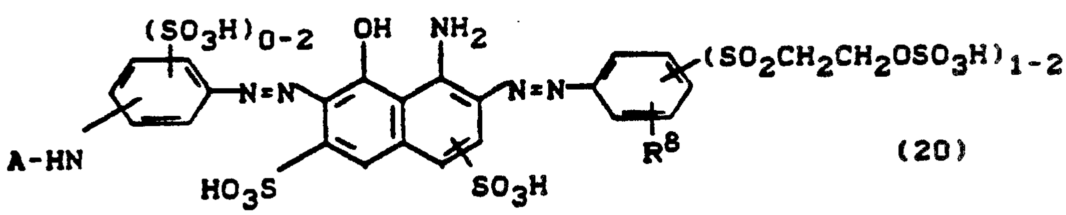

(20)

worin
$R^8$ = H, Cl, Br, Methyl, Methoxy, Carboxy, Sulfo

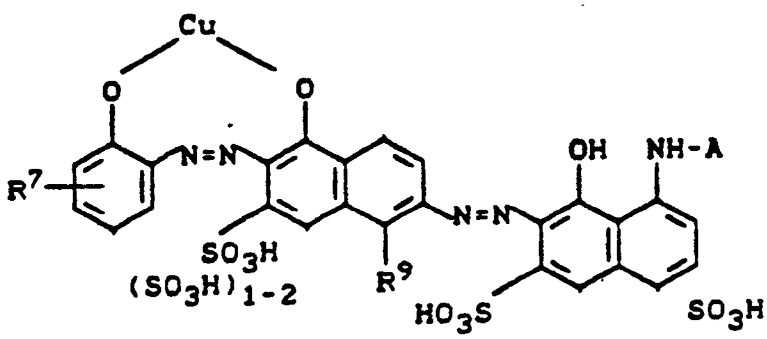

(21)

worin
$R^9$ = H oder $SO_3H$ und $R^7$ die oben angegebene Bedeutung hat

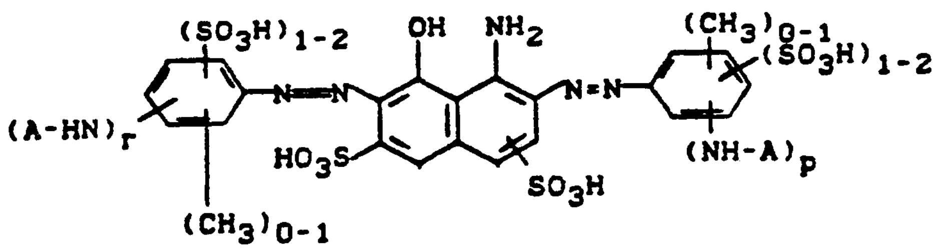

(22)

worin
r bzw. p = 0 oder 1, wobei die Summe
r + p = 1 oder 2

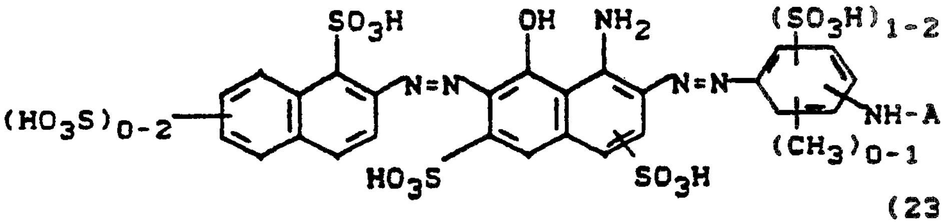

(23)

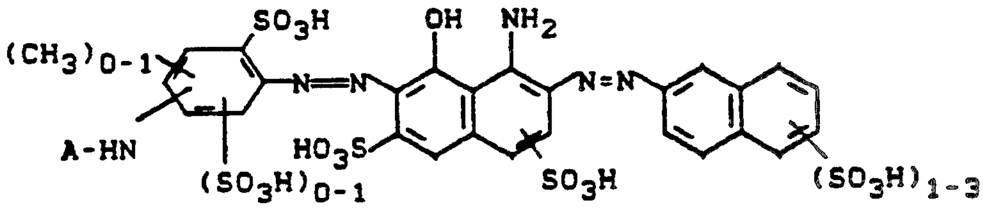

(24)

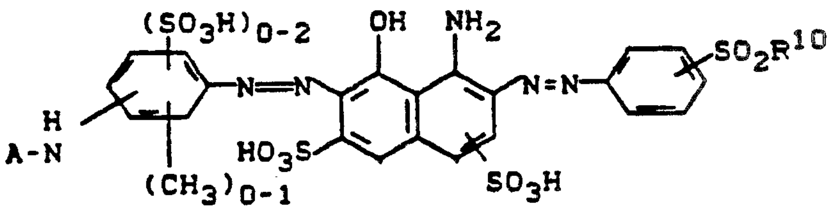

(25)

worin

$R^{10}$ = $NH_2$, $NHCH_3$, $CH_3$, $C_2H_5$, $-CH_2CH_2OH$, $-\underset{CH_3}{CH}CH_2OH$, $-CH_2-\underset{CH_3}{CH}OH$, OH

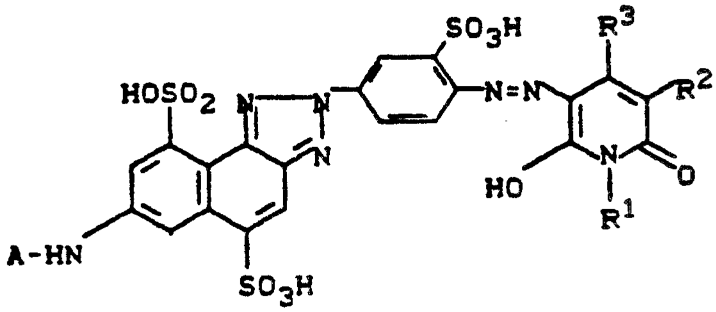

worin $R^1$, $R^2$, $R^3$ die unter Formel (3) und (4) angegebene Bedeutung haben,

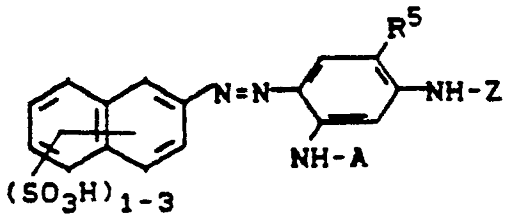

(27)

worin Z = H, $COCH_3$, $COC_6H_5$ oder X und $R^5$ die unter Formel (6) angegebene Bedeutung hat,

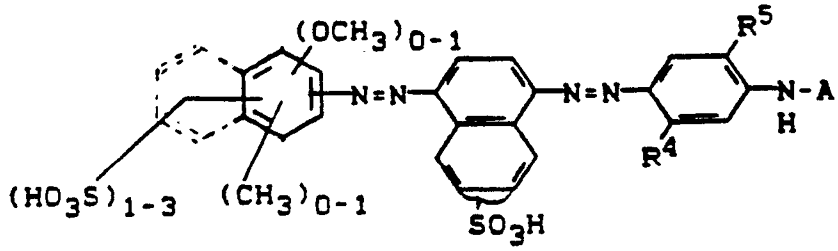

(28)

worin $R^4$ und $R^5$ die unter Formel (6) angegebene Bedeutung hat,

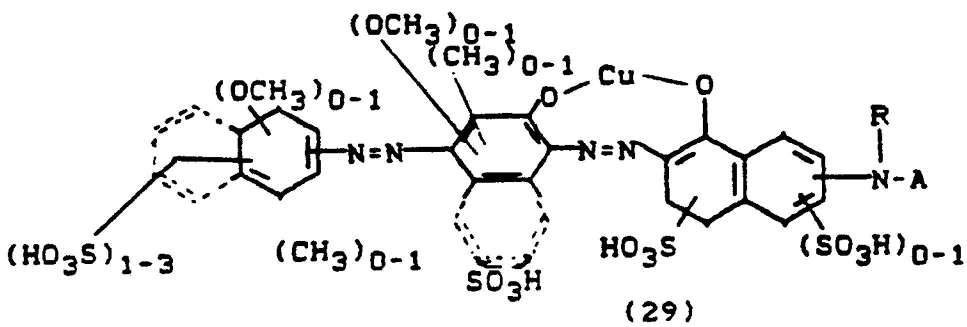

(29)

worin R die unter Formel (1) angegebene Bedeutung hat,

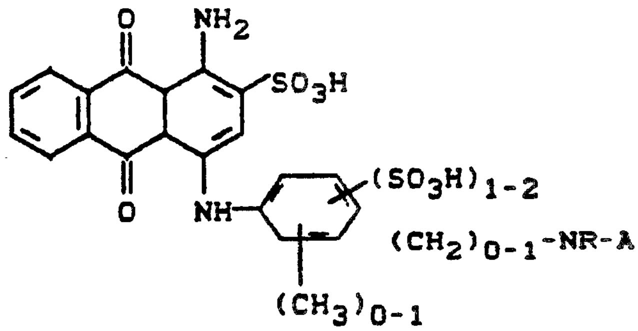

(30)

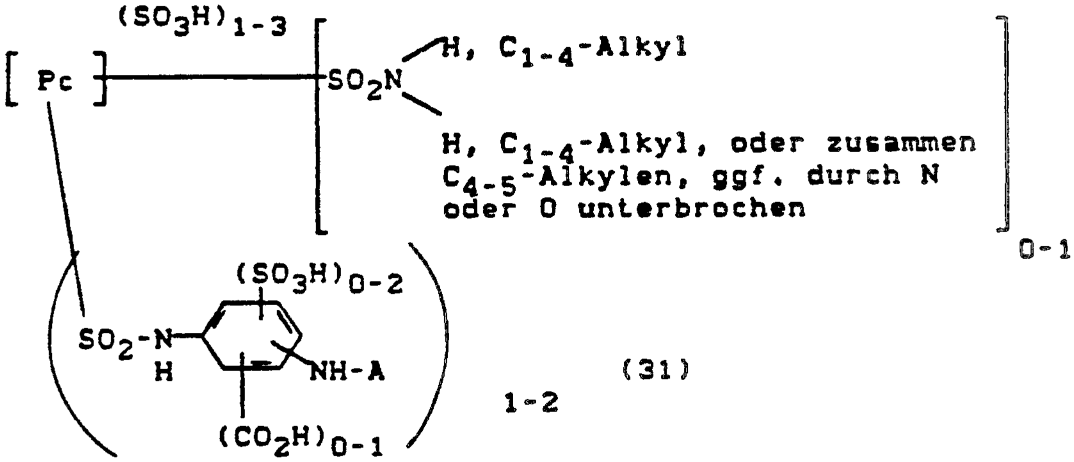

(31)

worin Pc für einen Cu- oder Ni-Phthalocyaninrest steht. Die Gesamtzahl der Substituenten am PC-Gerüst ist dabei 4.

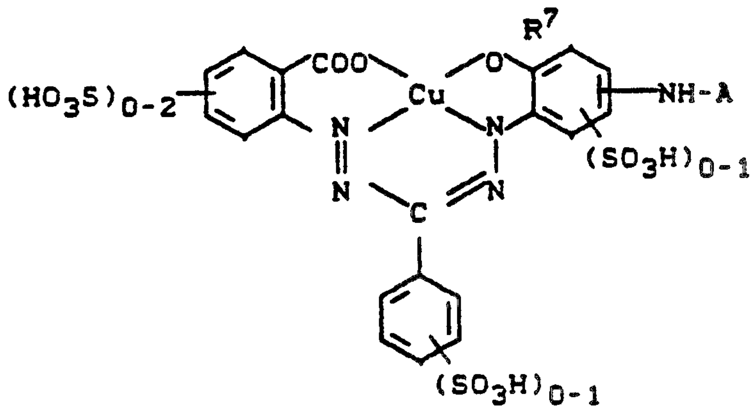

(32)

worin $R^7$ die unter Formel (16) angegebene Bedeutung hat,

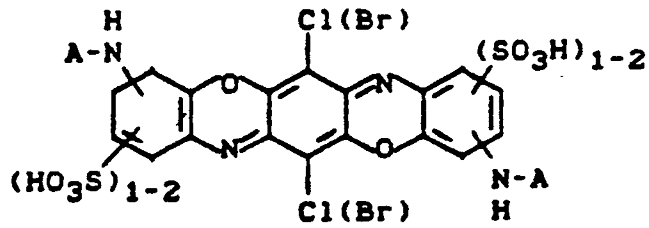

(33)

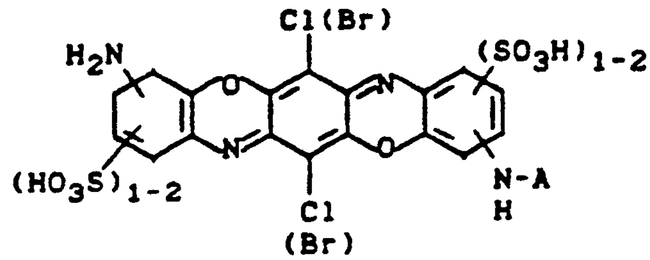

(34)

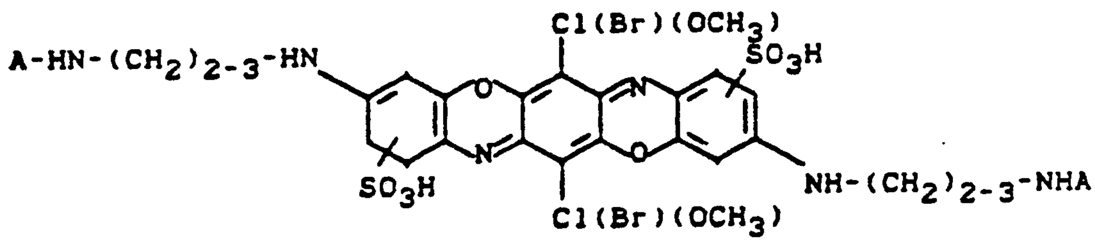

(35)

worin

A = 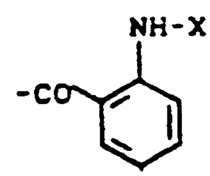

**3.** Farbstoffe des Anspruchs 2 der Formel

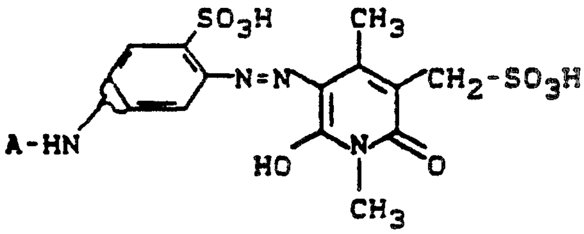

(36)

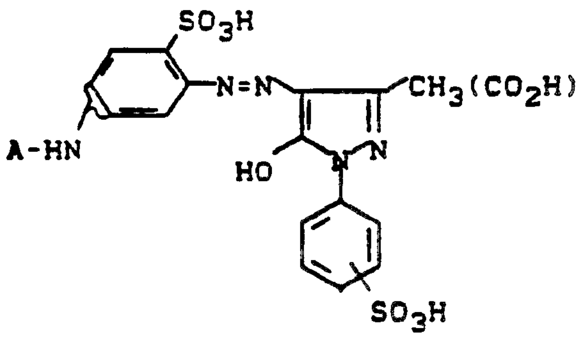

(37)

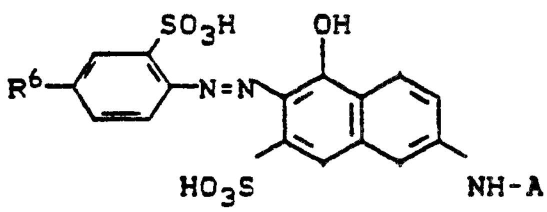

(38)

worin $R^6$ = H, $CH_3$, $OCH_3$, $OC_2H_5$ und $NHCOCH_3$

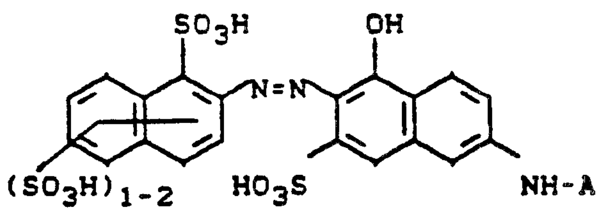

(39)

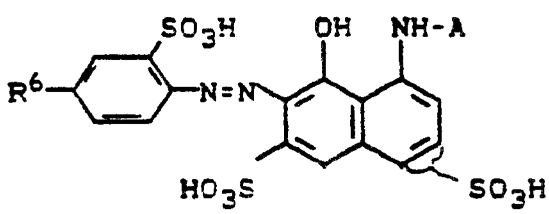

(40)

wobei $R^6$ die unter Formel (38) genannte Bedeutung hat,

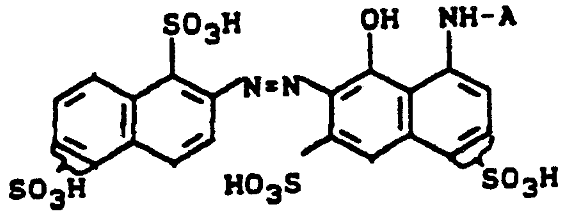

(41)

4. Farbstoffe der Ansprüche 1 bis 3 mit
X = faserreaktiver Fluorpyrimidinyl- oder Fluortriazinylrest.

5. Verwendung der Farbstoffe der Ansprüche 1-4 zum Färben und Bedrucken von natürlichen und synthetischen Materialien, insbesondere hydroxylgruppen-und amidgruppenhaltigen Materialien.

6. Verfahren zur Herstellung von Farbstoffen des Anspruchs 1, dadurch gekennzeichnet, daß man Farbstoffe der Formel

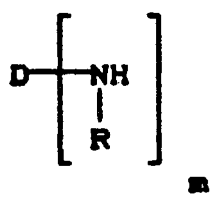

mit m bzw. 2m Äquivalenten eines Anhydrids der Formel

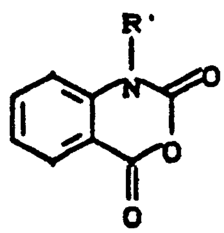

vorzugsweise im pH-Bereich 6-8 umsetzt und gegebenenfalls anschließend mit den Rest X einführenden Acylierungsmitteln umsetzt.

7. Verbindungen der Formeln

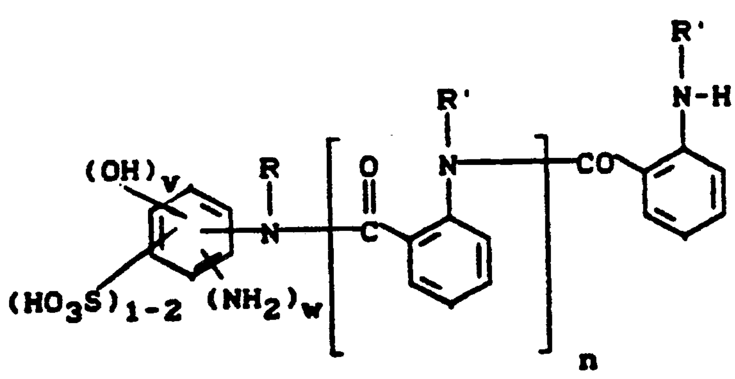

und

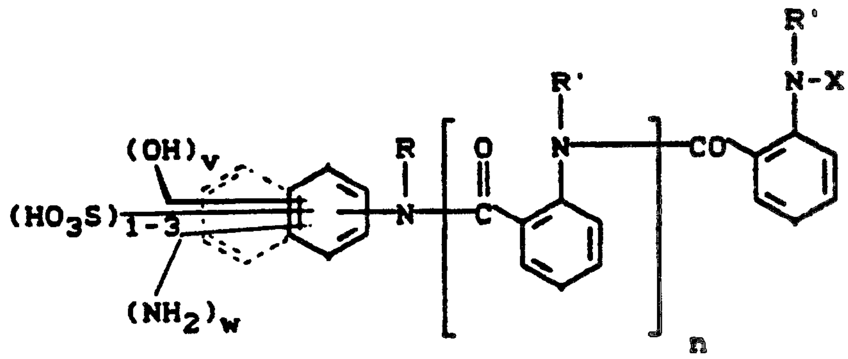

worin

v = w = 0 oder 1, wobei v + w = 1 oder 2 und

R, R', X und n die in Anspruch 1 angegebene Bedeutung haben.

8. Verbindungen des Anspruchs 7 der Formeln

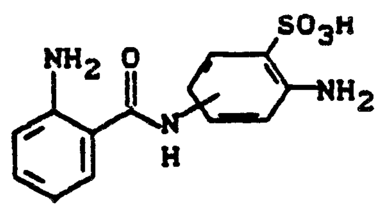

und

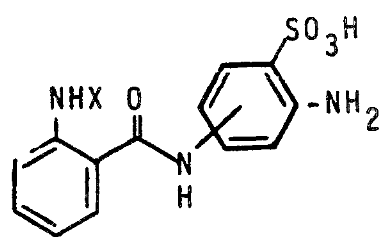

worin X die in Anspruch 7 genannte Bedeutung hat und vorzugsweise für einen faserreaktiven Fluorpyrimidinyl-oder Fluortriazinyl-Rest steht.

9. Verbindungen des Anspruchs 7 der Formel

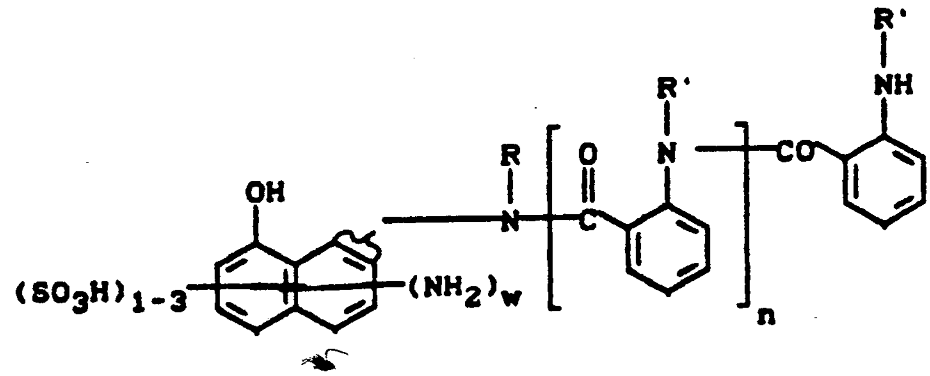

worin R und R' die in Anspruch 7 genannte Bedeutung haben.

10. Verbindungen des Anspruchs 7 der Formel

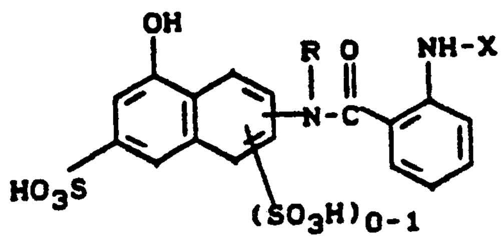

worin X vorzugsweise = faserreaktiver Fluorpyrimidinyl-oder Fluortriazinyl-Rest.

## Claims

1. Dyestuffs of the formula

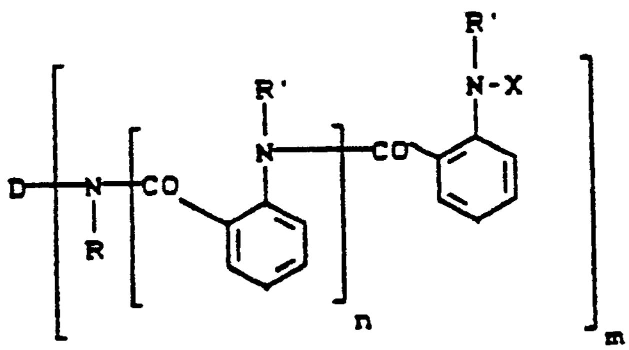

(1)

wherein

D = radical of an organic dyestuff, in particular of a dyestuff of the monoazo, polyazo, metal complex azo, anthraquinone, phthalocyanine, formazan, azomethine, dioxazine, phenazine, xanthene, thioxanthone, naphthoquinone, stilbene or triphenylmethane series,

R = H or $C_1$-$C_4$-alkyl,

R' = H or $C_1$-$C_4$-alkyl, in particular H or methyl,

m = 1 or 2 and

n = 0 or 1,

X = non-fibre-reactive acyl radical or fibre-reactive radical.

**2.** Dyestuffs of Claim 1 of the formulae

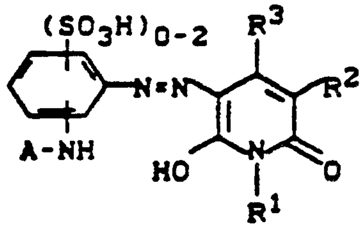

(3)

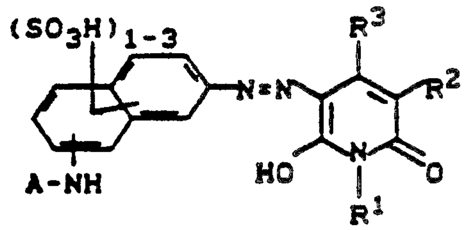

(4)

wherein
$R^1$ = H, $C_1$-$C_4$-alkyl, aryl, ß-sulphoethyl,
$R^2$ = H, Cl, $So_3H$, $CONH_2$, $CH_2SO_3H$, $CH_3$ and $SO_2CH_3$,
$R^3$ = H, $CH_3$, $CH_2$-$SO_3H$, $CO_2H$

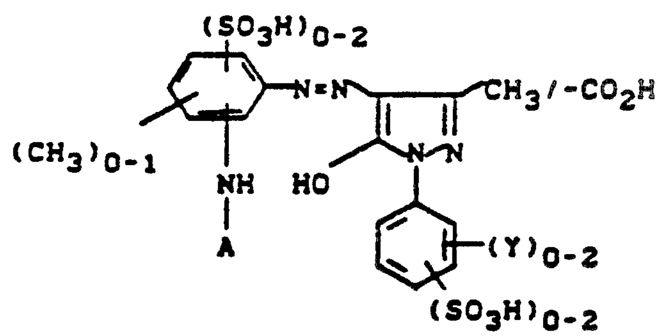

(5)

wherein
Y = chlorine or methyl

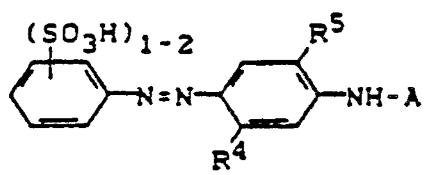

(6)

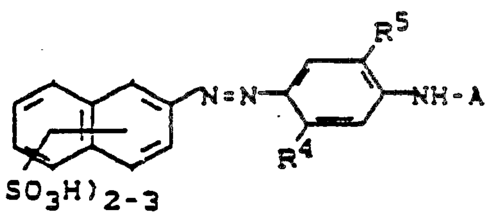

(7)

wherein
$R^4$ = H, methyl, ethyl, methoxy, ethoxy, acetyl amino, ureido, phenylcarbonylamino, mesylamino, halogen,
$R^5$ = H, methyl, ethyl, methoxy, ethoxy, sulpho

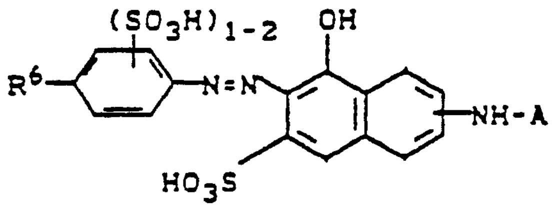

(8)

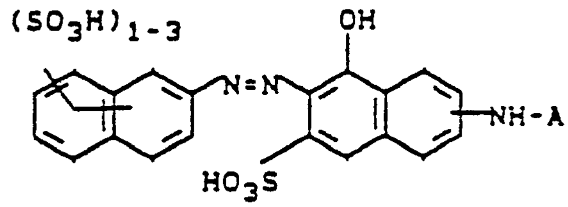

(9)

wherein

$R^6$ = H, methyl, ethyl, methoxy, ethoxy, chlorine or acetylamino,

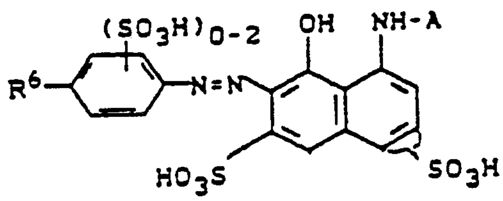

(10)

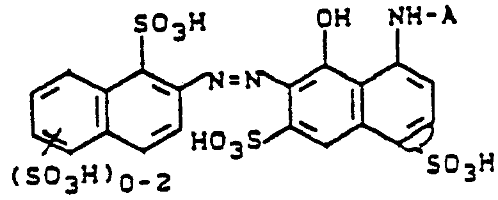

(11)

wherein

$R^6$ = has the abovementioned meaning,

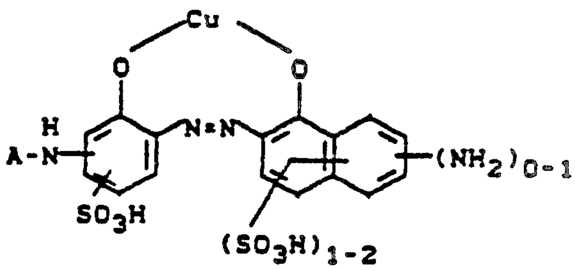

(12)

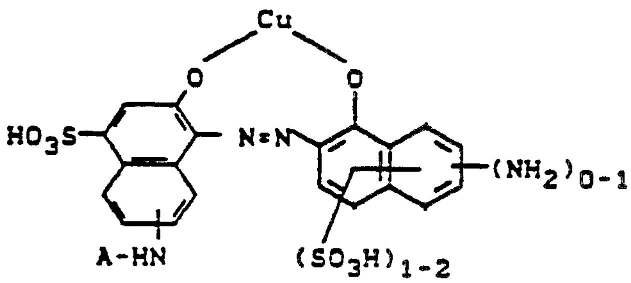

(13)

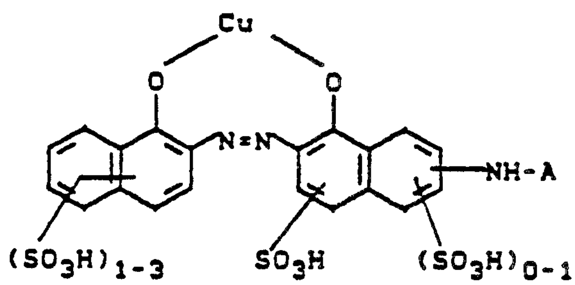

(14)

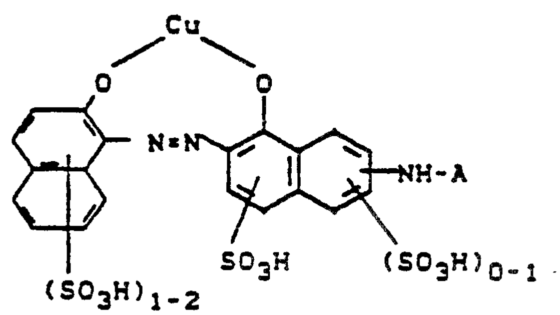

(15)

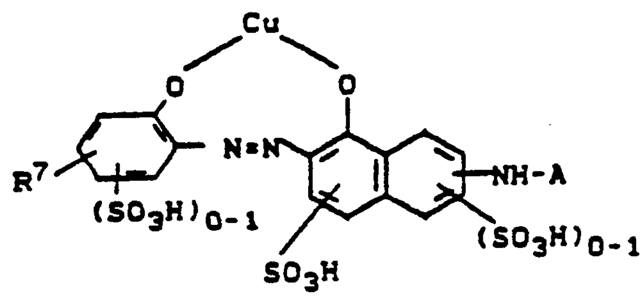

(16)

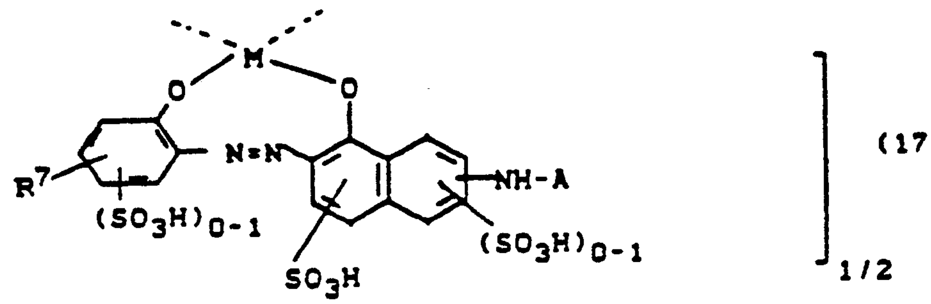

(17)

wherein

$R^7$ = H, halogen, nitro or $C_1$-$C_4$-alkyl and

a) 1:2 Cr or Co complexes of 17 which contain two identical dyestuffs (17) or two different dyestuffs 17, or

b) 1:2 Cr or Co complexes of 17 with any other desired metal-complexing dyestuff

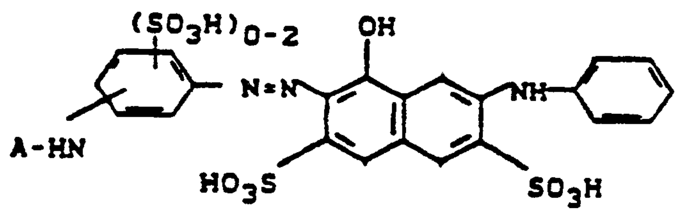

(18)

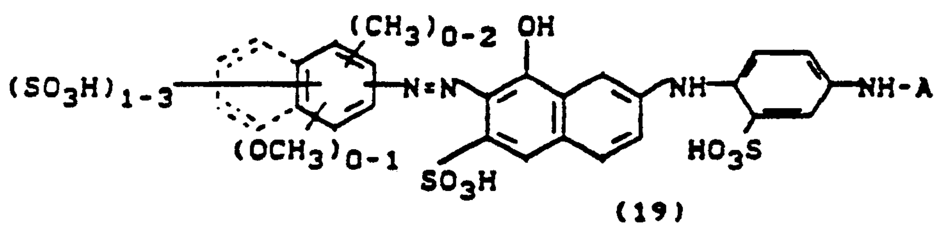

(19)

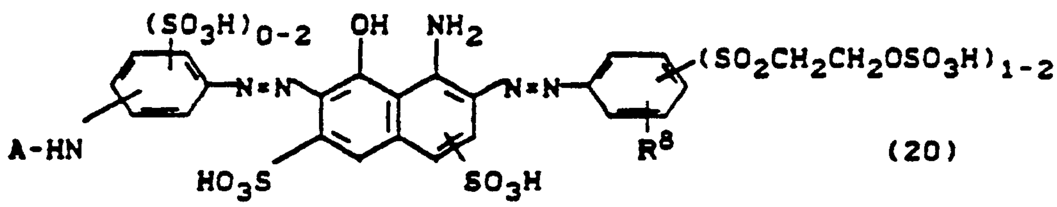

(20)

wherein

$R^8$ = H, Cl, Br, methyl, methoxy, carboxyl, sulpho

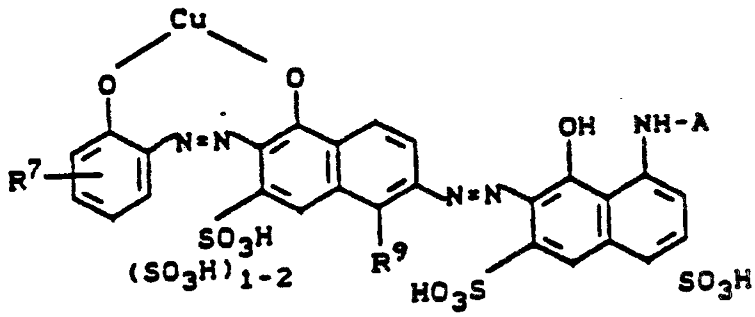

(21)

wherein

$R^9$ = H or $SO_3H$ and

$R^7$ has the abovementioned meaning

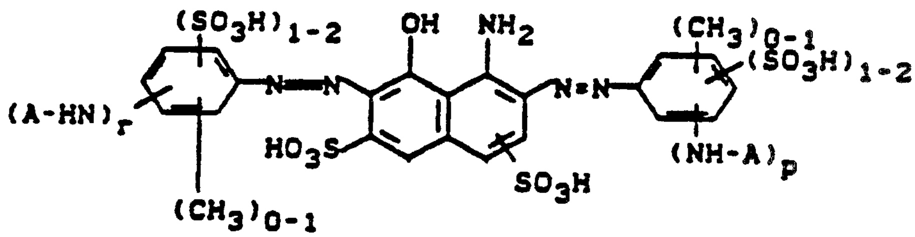

(22)

wherein

r and p = 0 or 1, the sum r + p = 1 or 2

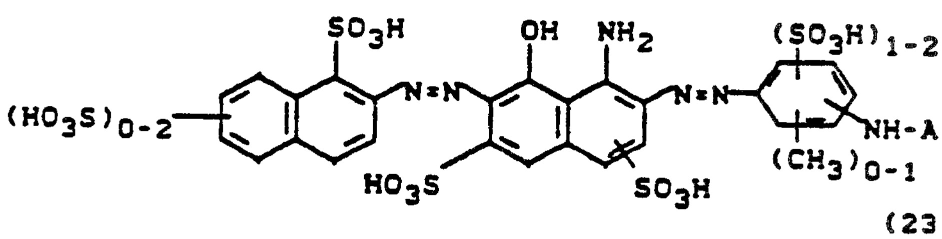

(23)

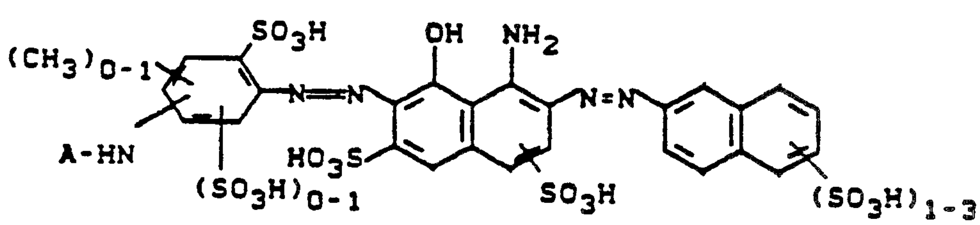

(24)

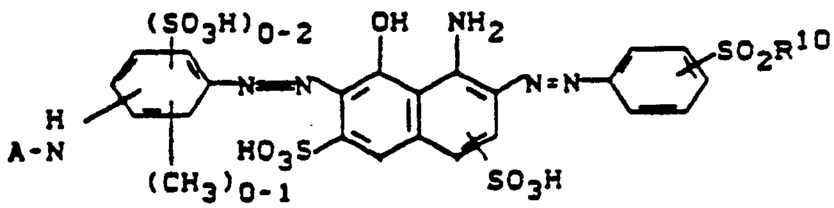

(25)

wherein

$R^{10}$ = $NH_2$, $NHCH_3$, $CH_3$, $C_2H_5$, $-CH_2CH_2OH$,

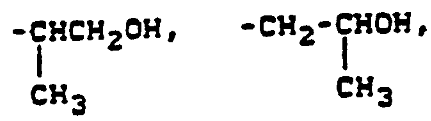

OH

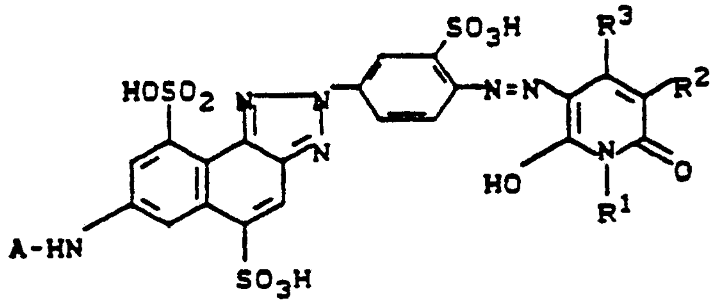

wherein

$R^1$, $R^2$ and $R^3$ have the meaning mentioned under formula (3) and (4),

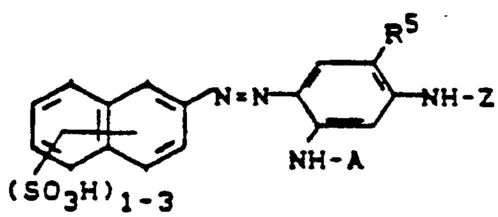

(27)

wherein

Z = H, $COCH_3$, $COC_6H_5$ or X and

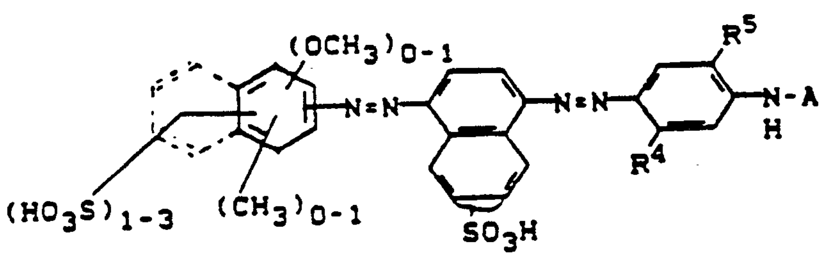

(28)

$R^5$ has the meaning mentioned under formula (6), wherein $R^4$ and $R^5$ have the meaning mentioned under formula (6),

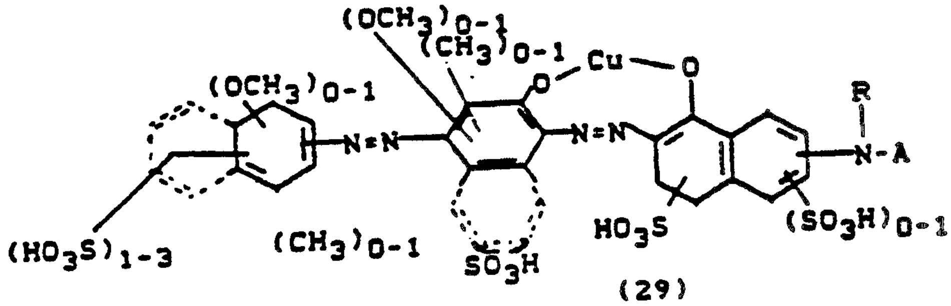

(29)

wherein

R has the meaning mentioned under formula (1),

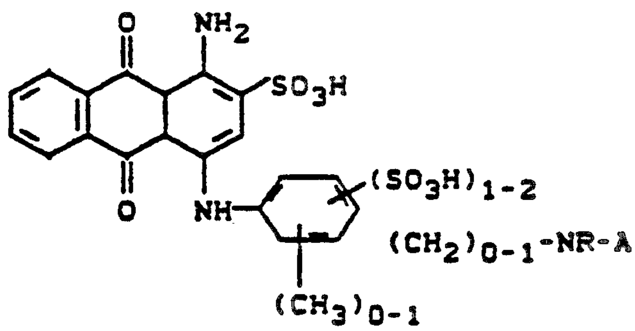

(30)

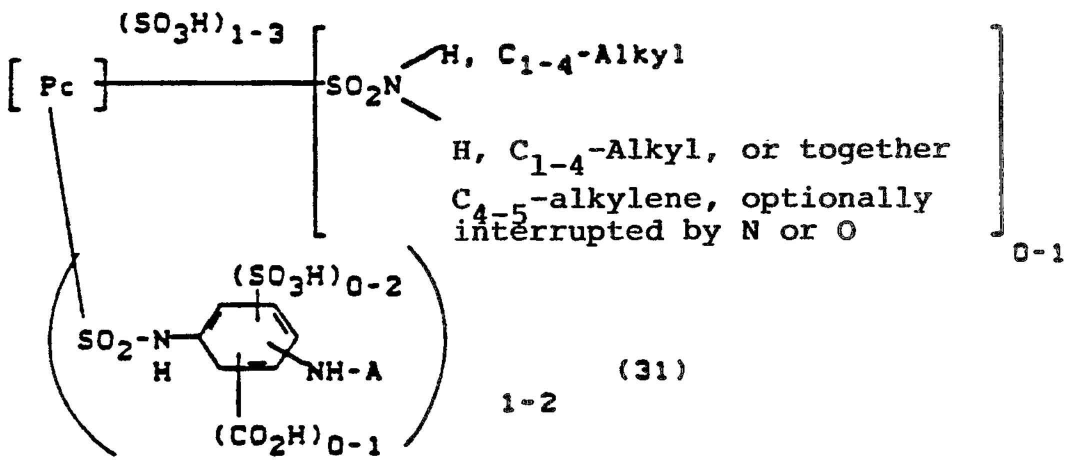

(31)

wherein

Pc represents a Cu or Ni phthalocyanine radical. The total number of substituents on the PC skeleton is 4.

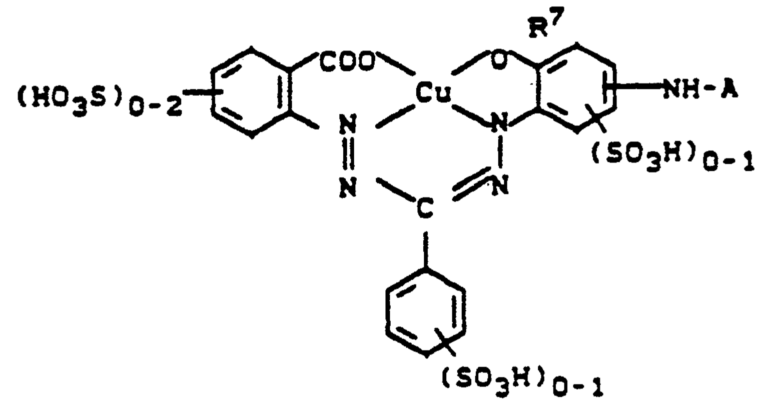

(32)

wherein

$R^7$ has the meaning mentioned under formula (16),

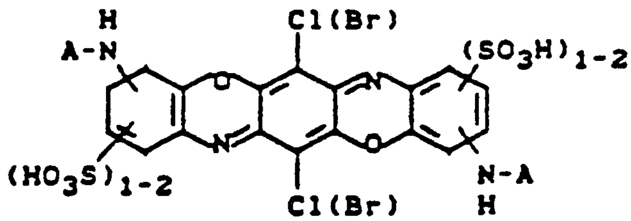

(33)

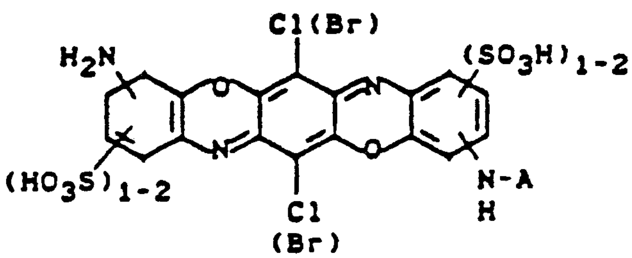

(34)

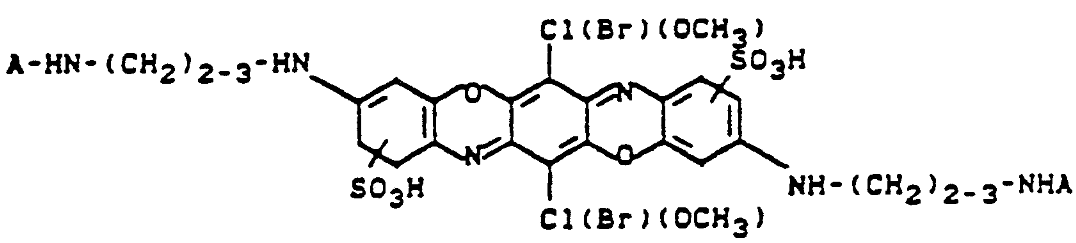

(35)

wherein

A = 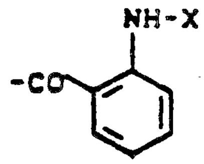

3. Dyestuffs of Claim 2 of the formula

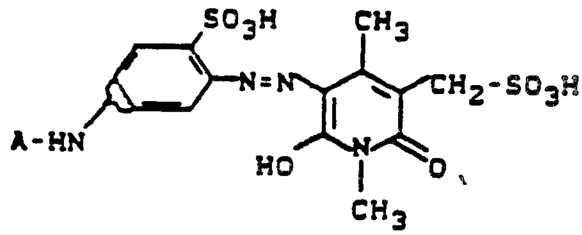

(36)

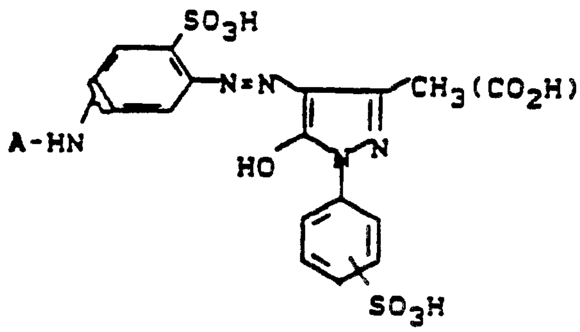

(37)

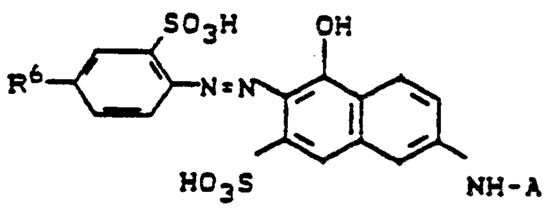

(38)

wherein

$R^6$ = H, $CH_3$, $OCH_3$, $OC_2H_5$ and $NHCOCH_3$

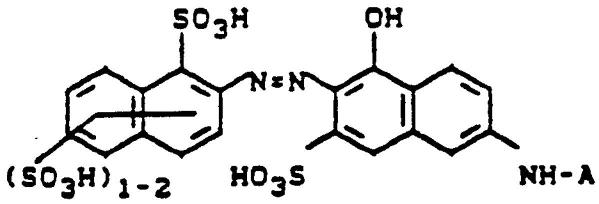 (39)

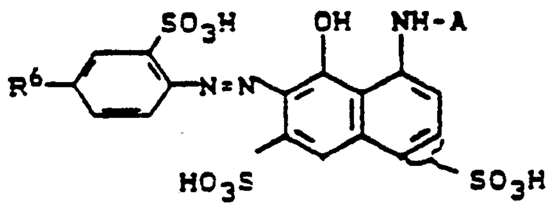 (40)

wherein

$R^6$ has the meaning mentioned under formula (38),

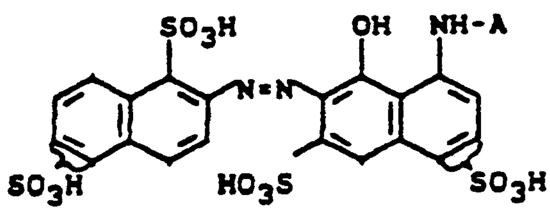 (41)

4. Dyestuffs of Claims 1 to 3 where X = fibre-reactive fluoropyrimidinyl or fluorotriazinyl radical.

5. Use of the dyestuffs of Claims 1 - 4 for dyeing and printing natural and synthetic materials, in particular hydroxyl group- and amide group-containing materials.

6. Process for preparing dyestuffs of Claim 1, characterised in that dyestuffs of the formula

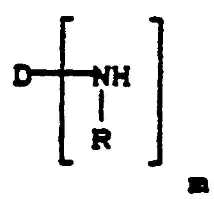

are reacted, preferably within the pH range 6 - 8, with m or 2m equivalents of an anhydride of the formula

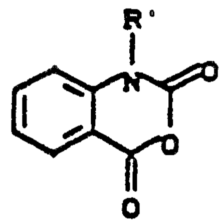

and optionally subsequently reacted with acylating agents introducing the radical X.

**7.** Compounds of the formulae

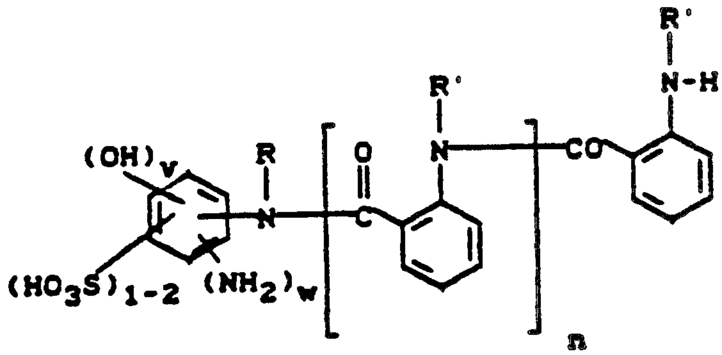

and

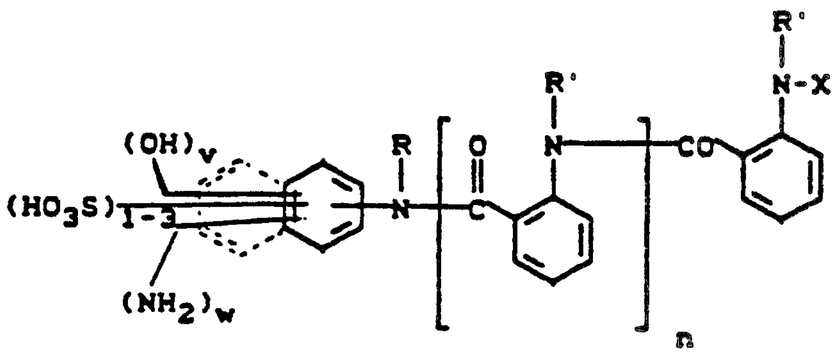

wherein

v = w = 0 or 1, where v + w = 1 or 2 and R, R', X and n have the meanings mentioned in Claim 1.

**8.** Compounds of Claim 7 of the formulae

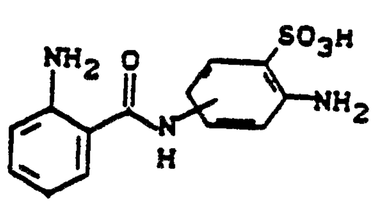

and

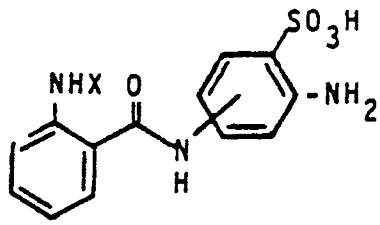

wherein
X has the meaning mentioned in Claim 7 and preferably represents a fibre-reactive fluoropyrimidinyl or fluorotriazinyl radical.

**9.** Compounds of Claim 7 of the formula

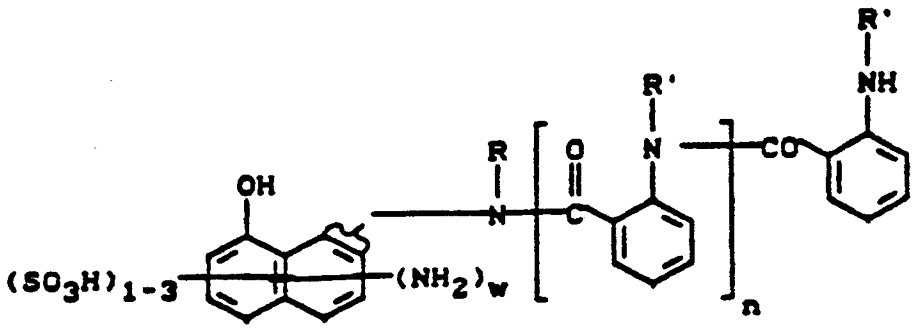

wherein
R and R' have the meaning mentioned in Claim 7.

**10.** Compounds of Claim 7 of the formula

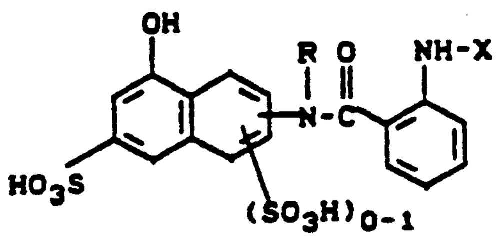

wherein
X preferably = fibre-reactive fluoropyrimidinyl or fluorotriazinyl radical.

## Revendications

**1.** Colorants de formule

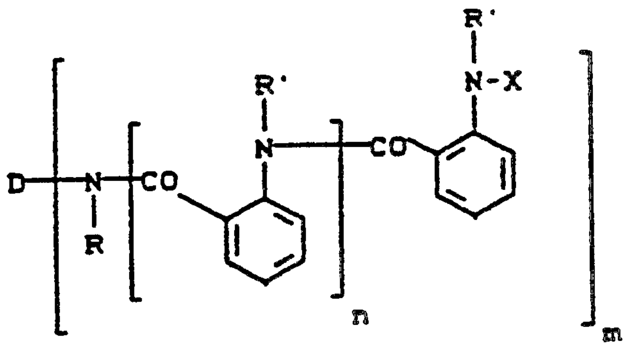

(1)

dans laquelle

D est un reste d'un colorant organique, notamment d'un colorant de la série monoazoïque ou polyazoïque, azoïque complexé avec un métal, de la série de l'anthraquinone, de la phtalocyanine, du formazane, de l'azométhine, de la dioxazine, de la phénazine, du xanthène, de la thioxanthone, de la naphtoquinone, du stilbène ou du triphénylméthane,

R représente H ou un groupe alkyle en $C_1$ à $C_4$,

R' représente H ou un groupe alkyle en $C_1$ à $C_4$, notamment H ou le groupe méthyle,

m a la valeur 1 ou 2 et

n a la valeur 0 ou 1

X est un reste acyle non réactif envers la fibre ou un reste réactif envers la fibre.

2. Colorants suivant la revendication 1, de formules

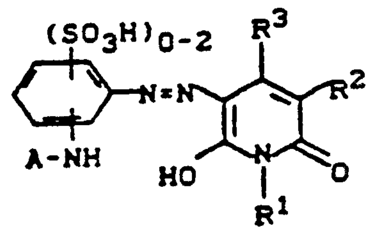

(3)

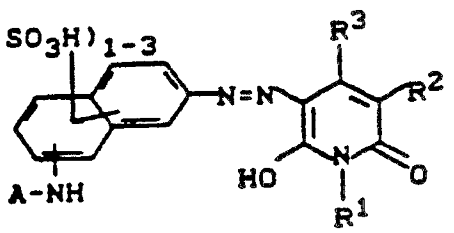

(4)

dans lesquelles

$R^1$ représente H, un groupe alkyle en $C_1$ à $C_4$, aryle, ß-sulfoéthyle,

$R^2$ représente H, Cl, un groupe $SO_3H$, $CONH_2$, $CH_2SO_3H$, $CH_3$ et $SO_2CH_3$,

$R^3$ représente H, un groupe $CH_3$, $CH_2$-$SO_3H$, $CO_2H$ de formule

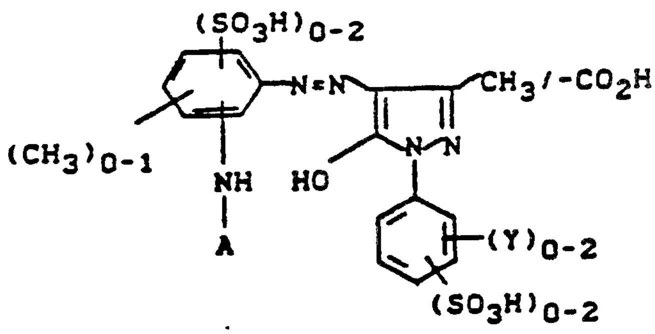

(5)

dans laquelle Y représente le chlore ou le groupe méthyle de formules

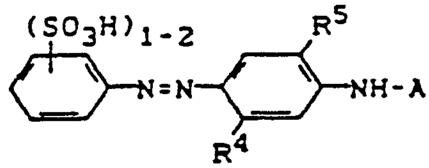

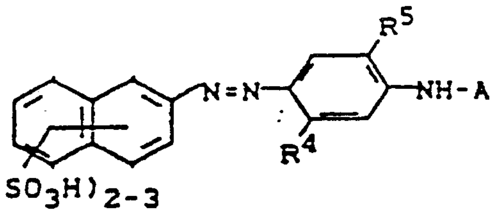

(6) (7)

dans lesquelles
$R^4$ représente H, un groupe méthyle, éthyle, méthoxy, éthoxy, acétylamino, uréido, phénylcarbonylamino, mésylamino, un halogène,
$R^5$ représente H, un groupe méthyle, éthyle, méthoxy, éthoxy, sulfo,
de formules

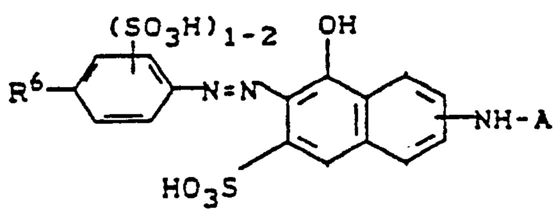

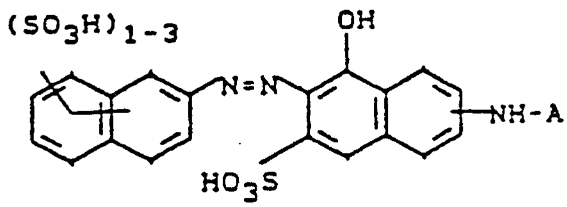

(8) (9)

dans lesquelles
$R^6$ représente H, un groupe méthyle, éthyle, méthoxy, éthoxy, le chlore ou un groupe acétylamino,
de formules

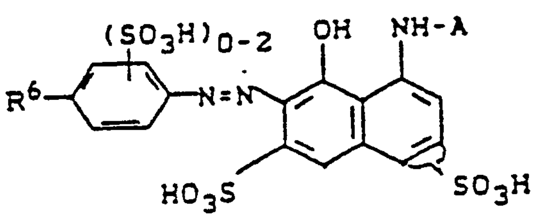

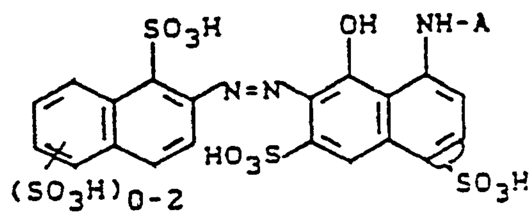

(10) (11)

dans lesquelles
$R^6$ a la définition indiquée ci-dessus,
de formules

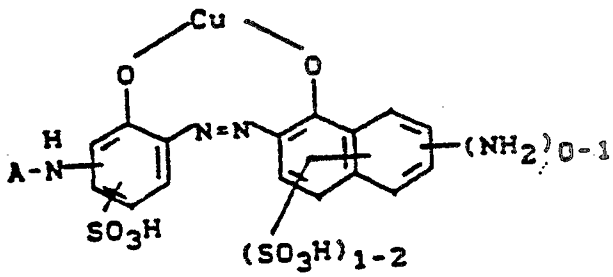

(12)

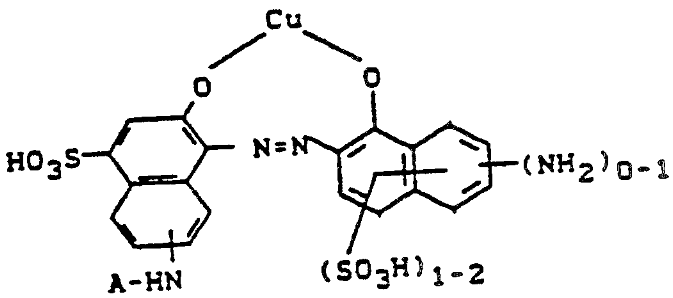

(13)

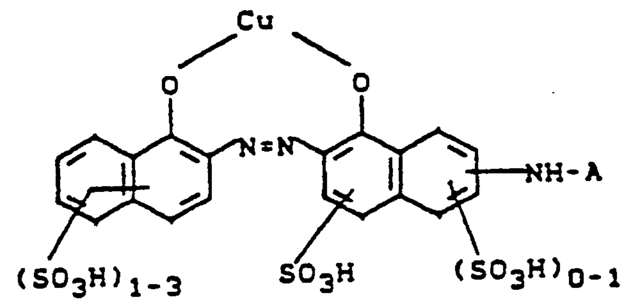

(14)

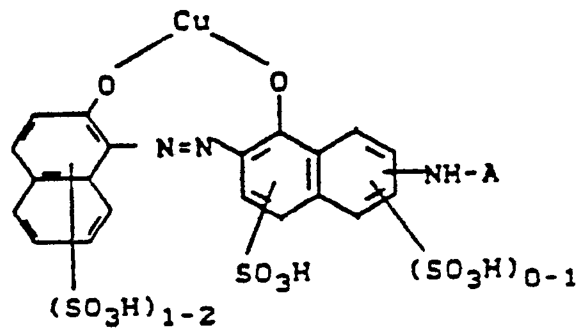

(15)

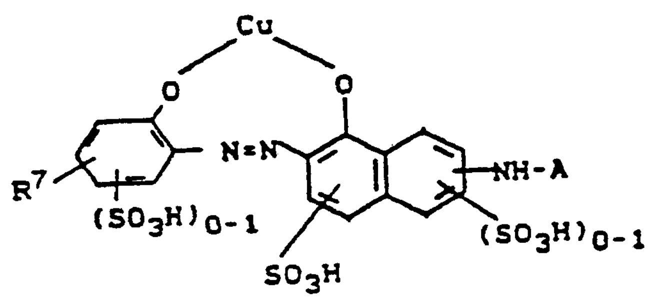

(16)

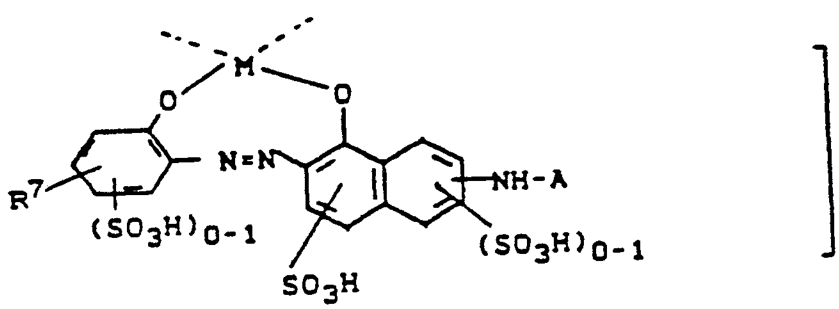

(17)

dans lesquelles

$R^7$ représente H, un halogène, un groupe nitro ou alkyle en $C_1$ à $C_4$, et

a) des complexes de chrome ou de cobalt à 1:2 du composé 17, qui contiennent deux colorants (17) identiques ou deux colorants (17) différents, ou bien

b) des complexes de Cr ou de Co à 1:2 du composé 17 avec un autre colorant quelconque formant un complexe métallique,

de formule

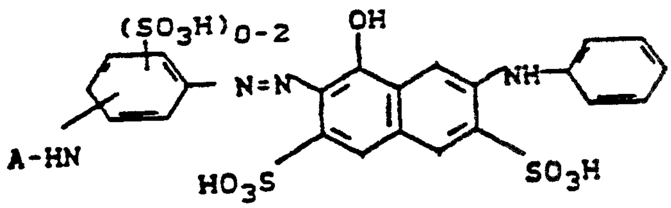

(18)

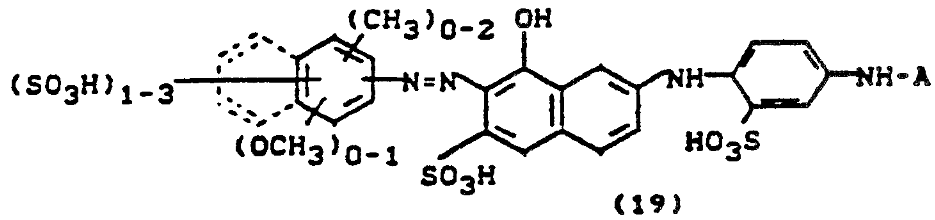

(19)

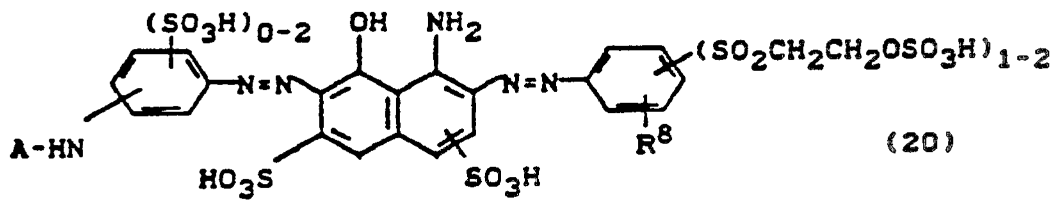

(20)

dans lesquelles
$R^8$ représente H, Cl, Br, un groupe méthyle, méthoxy, carboxy, sulfo
de formule

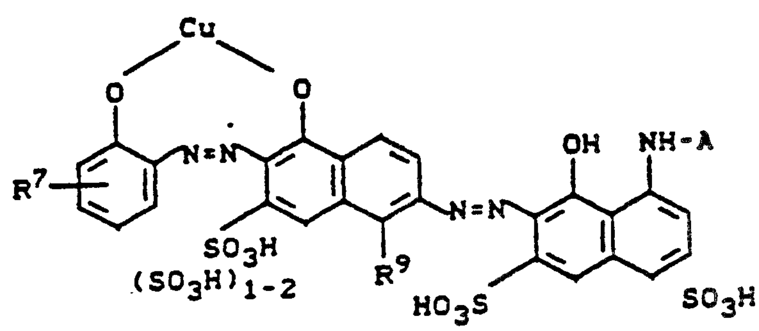

(21)

dans laquelle
$R^9$ représente H ou un groupe $SO_3H$ et $R^7$ a la définition indiquée ci-dessus
de formule

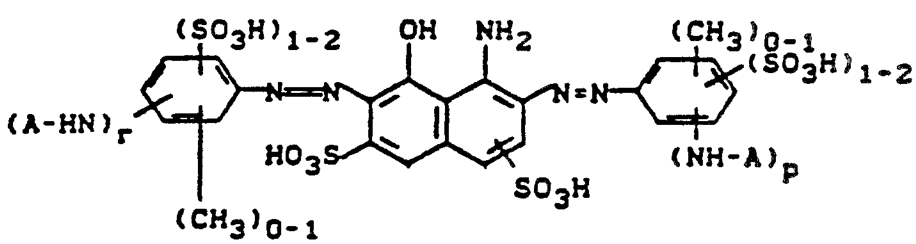

(22)

dans laquelle
r et p ont respectivement la valeur 0 ou 1, la somme r+p étant égale à 1 ou 2
de formules

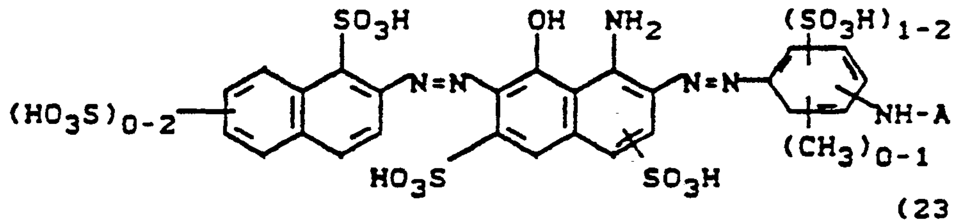

(23)

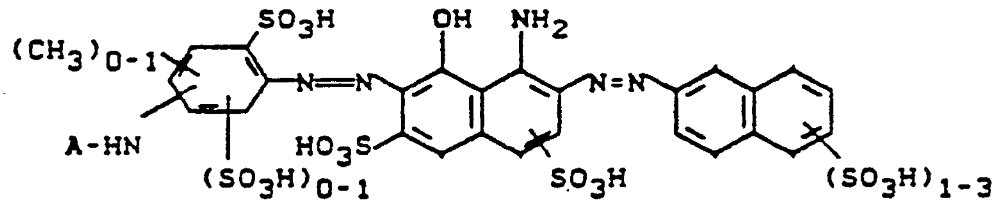

(24)

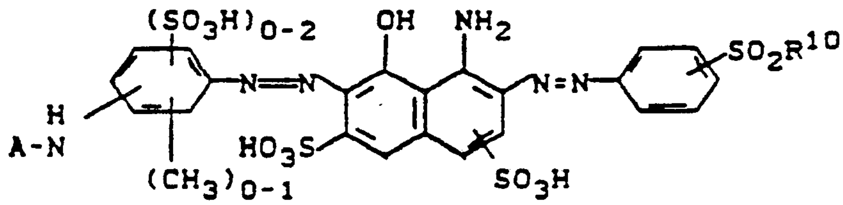

(25)

dans lesquelles

$R^{10}$ représente

$NH_2$, $NHCH_3$, $CH_3$, $C_2H_5$, $-CH_2CH_2OH$,

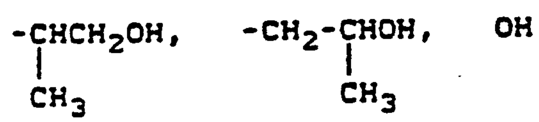

de formule

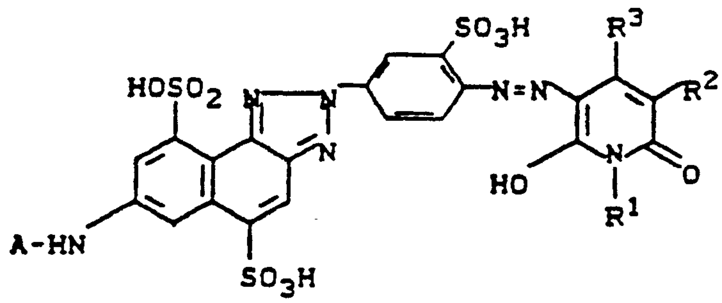

dans laquelle $R^1$, $R^2$, $R^3$ ont la définition indiquée pour les formules (3) et (4)

de formule

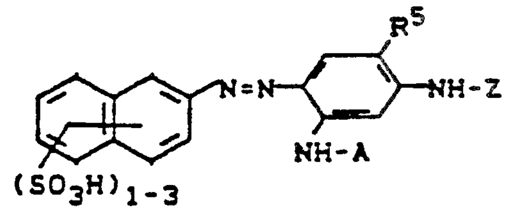

(27)

dans laquelle Z représente H, un groupe $COCH_3$, $COC_6H_5$ ou bien X et $R^5$ ont la définition indiquée pour la formule (6),
de formule

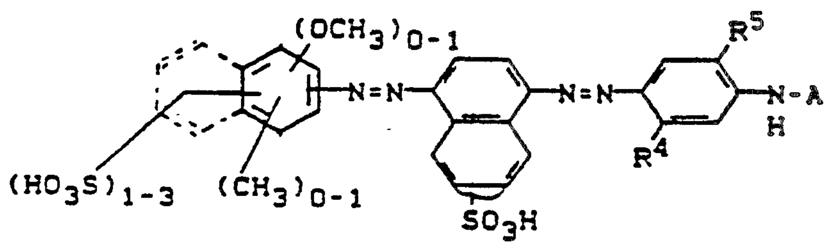

(28)

dans laquelle $R^4$ et $R^5$ ont la définition indiquée pour la formule (6)
de formule

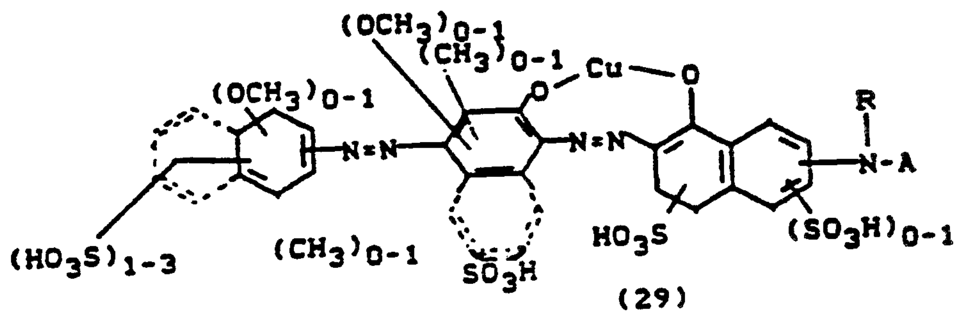

(29)

dans laquelle R a la définition indiquée pour la formule (1),
de formule

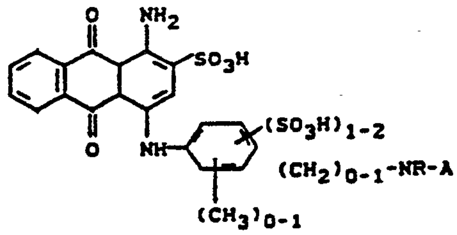

(30)

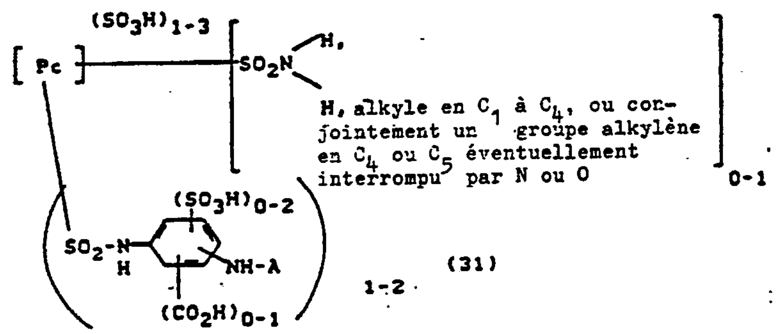


(31)

dans laquelle Pc est un reste de phtalocyanine de cuivre ou de nickel, le nombre total des substituants du squelette Pc étant alors égal à 4,
de formule

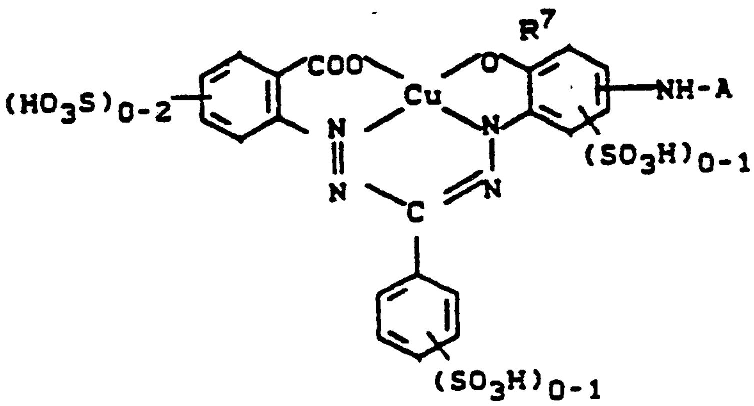

(32)

dans laquelle $R^7$ a la définition indiquée pour la formule (16),
de formules

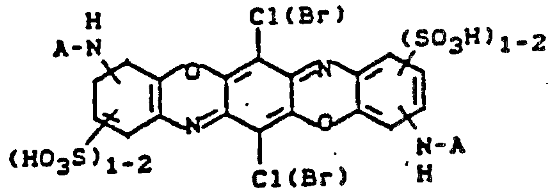

(33)

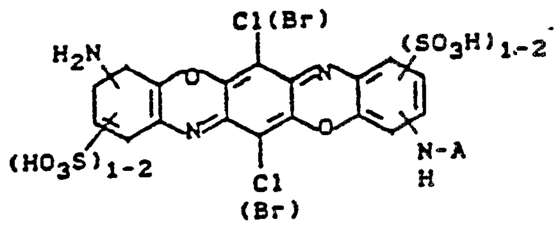

(34)

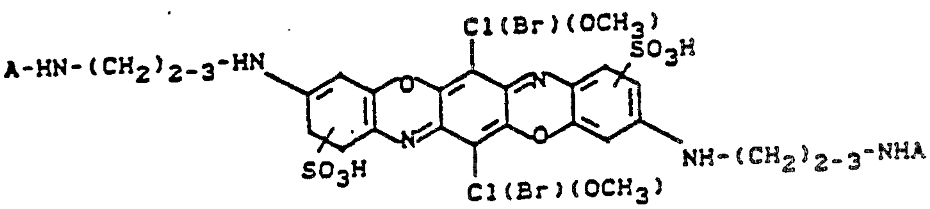

(35)

dans lesquelles
A représente

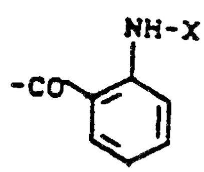

3. Colorants suivant la revendication 2, de formule

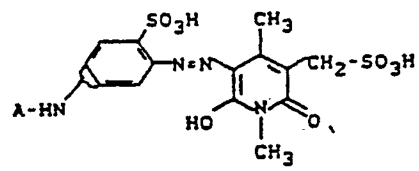
(36)

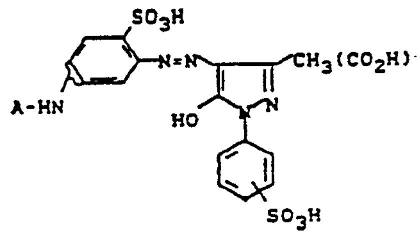
(37)

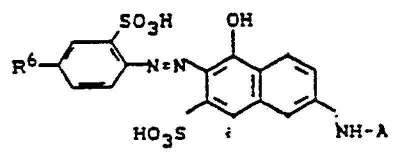
(38)

dans laquelle $R^6$ représente HM, $CH_3$, $OCH_3$, $OC_2H_5$ et $NHCOCH_3$ de formules

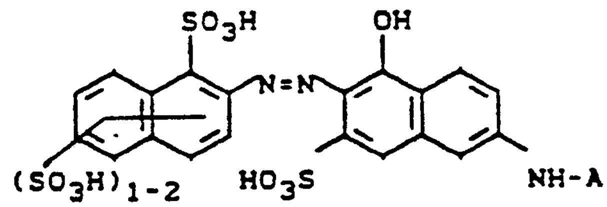
(39)

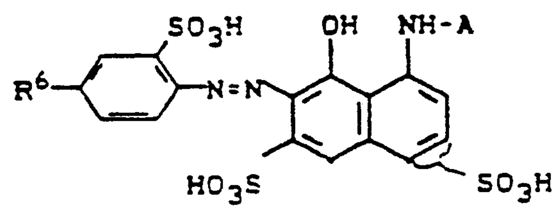
(40)

dans lesquelles $R^6$ a la définition indiquée pour la formule (38),
de formule

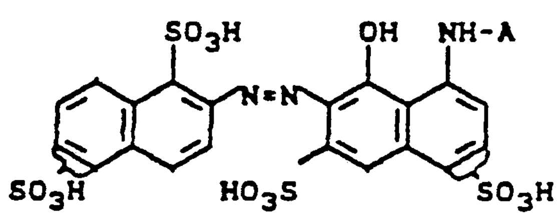
(41)

4. Colorants suivant les revendications 1 à 3, dans lesquels X est un reste fluoropyrimidinyle ou fluorotriazinyle réactif envers la fibre.

5. Utilisation des colorants suivant les revendications 1 à 4 pour la teinture et l'impression de matières naturelles et synthétiques, notamment de matières portant des groupes hydroxyle et des groupes

amido.

6. Procédé de production de colorants suivant la revendication 1, caractérisé en ce qu'on fait réagir des colorants de formule

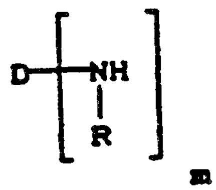

avec m ou 2m équivalents d'un anhydride de formule

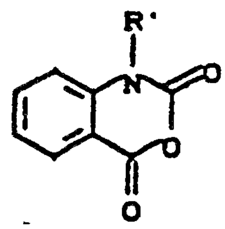

de préférence dans la plage de pH de 6 à 8, puis on fait réagir éventuellement le produit avec des agents acylants introduisant le reste X.

7. Composés de formules

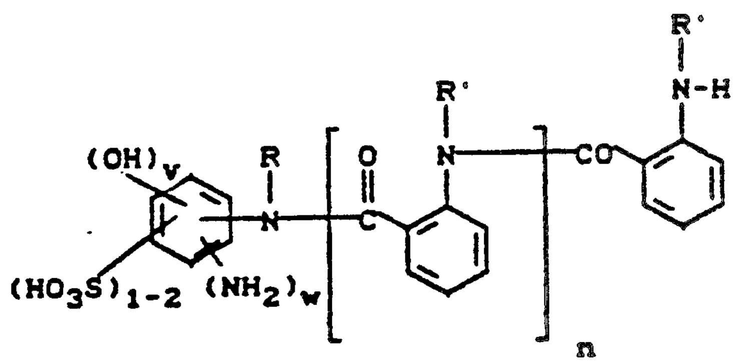

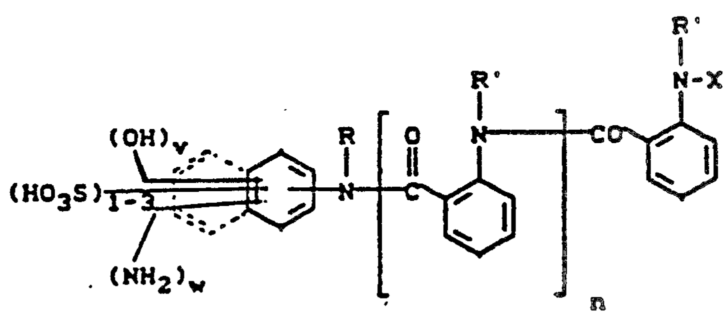

dans lesquelles
v = w = 0 ou 1, la somme v + w étant égale à 1 ou 2 et R, R', X et n ont la définition indiquée dans la revendication 1.

8. Composés suivant la revendication 7, de formules

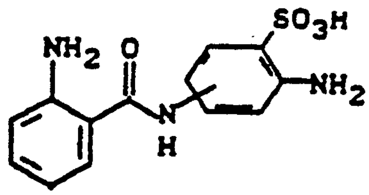

et

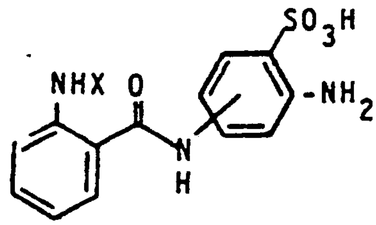

dans lesquelles X a la définition indiquée dans la revendication 7 et représente de préférence un reste fluoropyrimidinyle ou fluorotriazinyle réactif envers la fibre.

9. Composés suivant la revendication 7, de formule

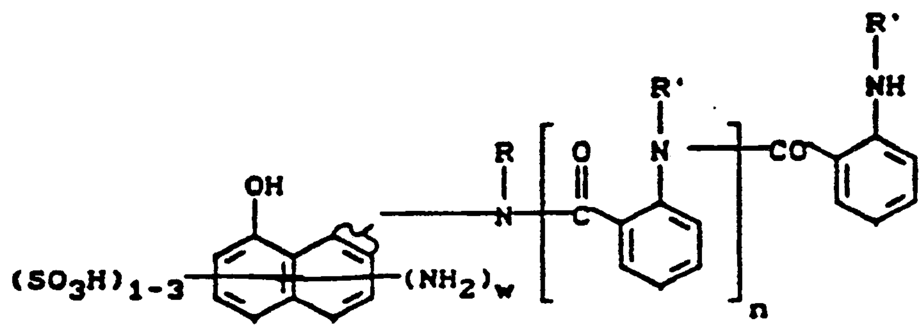

dans laquelle R et R' ont la définition indiquée dans la revendication 7.

10. Composés suivant la revendication 7, de formule

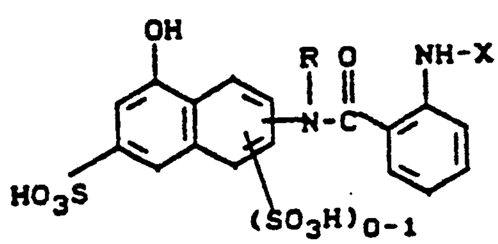

dans laquelle X représente de préférence un reste fluoropyrimidinyle ou fluorotriazinyle réactif envers la fibre.